(19) Europäisches Patentamt
European Patent Office
Office européen des brevets

(11) **EP 1 869 976 A1**

(12) **EUROPÄISCHE PATENTANMELDUNG**

(43) Veröffentlichungstag:
**26.12.2007 Patentblatt 2007/52**

(51) Int Cl.:
***A01N 1/02*** *(2006.01)* ***G01N 1/42*** *(2006.01)*

(21) Anmeldenummer: **06012752.9**

(22) Anmeldetag: **21.06.2006**

(84) Benannte Vertragsstaaten:
**AT BE BG CH CY CZ DE DK EE ES FI FR GB GR HU IE IS IT LI LT LU LV MC NL PL PT RO SE SI SK TR**
Benannte Erstreckungsstaaten:
**AL BA HR MK YU**

(71) Anmelder: **SiRion GmbH**
**80689 München (DE)**

(72) Erfinder:
• **Thirion, Christian**
**81373 München (DE)**
• **Behrend, Lars**
**80689 München (DE)**

(74) Vertreter: **Bohmann, Armin K.**
**Bohmann & Loosen**
**Anwaltssozietät**
**Nymphenburger Strasse 1**
**80335 München (DE)**

(54) **Verfahren zum Einfrieren und Lagern von Zellen**

(57)    Die vorliegende Erfindung bezieht sich auf ein Verfahren zum Einfrieren und Lagern von Zellen in einem Gefäß umfassend die Schritte
a) Einfrieren der Zellen als Zellsuspension auf eine Lagertemperatur und
b) Lagern bei dieser Temperatur;
wobei das Lagern der Zellen unter gasdichtem Abschluss oder in einer inerten Atmosphäre erfolgt,
dadurch gekennzeichnet, dass die Zellen rekombinante Zellen sind.

**EP 1 869 976 A1**

**Beschreibung**

Die vorliegende Erfindung betrifft ein Verfahren zum Einfrieren und Lagern von Zellen in einem Gefäß, durch das Verfahren herstellbare eingefrorene Zellen, Zellbibliotheken umfassend derartige eingefrorene Zellen sowie Verwendungen derartiger eingefrorener Zellen.

Zellen können aus dem Geweberverband herausgelöst werden und auf Zellkulturgefäßen oder in Suspensionen kultiviert werden. Solche Zellkulturen sind in der Biologie ein wichtiges Untersuchungsobjekt.

Eine wichtige Rolle für die Aufklärung von Funktionen von Genen spielen dabei tierische und menschliche Zellen, bei denen einzelne Gene ausgeschaltet wurden. In solchen Zellen kann die Funktion der betreffenden Gene analysiert werden. Für das Ausschalten von einzelnen Genen sind inzwischen, unter anderem, kurze, doppelsträngige Ribonukleinsäuren (dsRNA) gebräuchlich, die aufgrund ihrer Fähigkeit, die Expression eines gewünschten Gens zu inhibieren, allgemein als small interference RNAs (siRNAs) bezeichnet werden. Wie hierin noch detaillierter beschrieben, lagert sich eine siRNA an eine mRNA mit homologer Sequenzen an und katalysiert deren Abbau, so dass die Bildung des Genproduktes (Proteins) unterdrückt wird. Dieser auch als RNA-Interferenz (RNAi) bezeichnete Prozess ermöglicht es gezielt ein Gen mit einer zu der verwendeten siRNA homologen Sequenz auszuschalten. Nach dem Stand der Technik können mit RNAi mit vielen siRNAs unterschiedlicher Sequenz Gruppen von Genen oder sogar die Gesamtheit der Gene, d.h. das Genom, eines Organismus auf bestimmte Funktionen in zellulären Assays untersucht werden. Eine Vielzahl gegen unterschiedliche Gene gerichteter siRNAs werden siRNA-Bibliotheken genannt.

Derartige zelluläre Assays müssen standardisiert sein. Eine derartige Standardisierung betrifft auch die Zellen selbst, da diese zum einen in Abhängigkeit von der jeweiligen Handhabung einen unterschiedlichen physiologischen Zustand aufweisen können und sich zum anderen auch in Folge von Mutationen im weitesten Sinne die Funktion von Genen verändern kann und insoweit das Ergebnis derartiger Assays gegebenenfalls verändert bzw. verfälscht sein kann. In der Literatur ist eine Vielzahl solcher insbesondere häufig in Zellkultur auftretenden Mutationen beschrieben (Rubin H et al., Proc. Natl Acad. Sci. USA, 87(1):482-486, 1990; Yao A and Rubin H, Proc. Natl Acad. Sci. USA, 89(16): 7486-7490; Saunders et al., Proc. Natl Acad. Sci. USA, 87(1):303-308, 2000; Grigoraova M et al., Cytogenet Genome Res. 104(1-4):333-40, 2004). Dieses gilt ganz besonders für rekombinante Zellen bzw. genetisch veränderte Zellen.

Im Stand der Technik wird versucht, dieser Entwicklung dadurch zu begegnen und eine Standardisierung dadurch zu gewährleisten, dass in zellbasierten Tests oder Testsystemen zu verwendende Zellen ansatzweise hergestellt und dann in flüssigem Stickstoff gelagert werden. Dabei ist es jedoch erforderlich, die solchermaßen eingefrorenen Zellen aufzutauen und in entsprechende, für die zellbasierten Tests geeignete Zellkulturgefäße zu überführen, oder aber die genetisch veränderten Zellen bereits auf geeignete Zellkulturgefäße wie beispielsweise Multititerplatten zu verteilen und diese Platten in flüssigem Stickstoff bis zu ihrer Verwendung zu lagern. Die Lagerung in flüssigem Stickstoff ist jedoch mit einem erheblichen Aufwand an Ressourcen verbunden.

Entsprechend liegt der vorliegenden Erfindung die Aufgabe zu Grunde, ein Verfahren bereitzustellen, welches erlaubt, dass rekombinante Zellen hergestellt werden und diese über mehrere Monate in gleichbleibender Qualität verfügbar sind und insbesondere die genetische Veränderung, die durch den rekombinanten Charakter die zelleigene, gezielt herbeigeführte Veränderung unter Beibehaltung der Vitalität der Zellen über einen langen Zeitraum gewährleistet ist.

Eine weitere Aufgabe besteht darin, entsprechende rekombinante Zellen bereitzustellen, die insbesondere für die Verwendung in einem zellbasierten Test geeignet sind.

Schließlich ist es eine Aufgabe der vorliegenden Erfindung, ein Verfahren bereitzustellen, das die Produktion von Zellen mit einer heterologen Nukleinsäure auch in für zellbasierte Tests vorgesehenen Zellkulturgefäßen in ausreichender Anzahl möglich macht und durch eine langfristige Vorratshaltung eine Standardisierung der für genetische Untersuchungen verwendeten Zellen erlaubt.

Erfindungsgemäß wird diese Aufgabe gelöst durch den Gegenstand der unabhängigen Ansprüche. Besonders bevorzugte Ausführungsformen ergeben sich aus den Unteransprüchen.

In einem ersten Aspekt wird das Problem erfindungsgemäß gelöst durch ein Verfahren zum Einfrieren und Lagern von Zellen in einem Gefäß umfassend die Schritte

a) Einfrieren der Zellen als Zellsuspension auf eine Lagertemperatur und
b) Lagern bei dieser Temperatur,

wobei das Lagern der Zellen unter gasdichtem Abschluss oder in einer inerten Atmosphäre erfolgt, und die Zellen rekombinante Zellen sind.

In einer Ausführungsform enthalten die rekombinanten Zellen eine heterologe Nukleinsäure.

In einer bevorzugten Ausführungsform codiert die heterologe Nukleinsäure für ein heterologes Molekül, wobei das heterologe Molekül ausschließlich ausgewählt ist aus der Gruppe, die Antisense-Moleküle, RNAi-vermittelnde Moleküle, Aptamere, Anticaline, Peptid-Aptamere und Antikörper umfasst.

In einer noch bevorzugteren Ausführungsform tritt das heterologe Molekül mit einem oder mehreren zellulären Molekülen in Wechselwirkung.

In einer Ausführungsform bedingt das heterologe Molekül einen Knock-Down eines oder mehrerer zellulärer Moleküle, bevorzugterweise nach Expression der heterologen Nukleinsäure.

In einer Ausführungsform ist das heterologe Molekül ein RNAi-vermittelndes Molekül, wobei bevorzugterweise das RNAi-vermittelnde Molekül ausgewählt ist aus der Gruppe, die shRNAi, siRNAs, esiRNAs und miRNAs umfasst.

In einer Ausführungsform wird die inerte Atmosphäre bedingt oder hergestellt durch Verringerung des Sauerstoffpartialdruckes oder durch Begasung mit einem Schutzgas.

In einer Ausführungsform erfolgt die Verringerung des Sauerstoffpartialdruckes vor dem Einfrieren der Zellen.

In einer Ausführungsform sind die Zellen in einem oder mehreren Gefäßen enthalten.

In einer bevorzugten Ausführungsform ist das Gefäß ausgewählt aus der Gruppe, die Multiwellplatten, Zellkulturschalen und Zellkulturflaschen umfasst.

In einer noch bevorzugteren Ausführungsform ist die Multiwellplatte ausgewählt aus der Gruppe, die 6-Well-Platten, 12-Well-Platten, 24-Well-Platten, 48-Well-Platten, 96-Well-Platten, 384-Well-Platten und 1536-Well-Platten umfasst.

In einer Ausführungsform wird der Sauerstoffpartialdruck in dem Gefäß auf etwa 52,5 mbar bis 0,21 mbar, bevorzugterweise auf etwa 26 mbar bis 0,21 mbar, bevorzugtererweise auf etwa 13 mbar bis 0,21 mbar vermindert.

In einer Ausführungsform erfolgt der gasdichte Abschluss durch Einschweißen des Gefäßes in einem gasdichten Folienschlauch oder durch Aufbringen einer gasdichten Klebefolie.

In einer Ausführungsform verbleibt nach gasdichtem Abschluss des Gefäßes ein Restvolumen an Luft in dem Gefäß.

In einer bevorzugten Ausführungsform beträgt das Restvolumen bis zu dem 17,5-fachen, bevorzugterweise bis zu dem 15-fachen, bevorzugtererweise bis zu dem 7-fachen und am bevorzugtesten gleich dem Volumen der Zellsuspension in dem Gefäß.

In einer Ausführungsform ist das Schutzgas ausgewählt aus der Gruppe bestehend aus Stickstoff, Helium, Neon, Argon, Krypton und Xenon.

In einer Ausführungsform sind die Zellen eukaryotische Zellen, bevorzugterweise tierische Zellen und bevorzugtererweise humane Zellen, insbesondere isolierte humane Zellen.

In einer bevorzugten Ausführungsform sind die Zellen ausgewählt aus der Gruppe umfassend Hela S3 (ATCC-Nr.:CCL-2.2); LoVo (ATCC-Nr.: CCL-229); L929 (ATCC-Nr.:CCL-1), HT-29 (ATCC-Nr.: HTB-38); Caco-2 (ATCC-Nr.: HTB-37); Hep G2 (ATCC-Nr.:HTB-8085); IMR-90 (ATCC-Nr.:CCL-184); PANC-1 (ATCC-Nr.:CRL-1469); DLD-1 (ATCC-Nr.:CCL-221); HCT-15 (ATCC-Nr.:CCL-225); Capan-1 (ATCC-Nr.:HTB-79); BxPC-3 (ATCC-Nr.:CRL-1687); MCF7 (ATCC-Nr.:HTB-22); SW480 (ATCC-Nr.:CCL-228); U-138 MG ( ATCC-Nr.:HTB-16); HCT116 (ATCC-Nr.: CCL-247); und A549 (ATCC-Nr.: CCL-185).

In einer Ausführungsform ist die heterologe Nukleinsäure durch einen oder mehrere Vektoren in die Zellen eingeführt, wobei die Vektoren bevorzugt aus der Gruppe ausgewählt sind umfassend-DNA-basierte Plasmidvektoren, rekombinante Replikations-defiziente Adenoviren, Adeno-assoziierte Viren, Bacculoviren, Sendaiviren, Herpes simplex Typ 1 Viren, Lentiviren und Retroviren.

In einer Ausführungsform erfolgt das Lagern bei einer Temperatur zwischen etwa -105°C und -50 °C, bevorzugterweise zwischen -65°C und -95°C und bevorzugtererweise zwischen etwa -75°C und -85°C.

In einer Ausführungsform wird das Einfrieren durch Kontakt wenigstens einer Fläche des Gefäßes mit einem Material mit geeigneter Wärmeleitfähigkeit erreicht, wobei das Material auf eine geeignete Temperatur vorgekühlt ist.

In einer bevorzugten Ausführungsform ist das Material ein Metall.

In einer weiteren bevorzugten Ausführungsform beträgt die Temperatur, auf die das Material vorgekühlt ist, etwa zwischen -90°C und -50°C und bevorzugtererweise zwischen etwa-85°C und -65 °C.

In einer Ausführungsform werden die Zellen ohne Verwendung von flüssigem Stickstoff gelagert.

In einer Ausführungsform sind die rekombinanten Zellen erhältlich durch die folgenden Schritte:

  i) Einführen der heterologen Nukleinsäure und

  ii) Herbeiführen des Knock-Downs.

In einer bevorzugten Ausführungsform umfasst das Verfahren weiter den Schritt:

  iii) Überführen der Zellen in ein Einfriermedium und optional

  iv) Überführen der Zellen in ein Gefäß wie in einem der vorhergehenden Ansprüche definiert

In einer bevorzugten Ausführungsform erfolgt das Einfrieren der heterologen Nukleinsäure und/oder das Herbeiführen des Knock-Downs in Kulturmedium und die Zellen werden direkt in Kulturmedium eingefroren.

In einer Ausführungsform umfassen die Zellen eine Vielzahl von Zellen und die Zellen unterscheiden sich in der Art der eingeführten heterologen Nukleinsäure.

In einer Ausführungsform umfassen die Zellen eine Vielzahl von Zellen und unterscheiden sich in der Art des Knock-Downs.

In einem zweiten Aspekt wird das Problem erfindungsgemäß gelöst durch eingefrorene Zellen, herstellbar nach einem Verfahren gemäß dem ersten Aspekt, wobei durch die heterologe Nukleinsäure eine transiente Veränderung der Zellen erfolgt oder erfolgt ist, wobei die transiente Veränderung der Zellen unter Beibehaltung der Zellvitalität stabilisiert ist.

In einer Ausführungsform des zweiten Aspektes sind die eingefrorenen Zellen, herstellbar nach einem Verfahren gemäß dem ersten Aspekt, wobei durch die heterologe Nukleinsäure eine stabile Veränderung der Zellen erfolgt ist, wobei die stabile Veränderung der Zellen unter Beibehaltung der Zellvitalität erfolgt ist.

In einer Ausführungsform des zweiten Aspektes ist die Zellvitalität für einen längeren Zeitraum, insbesondere bei Lagerung in einem Tiefkühlschrank, gegeben.

In einem dritten Aspekt wird das Problem erfindungsgemäß gelöst durch eine Zellbibliothek umfassend eingefrorene Zellen gemäß dem zweiten Aspekt, wobei die Zellbibliothek aus einer Vielzahl von Zellpopulationen besteht und wobei eine jede Zellpopulationen der Zellbibliothek mit einer Art oder Spezies einer heterologen Nukleinsäure transfiziert, oder mit einem DNA-Vektor, der zumindest eine Art oder Spezies einer heterologen Nukleinsäure exprimiert, transduziert oder infiziert ist, wobei die heterologe Nukleinsäure verschieden ist von einer oder mehreren heterologen Nukleinsäuren, mit denen eine, mehrere, oder alle anderen Zellpopulationen der Zellbibliothek transfiziert, transduziert oder infiziert ist.

In einem vierten Aspekt wird das Problem erfindungsgemäß gelöst durch die Verwendung von eingefrorenen Zellen gemäß dem zweiten Aspekt oder einer Zellbibliothek gemäß dem dritten Aspekt in einem zellbasierten Testsystem, bevorzugterweise in einem Hochdurchsatzscreening (HTS).

In einer Ausführungsform des vierten Aspektes werden die eingefrorenen Zellen gemäß dem zweiten Aspekt oder die Zellbibliothek gemäß dem dritten Aspekt verwendet, wobei die Zellen direkt nach dem Auftauen in Einfriermedium in dem Gefäß ohne Passagieren verwendet werden, insbesondere in einem zellbasierten Testsystem verwendet werden.

Die Begriffe Art einer heterologen Nukleinsäure und Spezies einer heterologen Nukleinsäure werden hierin bevorzugterweise synonym verwendet.

Die vorliegenden Erfinder haben überraschenderweise festgestellt, dass das Verfahren zum Einfrieren und Lagern von Zellen in einem Gefäß umfassend die Schritte

a) Einfrieren der Zellen als Zellsuspension auf eine Lagertemperatur und

b) Lagern bei dieser Temperatur,

wobei das Lagern der Zellen unter gasdichtem Abschluss oder in einer inerten Atmosphäre erfolgt, auch auf rekombinante Zellen angewandt werden kann. Grundsätzlich ist ein derartiges Verfahren in der internationalen Patentanmeldung PCT/EP2005/013170 beschrieben, wobei dort allerdings nicht die Anwendbarkeit des Verfahrens auf rekombinante Zellen offenbart wird.

Die vorliegenden Erfinder haben jedoch überraschenderweise festgestellt, dass bei Realisierung des erfindungsgemäßen Verfahrens rekombinante Zellen und insbesondere solche, die eine heterologe Nukleinsäure enthalten, insbesondere in für zellbasierte Tests geeigneten Reaktionsgefäßen eingefroren und nach praktisch unbegrenzter Lagerung wieder aufgetaut und in solchen zellulären Tests verwendet werden können, ohne dass der rekombinante Charakter der Zellen oder die Zellvitalität in einem Umfang beeinflusst werden würde, der die Verwendung der Zellen in derartigen Tests nicht mehr erlauben würde, oder zumindest die Aussagekraft derartiger zellulärer Tests nicht nachhaltig nachteilig beeinflusst. Die vorliegenden Erfinder haben auch gezeigt, dass das erfindungsgemäße Verfahren besonders dazu geeignet ist, Zellen mit gezielter Ausschaltung eines oder mehrerer Gene in ausreichender Menge und gleich bleibender Qualität zu Verfügung zu stellen und langfristig vorzuhalten.

Bevor auf weitere Ausführungsformen und Vorteile der vorliegenden Erfindung eingegangen wird, sollen im Folgenden einige der im Rahmen der vorliegenden Erfindung verwendeten Begriffe erläutert werden, wobei diese neben der spezifisch hierin angegebenen Bedeutung noch jene Bedeutung aufweisen können, wie sie den Fachleuten auf dem Gebiet geläufig und für diese offenkundig sind.

Der Begriff "Zelle" bezeichnet in einer bevorzugten Ausführungsform der vorliegenden Erfindung eine eukaryotische Zelle, das heißt eine Zelle mit echtem Zellkern und charakteristischer Differenzierung des Zytoplasmas. Eine solche Zelle kann im Rahmen der Erfindung eine tierischen oder menschlichen Ursprungs sein.

Der Begriff "rekombinante Zelle" bezeichnet in einer bevorzugten Ausführungsform der vorliegenden Erfindung eine eukaryotische Zelle, welche bevorzugterweise durch Einbringen oder Behandlung mit heterologen Nukleinsäuren, Peptiden, Proteinen, oder verwandten biologisch aktiven Substanzen verändert wurde. Verwandte biologisch aktive Substanzen sind insbesondere solche, die im weiteren Sinne wie hierin definiert zu einer Änderung mindestens einer Eigenschaft der solchermaßen behandelten Zelle verglichen mit der nicht-behandelten Zelle führen.

Der Begriff "Multititerplatte" bezeichnet in einer bevorzugten Ausführungsform der vorliegenden Erfindung eine Platte mit mehreren "Wells", die auch als Kavitäten oder Näpfe bezeichnet werden, zur Aufnahme von Zellen mit Kulturmedium verstanden. Eine solche Platte kann vorteilhafterweise 4, 6, 12, 24, 48, 96, 384 oder 1536 solcher Wells aufweisen.

Der Begriff "Zellkulturgefäß" bezeichnet in einer bevorzugten Ausführungsform der vorliegenden Erfindung eine Multititerplatte in ihrer Gesamtheit oder ein "Well" einer Multititerplatte. Ebenso bezeichnet in einer bevorzugten Ausführungsform der vorliegenden Erfindung der Begriff Zellkulturgefäß für die Zellkultur übliche Gefäße wie Kulturflaschen oder Kulturschalen in unterschiedlichen Größen.

Der Begriff "dsRNA" (doppelsträngige RNA) umfasst RNA Moleküle, die durch Basenpaarung komplementärer Bereiche einen oder mehrerer Doppelstränge innerhalb ihrer Struktur aufweisen. Zu dsRNA gehören shRNAs, siRNA, miRNA oder lange doppelsträngige RNAs (LdsRNA).

Der Begriff "shRNA" bezeichnet eine kurze Ribonukleinsäure (RNA) die zwei miteinander paarende Stränge besitzt (sense- und antisense-Strang), die zu einem Bereich eines Gens homolog sind. Der sense- und antisense-Strang sind durch eine internen Haarnadelstruktur miteinander verbunden.

Der Begriff "siRNA" beschreibt eine kurz RNA, die zwei miteinander paarende Stränge von etwa 21-23 Nukleotiden Länge besitzt (sense- und antisense-Strang), die zu einem Bereich eines Gens homolog sind und den sequenzspezifischen Abbau einer Ziel-mRNA induzieren. In biologischen Systemen entsteht eine siRNA durch die Spaltung einer shRNA durch den Nukleasekomplex Dicer, so dass die siRNA in den RNA induced silencing complex (RISC) aufgenommen werden kann.

Der Begriff "Transfektion" bezeichnet in einer bevorzugten Ausführungsform der vorliegenden Erfindung das Einbringen von heterologen Nukleinsäuren, Proteinen, oder anderen Molekülen, welche in der Zelle eine transiente genetische Veränderung hervorrufen können, durch chemische Verfahren, wie z.B der Kalizium-Phosphat-Präzipitation, Lipofektion, Transfektion unter Verwendung von kationischer Polymer, Transfektion mittels physikalischer Methoden, wie z.B. Elektroporation, Mikroinjektion, Gen/Partikel-Gun, mittels biologischer Verfahren unter Verwendung von Konjugaten zur Rezeptor-vermittelten oder Antikörprevermittelten Transfektion.

Der Begriff "Transduktion" bezeichnet in einer bevorzugten Ausführungsform der vorliegenden Erfindung das Einbringen von rekombinanter DNA, welche in der Zelle eine transiente genetische Veränderung hervorrufen kann, mittels Viren, welche ihr Wirtsgenom nicht in der Zelle vermehren können. Diese Viren werden als replikations- defiziente Viren, oder auch "Virus-basierte Vektorsysteme" bezeichnet.

Der Begriff "Infektion" bezeichnet in einer bevorzugten Ausführungsform der vorliegenden Erfindung das Einbringen von rekombinanter DNA, welche in der Zelle eine transiente genetische Veränderung hervorrufen kann, mittels Viren, welche ihr Wirtsgenom in der Zelle vermehren können. Diese Viren werden als replikations-kompetente Viren bezeichnet.

Der Begriff "DNA-Vektor" bezeichnet in einer bevorzugten Ausführungsform der vorliegenden Erfindung heterologen Desoxyribonukleinsäuren (DNA), welche für die Transfektion, Transduktion oder Infektion geeignet sind, und welche bevorzugterweise ein Plasmid, eine rekombinante virale DNA, Phagen-DNA, chromosomale DNA, oder andere Formen von DNA sind.

Der Begriff "Lagertemperatur" bezeichnet in einer bevorzugten Ausführungsform der vorliegenden Erfindung die Temperatur, bei der die Zellen vorzugsweise in einem Tiefkühlschrank gelagert werden. Besonders bevorzugte Lagertemperaturen sind dabei bevorzugterweise zwischen etwa - 90°C und - 50°C und bevorzugterweise zwischen etwa - 80°C und - 86°C.

Der Begriff "Wärmekapazität" bezeichnet nach der allgemein üblichen Definition, das Vermögen eines Körpers, Energie in Form von thermischer Energie zu speichern. Die Wärmekapazität C gibt die Wärmemenge Q (in Joule) an, die zu- oder abgeführt werden muss um die Temperatur T (in Kelvin) eines Körper zu erhöhen oder zu erniedrigen. Die Wärmekapazität eines Körpers ist direkt proportional zu dessen Volumen.

$$C = \frac{\partial Q}{\partial T}$$

Der Begriff "gasdichter Abschluss" bezeichnet in einer bevorzugten Ausführungsform der vorliegenden Erfindung den Verschluss des Zellkulturgefäßes gegenüber seiner Umgebung, so dass kein Gasaustausch oder im Wesentlichen kein Gasaustausch zwischen Zellkulturgefäß und Umgebung stattfinden kann.

Der Begriff "inerte Gase" bezeichnet in einer bevorzugten Ausführungsform der vorliegenden Erfindung nicht reagierende bzw. reaktionsarme Gase, einschließlich Edelgase, die nicht für die Energiegewinnung geeignet sind.

Der Begriff "inerte Atmosphäre" bezeichnet in einer bevorzugten Ausführungsform der vorliegenden Erfindung eine Atmosphäre unter Ausschluss von reaktiven Gasen. Eine inerte Atmosphäre kann beispielsweise durch die Begasung mit inerten Gasen oder durch das Anlegen eines Vakuums erreicht werden.

Der Begriff "genetisches Element" bezeichnet in einer bevorzugten Ausführungsform der vorliegenden Erfindung eine Ribonukleinsäure oder Desoxyribonukleinsäure mit einer Funktion bei der Regulation von Genen bzw. deren Genprodukte.

Der Begriff "essentielle Gene" bezeichnet in einer bevorzugten Ausführungsform der vorliegenden Erfindung Gene, für welche der Knock-Down vor dem Einfrierprozess die Zellvitalität nach dem Auftauen unter etwa 90% herabsetzt. Essentielle Gene kodieren daher bevorzugt Genprodukte, die den programmierten Zelltod (Apoptose) begünstigen, Genprodukte, welche für die Regulation und Funktionieren des Zellzyklus benötigt werden, Genprodukte, welche für eine zelluläre Antwort auf Schäden der DNA, oder Membranschäden benötigt werden, Genprodukte, welche essentielle Stoffwechselenzyme kodieren, und Genprodukte, welche das Anhaften adhärenter Zelle auf Zellkulturgefäße nach dem Auftauen beeinträchtigen.

Der Begriff "Hochdurchsatzscreening" ("high through-put screening", HTS) bezeichnet in einer bevorzugten Ausführungsform das Testen einer Vielzahl von Stoffen, Zellen oder dergleichen in einem relativ kurzen Zeitraum und dabei kann beispielsweise in einem zellbasierten Test die Wirkung von Stoffen, Zellen oder dergleichen auf Zellen in den "Wells" eines geeigneten Gefäßes, bevorzugterweise einer Multiwellplatte getestet werden. Bevorzugterweise erfolgt das Testen mit einer Vielzahl von Stoffen, Zellen oder dergleichen mit einer hohen Durchsatzrate.

Der Begriff "Einfriermedium" bezeichnet in einer bevorzugten Ausführungsform der Erfindung Lösungen, die geeignet sind, lebende Zellen während des Einfriervorganges vor Gefrierschaden zu schützen. Derartige Lösungen umfassen bevorzugterweise Kulturmedium und kryoprotektive Substanzen. Ein besonders bevorzugtes Einfriermedium ist ein Kulturmedium, das eine oder mehrere kryoprotektive Substanzen enthält. Bevorzugte Kryo-protektive Substanzen sind Lösungsmittel und bevorzugterweise Dimethylsulfoxid (DMSO) und Glyzerin.

Der Begriff "Vitalität" bezeichnet in einer bevorzugten Ausführungsform der vorliegenden Erfindung den prozentualen Anteil an lebenden Zellen in einem zu testenden Gefäß, wie beispielsweise einer Multiwellplatte, bezogen auf nicht-behandelte eingefrorene oder nicht eingefrorene Zellen in einem Gefäß, bevorzugterweise in dem Gefäß, das als Kontrollgefäß dient. Hierbei kann die Bestimmung des Anteils an lebenden Zellen entweder durch einen Farbausschlusstest, wie beispielsweise beschrieben von Krause AW et al. (Krause A.W. et al., 1984, J. Histochem. Cytochem. 32(10):1084-1090), oder durch einen Test auf metabolische Aktivität wie beispielsweise beschrieben von Maekawa Y (Maekawa Y, et al., Thromb. Res. 109(5-6):307-314, 2003), erfolgen.

Das erfindungsgemäße Verfahren überwindet insbesondere die ansonsten beim Einfrieren von Zellen auftretenden Probleme, die im Wesentlichen durch die Bildung von Eiskristallen hervorgerufen werden. Der Zusatz von kryoprotektiven Substanzen wie beispielsweise Glyzerin oder DMSO, ist zwar grundsätzlich geeignet, diese Effekte zu minimieren, jedoch werden bei derartigen Protokollen besondere Anforderungen an das Gefäß, in dem die Zellen enthalten sind, gestellt. Insbesondere werden suspendierte Zellen nach dem Stand der Technik in Kryoröhrchen langsam mit einer Abkühlrate von ca. 1°C pro Minute bis auf- 80°C eingefroren. Das langsame Abkühlen wird durch eine individuelle Isolierung der Kryoröhrchen, z. B. durch eine Polystyrolbox mit geeigneter Bandstärke, erreicht. Die solchermaßen eingefrorenen Zellen sind jedoch nur für einen kurzen Zeitraum von etwa zwei bis vier Monaten haltbar. Dies wird gemäß dem erfindungsgemäßen Verfahren überwunden.

Das erfindungsgemäße Verfahren überwindet darüber hinaus das bei der Herstellung von rekombinanten Zellen durch heterogene Nukleinsäuren auftretende Problem des zeitlich begrenzten rekombinanten Charakters der Zellen. Auf Grund dieses zeitlich begrenzten rekombinanten Charakters müssen Zellen für funktionelle Versuche immer erneut mit heterogenen oder heterologen Nukleinsäuren transfiziert werden. Abweichungen im Expressionsmuster der heterogenen oder heterologen Nukleinsäure führen zu schwankende Testergebnisse. Das erfindungsgemäße Verfahren überwindet diese Probleme, indem rekombinante Zellen aus einer Charge für Versuche lange gelagert werden können und die Uniformität des rekombinanten Charakters über diesen Zeitraum gewährleistet bleibt.

Zum Einfrieren der Zellen werden diese bevorzugterweise aus einer Zellkultur in exponentieller Wachstumsrate verwendet. Dabei sind bevorzugterweise vor dem Ernten gerade so viele Zellen in dem Gefäß, dass der Boden des Gefäßes gleichmäßig und bevorzugterweise zu nicht mehr als 90% mit Zellen bedeckt ist.

Nach dem Ernten können die Zellen mit einer Zelldichte von 0,05-10 x $10^6$, besonders bevorzugt mit einer Zelldichte von 0,1 bis 4 x $10^6$ pro ml in Einfriermedium resuspendiert eingefroren werden. Das Einfriermedium kann Kulturmedium, sowie ein oder mehrere Kryoprotektiva enthalten. Das Kryoprotektivum kann Glyzerin oder Dimethylsulfoxid (DMSO) sein. Die Konzentration des Kryoprotektivum kann 1 bis 20 Vol. %, bevorzugt 2 bis 15 Vol. %, besonders bevorzugt 4 bis 10 Vol. % betragen. Beispiele für geeignete Einfriermedien sind eine Mischung aus 95% DMEM (Dulbelcco's Modified Eagles Medium) Komplettmedium und 5 % DMSO, sowie aus 95% DMEM Komplettmedium und 5% Glyzerin, wobei DMEM Komplettmedium aus DMEM, 4 mM L-Glutamin, 2 mM Natriumpyruvat und 10% fötalem Kälberserum (FCS) bestehen kann. Weitere Einfriermedien sind in der Literatur bekannt (Sasaki M. et al., Biotechnol. Appl.

Biochem. 42(Pt 2):183-188, 2005; Sasnoor L.M. et al., Transfusion 45(4):622-633, 2005; Birkeland S.M. Cryobiology 13(4):442-447, 1976; Loretz L.J. et al., Xenobiotica 19(5):489-498, 1989; Merten O.W. et al., Biologicals 23(2):185-9, 1995. Stachecki J.J. et al., Cryobiology 37(4):346-54, 1998).

Das im Einfriermedium verwendete Kulturmedium kann auch ein anderes in der Zellkultur verwendete Medium als DMEM sein. Weitere Beispiele hierfür sind RPMI oder McCoy's Medium. Anstelle eines Kulturmediums kann in dem Einfriermedium auch eine Salzlösung eingesetzt werden, wie beispielsweise HBSS (Hanks Buffered Saline Solution) oder andere übliche Salzlösungen.

Die in dem Einfriermedium resuspendierten Zellen werden bevorzugterweise höchstens etwa 60 Minuten, bevorzugterweise etwa 30 Minuten, bevorzugtererweise höchstens etwa 30 Minuten nach dem Resuspendieren eingefroren.

Die Zellsuspension kann in einem Volumen von 5 bis 250$\mu$l, bevorzugt in einem Volumen von 10 bis 50$\mu$l eingefroren werden. Bei Zellkulturgefäßen mit einem Kulturfläche von > 1,1 cm$^2$ kann die Zellsuspension in mehreren Tropfen am Rand des Zellkulturgefäßes eingefroren werden.

In einer bevorzugten Ausführungsform werden die Zellen mit einer Abkühlrate auf die Lagertemperatur eingefroren, die mindestens etwa 20,5°C pro Minute, bevorzugt mindestens etwa 45°C pro Minute, besonders bevorzugt etwa 80,5°C pro Minute beträgt. Die Abkühlrate erlaubt ein im Vergleich zu den Verfahren nach dem Stand der Technik schnelles Abkühlen der in den Zellkulturgefäßen befindlichen Zellsuspension auf die Lagertemperatur. Da ein schnelles Abkühlen eines Körpers durch eine niedrige Wärmekapazität herbeigeführt wird, wird die bevorzugten Ausführungsform dadurch erreicht, dass die Zellsuspension in einem niedrigen Volumen, bevorzugt kleiner als 50 $\mu$l, eingefroren wird. In Verbindung mit dem im Medium befindlichen Kryoprotektivum gelingt es in bevorzugten Ausführungsformen, die Eiskristallbildung im System, d.h. der Zellsuspension bzw. dem Zellkulturmedium zu unterdrücken und die Lösung im glasartigem Zustand zu halten, der für die zerstörungsfreie Tieftemperaturlagerung von Zellen notwendig ist. Eine besonders bevorzugte Abkühlrate ist 64,5°C pro Minute.

Das Einfrieren wird in einer Ausführungsform durch den Kontakt wenigstens einer Fläche des Zellkulturgefäßes mit einem Material geeigneter (hoher) Wärmeleitfähigkeit erreicht werden, das auf eine geeignete Temperatur vorgekühlt wurde. Das Material mit geeigneter Wärmeleitfähigkeit kann dabei ein Metall sein. Die geeignete Temperatur des Materials beträgt dabei bevorzugterweise zwischen etwa - 90°C und - 50°C und bevorzugterweise zwischen etwa - 80°C und - 86°C.

Erfindungsgemäß kann das Lagern der Zellen ohne die Verwendung von flüssigem Stickstoff erfolgen. Vorzugsweise kann das Lagern in einem Tiefkühlschrank erfolgen. Die Lagerung der Zellen erfolgt bevorzugterweise bei einer Lagertemperatur zwischen etwa - 60,5 und - 86°C, besonders bevorzugt zwischen - 80,5 und - 86°C. Erfindungsgemäß kann die Lagerung in einem Tiefkühlschrank aufrechterhalten werden, bevorzugterweise bei einer Temperatur von etwa - 80°C bis - 86°C.

Bevorzugterweise erfolgt die Lagerung der Zellen in einem Kulturgefäß, bevorzugtererweise in einem Zellkulturgefäß.

Das Zellkulturgefäß ist in einer Ausführungsform, ist aber nicht darauf beschränkt, eine Multititerplatte, eine Zellkulturschale oder eine Zellkulturflasche sein. Die Multititerplatte kann ausgewählt sein aus der Gruppe bestehend aus 4-well, 6-well, 12-well, 24-well, 48-well, 96-well, 384-well, 1536-well Platte.

Die Lagerung erfolgt erfindungsgemäß unter gasdichtem Abschluss oder in einer inerten Atmosphäre. Die Verwendung einer inerten Atmosphäre bedeutet insbesondere, dass die Atmosphäre über den Zellen bzw. der diesen enthaltenen flüssigen oder festen Phase aus nicht reagierenden bzw. reaktionsarmen Gasen besteht.

Eine inerte Atmosphäre kann im Rahmen der vorliegenden Erfindung durch verminderten Atmosphärendruck und/ oder durch die Verwendung eines inerten Gases oder Schutzgases hergestellt werden. Dabei ist bevorzugt, dass die Herstellung einer inerten Atmosphäre in dem Zellkulturgefäß durch Verringerung des Atmosphärendruck auf zwischen etwa 0,65 und 0,05 bar, bevorzugterweise zwischen etwa 0,4 und 0,1 mbar erreicht wird. Die Herstellung der inerten Atmosphäre im Zellkulturgefäß erfolgt vorzugsweise vor dem Einfrieren der Zellen in dem Zellkulturgefäß.

Die Lagerung der Zellen kann alternativ oder ergänzend zur inerten Atmosphäre unter einem gasdichten Abschluss erfolgen. Der gasdichte Abschluss erlaubt, dass selbst für den Fall, dass eine Reaktion der Gasphase mit der Flüssig- bzw. Festphase, in der sich die Zellen befinden, erfolgt, nach dem Abreagieren der in Gasphase enthaltenen reaktiven Molekülspezies diese keine weiteren, nachteiligen Wirkungen auf die Zellen mehr haben könne, da die in der Gasphase enthaltenen reaktiven Molekülspezies nicht erneuert oder regeneriert werden können. Dabei ist es besonders bevorzugt, wenn die Gasatmosphäre oberhalb der Flüssig- bzw. Festphase möglichst gering ausgebildet ist, wodurch die Gesamtmenge an in der Gasphase verfügbaren reaktiven Molekülspezies insgesamt verringert wird. Eine derartige Verringerung an reaktiven Molekülspezies kann beispielsweise weiter dadurch erreicht werden, dass in der Gas-, Flüssig- und/oder Festphase Verbindungen enthalten sind, die die Wirkung der reaktiven Molekülspezies verringern bzw. beseitigen. Beispielhaft sei hier die Verwendung von chemischen Reduktionsmitteln oder Quenchern wie Ascorbinsäure, a-Tocopherolacetat, N-Acetylcystein, Metallothionein, Pantothensäure, Pyridoxol oder Riboflavin oder enzymatischen Quencher wir Katalase, Mangan Superoxid Dismutase oder Kupfer/Zink Superoxid Dismutase erwähnt.

Der gasdichte Abschluss kann jedoch auch bevorzugterweise dazu führen, dass die inerte Atmosphäre als solche aufrechterhalten und durch Umgebungseinflüsse hinsichtlich ihrer Wirkung nicht verändert wird.

Der gasdichte Abschluss des Gefäßes und insbesondere des Zellkulturgefäßes kann bevorzugterweise durch Einschweißen in einen gasdichten Folienschlauch oder Folienbeutel oder durch Verwendung einer gasdichten Klebefolie erfolgen. Dabei wird in einer bevorzugten Ausführungsform ein geeignetes Zellkulturgefäß mit einem Deckel verschlossen und in einem Foliensschlauch oder Folienbeutel vakuumverschweißt. Dazu wird typischerweise das Zellkulturgefäß in den Folienschlauch gegeben, der vorher optional bereits auf einer Seite verschlossen sein kann. Mit einem handelüblichen Vakuumiergerät kann die verbleibende Luft aus der Folienverpackung weitestgehend abgesogen werden.

Erfindungsgemäß können die Zellen nach dem Einfrieren bei 37°C aufgetaut werden und in dem Zellkulturgefäß ohne Passagieren, Mediumwechsel oder Waschen für einen zellbasierten Assay verwendet werden. Das Auftauen erfolgt dabei vorzugsweise in einem auf 37°C temperierten Zellinkubator mit einer für die Zellkultur geeigneten Atmosphäre mit geeignetem $CO_2$-Partialdruck und geeigneter Luftfeuchtigkeit. Bevorzugterweise 15 Minuten bis 1 Stunde nach dem Auftauen wird in das Zellkulturgefäß ein geeignetes Kulturmedium zugegeben. Die Verdünnung des Kulturmediums mit dem Einfriermedium in Wells von Multititerplatten kann etwa 1:1, bevorzugterweise etwa 1:2, bevorzugterweise etwa 1:3 betragen. Bei Zellkulturschalen oder Zellkulturflaschen kann die Verdünnung des Einfriermediums mit dem Kulturmedium auch bis zu etwa 1:50 betragen. Nach Zugabe des Kulturmediums können die Zellen direkt für einen zellbasierter Test verwendet werden oder es kann ein Mediumwechsel vor der Durchführung des zellbasierten Tests erfolgen. Bevorzugterweise ist das im Rahmen des Medienwechsels eingeführte Medium ein Kulturmedium oder ein für einen zellbasierten Test geeignetes Medium, das den Fachleuten auf dem Gebiet bekannt ist. Ein möglicher Einfluß des im Einfriermedium befindlichen Kryoprotektivums auf den zellbasierten Test kann dadurch gemessen werden, das das Ergebnis des zellbasierten Tests nach vorangegangenen Mediumwechsel mit den Ergebnissen des zellbasierten Tests ohne vorangegangenen Mediumwechsel miteinander verglichen werden.

Die eingefrorenen Zellen können bei einer Lagertemperatur von weniger als oder gleich - 65°C für mindestens einen Monat, bevorzugterweise für mehr als 2 Monate, bevorzugtererweise mehr als 4 Monate, bevorzugtererweise mehr als 12 Monate eine Vitalität von über 70%, bevorzugterweise über 80%, bevorzugterweise von über 95% der Vitalität von Zellen eines nicht eingefrorenen Kontrollgefäßes aufweisen. Zur Messung der Vitalität kann ein im Stand der Technik bekannter Farbausschlusstest verwendet werden. Dabei werden nichtmembranpermeable Farbstoffe verwendet, die nur Zellen mit einer defekten Membran, nicht aber Zellen mit einer intakten Membran färben. Ein dafür geeigneter und im Stand der Technik beschriebener Farbstoff ist Erythrosin B (Krause A.W. et al., 1984, J. Histochem. Cytochem.32(10):1084-1090). In kleinen Gefäßen, aus denen Zellen nicht zuverlässig entnommen werden können, kann die Vitalität indirekt über die metabolische Aktivität der Zellen bestimmt werden. Dabei wird im Rahmen eines so genannten Reduktionstests ein Substrat von metabolisch aktiven Zellen reduziert und dadurch in eine durch ein verändertes Absorptions- oder Fluoreszenzspektrum nachweisbare Substanz überführt. Ein im Stand der Technik bekannter Reduktionstest ist beispielsweise der WST-8 Reduktionstest (Maekawa Y, et al., Thromb. Res. 109(5-6):307-314, 2003). Durch die Reduktion des Tetrazoliumsalzes WST-8 [$Na^+$·2-(2-methoxy-4-nitrophenyl)-3-(4-nitrophenyl)-5-(2,4-disulfophenyl)-2H-tetrazolium] in Gegenwart eines intermediären Elektronenakzeptors wie z.B. 1-Methoxyphenazinmethosulfat zu einem bei der Absorptionswellenlänge von 450 nm nachweisbaren Formazan kann die metabolische Aktivität der Zellen gemessen werden. Durch einen Vergleich der metabolischen Aktivität von Zellen, die nach dem erfindungsgemäßen Verfahren eingefroren wurden, mit nicht eingefrorenen Zellen in Kontrollgefäßen (Vitalität 100%) kann die Zellvitalität bestimmt werden. Für Zytotoxizitäts-Tests, die zur Bestimmung der Toxizität einer Verbindung verwendet werden, kann beispielsweise die Stoffwechselaktivität von Zellen als Indikator für die Schädigung durch toxische Substanzen herangezogen werden. Dafür kann ebenfalls ein Reduktionstest wie der WST-8 Reduktionstest verwendet werden. Dabei wird die Zytotoxizität anhand des verringerten Substratumsatzes von Zellen, die mit einer toxischen Substanz behandelt wurden, im Vergleich zu nicht-behandelten Kontrollzellen (Vitalität 100%) bestimmt.

Die eingefrorenen Zellen, bei denen ein Gen, eine Gruppe von Genen oder die Gesamtheit der Gene (Genom) ausgeschaltet ist und wie sie hierin detaillierter beschrieben sind, können bei einer Lagertemperatur von wenigstens oder gleich etwa - 65°C für mindestens 1 Monat, bevorzugterweise mehr als 2 Monate, bevorzugterweise mehr als 6 Monate, bevorzugterweise mehr als 12 Monate eine um 70% niedrigere, bevorzugterweise eine um 80% niedriger, bevorzugterweise eine über 95% verringerte Hemmung des entsprechenden Genes zeigen. Entsprechende Lager- oder Kulturgefäße wie z. B. Platten, die typischerweise eine erfindungsgemäße Zellbibliothek umfassen, können somit auf Trockeneis zum Anwender transportiert werden und für zellbasierte Tests in Hochdurchsatzverfahren verwendet werden. Eine Liste der 5362 wichtigsten humanen Gene, welche für die Herstellung einer RNAi-Bibliothek in Frage kommen, werden hierin mit der folgenden Tabelle 1 offenbart.

Wie hierin verwendet bezeichnet der Begriff "Gene Symbol" die in der Technik verwendete Abkürzung des Gens und der Begriff "Entrez Gene ID" die Datenbankidentifizierungsnummer insbesondere von PubMed von NCBI.

| Gene Symbol | Entrez GeneID | Gene Symbol | Entrez GeneID | Gene Symbol | Entrez GeneID | Gene Symbol | Entrez GeneID |
|---|---|---|---|---|---|---|---|
| DNM1 | 1759 | KRAS2 | 3845 | SRI | 6717 | ProSAPiP2 | 9755 |
| BCAT2 | 587 | PTK7 | 5754 | ELA2 | 1991 | SEP15 | 9403 |
| NEDD4 | 4734 | TCFL5 | 10732 | FKBP1A | 2280 | MAP3K7 | 6885 |
| SELP | 6403 | SFRS7 | 6432 | RPS9 | 6203 | ZFYVE20 | 64145 |
| FAS | 355 | PAICS | 10606 | CYP24A1 | 1591 | UBE2L3 | 7332 |
| CX3CL1 | 6376 | FOSL2 | 2355 | RRM2 | 6241 | CABP5 | 56344 |
| EPOR | 2057 | C1QB | 713 | RODH-4 | 8608 | GYS2 | 2998 |
| DUSP1 | 8446 | PXN | 5829 | CCPG1 | 9236 | RFC2 | 5982 |
| CXCL2 | 2920 | CD83 | 9308 | POLA | 5422 | MGC54289 | 128338 |
| TP53AP1 | 11257 | CCR2 | 1231 | AKR1A1 | 10327 | MST1 | 4485 |
| PARP1 | 142 | SACM2L | | C4BPA | 722 | LOC374969 | 374969 |
| TGFB2 | 7042 | MAPK11 | 5600 | ERCC8 | 1161 | PRKAB1 | 5564 |
| TCL6 | 27004 | CCL14 | 6358 | CD79B | 974 | ADRB2 | 154 |
| LAMA4 | 3910 | BDNF | 627 | CX3CR1 | 1524 | EIF2S1 | 1965 |
| CHIT1 | 1118 | PAPOLG | 64895 | PSEN2 | 5664 | TYRPI | 7306 |
| DKFZp686L20145 | | FLJ13848 | 79829 | PAX6 | 5080 | CDKN2D | 1032 |
| SSFA2 | 6744 | Spir-1 | | GTF2H4 | 2968 | CCNA1 | 8900 |
| CLNSIA | 1207 | GMEB2 | 26205 | MMP1 | 4312 | FCGR2B | 2213 |
| PCMT1 | 5110 | ASXL1 | 171023 | GHRH | 2691 | ARF3 | 377 |
| ARSB | 411 | Rab11-FIP2 | | KIAA1423 | 57583 | POSTN | 10631 |
| RHO | 6010 | ILF1 | | PSG9 | 5678 | NKG7 | 4818 |
| NPY1R | 4886 | MAP4 | 4134 | NUDT12 | 83594 | CDC42 | 998 |
| AMD1 | 262 | IMPG1 | 3617 | PSMD 11 | 5717 | HNRPK | 3190 |
| NDFIP2 | 54602 | KPNA2 | 3838 | FLJ11046 | 55773 | BTF3 | 689 |
| FLT4 | 2324 | RABIF | 5877 | AP2A2 | 161 | SPI1 | 6688 |
| CYP3A7 | 1551 | KIAA1720 | 80851 | STK4 | 6789 | HBEGF | 1839 |
| PWP2H | 5822 | CYP3A5 | 1577 | SLC4A5 | 57835 | BST1 | 683 |
| BTRC | 8945 | CENPE | 1062 | LRP6 | 4040 | CCR1 | 1230 |
| VDAC2 | 7417 | LOC51619 | 51619 | FLJ20202 | | C1S | 716 |
| HEAB | 10978 | HABP4 | 22927 | RNP | 55599 | IKBKB | 3551 |
| SLC4A4 | 8671 | KIAA0913 | 23053 | CTSC | 1075 | IL15 | 3600 |
| LEPROTL1 | 23484 | SQLE | 6713 | GSS | 2937 | PIAS1 | 8554 |
| IHPK2 | 51447 | OPA1 | 4976 | BPGM | 669 | MMP7 | 4316 |

(fortgesetzt)

| Gene Symbol | Entrez GeneID | Gene Symbol | Entrez GeneID | Gene Symbol | Entrez GeneID | Gene Symbol | Entrez GeneID |
|---|---|---|---|---|---|---|---|
| TM4SF8 | 10099 | PDHAI | 5160 | EFS | 10278 | MGC35555 | 340419 |
| AFTIPHILIN | 54812 | STXBP5 | 134957 | HIST1H1C | 3006 | KIAA1277 | 27147 |
| CASP1 | 834 | SRI | 6717 | FLJ20668 | | KCNE3 | 10008 |
| HSD17B12 | 51144 | VEZATIN | 55591 | MCM6 | 4175 | MUTYH | 4595 |
| ACTN2 | 88 | RAE1 | 8480 | PDLIM2 | 64236 | FLJ14007 | 79752 |
| MORF4L2 | 9643 | DTX1 | 1840 | ANKH | 56172 | 1MMP2L | 83943 |
| STXBP3 | 6814 | NEDD4 | 4734 | FBN1 | 2200 | TRIM4 | 89122 |
| TIRP | | AFP | 174 | CD14 | 929 | RAB10 | 10890 |
| DKFZp434C0328 | 54762 | CCK | 885 | CLSTN1 | 22883 | PTGFR | 5737 |
| HS3ST2 | 9956 | SPTBN2 | 6712 | HLA-C | 3107 | PPOX | 5498 |
| MICAL2 | 9645 | OCIAD2 | 132299 | ZMPSTE24 | 10269 | POU2AF1 | 5450 |
| SEPT7 | 989 | SSRP1 | 6749 | GPR85 | 54329 | P29 | 25949 |
| VDR | 7421 | UBE2G2 | 7327 | ATP5L | 10632 | HMP19 | 51617 |
| RBM13 | 84549 | SAP18 | 10284 | RERG | 85004 | TIGD3 | 220359 |
| PLAC1 | 10761 | PABPN1 | 8106 | STAF65(gamma) | 9913 | TAF 11 | 6882 |
| DKFZP434D193 | | SLC6A2 | 6530 | RPS18 | 6222 | PAK1 | 5058 |
| ARL6IP | 23204 | KIAA0962 | 23341 | KRT13 | 3860 | AURKB | 9212 |
| PLIN | 5346 | SP7 | 121340 | SPOP | 8405 | KIAA1456 | 57604 |
| C14orf101 | 54916 | C14orf145 | 145508 | RNF141 | 50862 | ANTXR1 | 84168 |
| HPI-BP74 | 50809 | PRKCN | | SNAP29 | 9342 | MPP1 | 4354 |
| LOC144233 | 144233 | OSBPL10 | 114884 | GPR133 | 283383 | MYC | 4609 |
| DKFZP761D0211 | | DKFZP566M114 | 84068 | FLJ10996 | 54520 | TRAF6 | 7189 |
| EPHA4 | 2043 | VCIP135 | 80124 | ZNF552 | 79818 | ACTR2 | 10097 |
| C9orf60 | 10444 | KRT7 | 3855 | PAQR3 | 152559 | CDK9 | 1025 |
| C10orf39 | 282973 | SLC30A7 | 148867 | RNF6 | 6049 | FEZ1 | 9638 |
| TMOD3 | 29766 | FLJ20507 | 55654 | RAI16 | 64760 | IK | 3550 |
| ZNF261 | 9203 | CNNM4 | 26504 | POLR3F | 10621 | TRAF4 | 9618 |
| TRIO | 7204 | GCK | 2645 | DICER1 | 23405 | S100A8 | 6279 |
| MEF2C | 4208 | TPMI | 7168 | SLC17A5 | 26503 | CD3Z | 919 |
| PSARL | 55486 | HOXC1 | 3227 | TTC1 | 7265 | IRF7 | 3665 |
| MTCH1 | 23787 | PRKAR1A | 5573 | SLC23A2 | 9962 | PRG4 | 10216 |
| FLJ12649 | 79649 | RGS4 | 5999 | VPS4B | 9525 | ACTA2 | 59 |
| TENS1 | 64759 | IRF2BP1 | 26145 | DNM1L | 10059 | IKBKG | 8517 |

| Gene Symbol | Entrez GeneID | Gene Symbol | Entrez GeneID | Gene Symbol | Entrez GeneID | Gene Symbol | Entrez GeneID |
|---|---|---|---|---|---|---|---|
| LOXL2 | 4017 | ALDOB | 229 | PAN3 | 255967 | KRT1 | 3848 |
| HLCS | 3141 | NPD014 | 57035 | GGH | 8836 | DKFZp761H039 | 55530 |
| HAPLN3 | 145864 | GCGR | 2642 | APOC4 | 346 | TXNRD2 | 10587 |
| ANKMY2 | 57037 | ABCG1 | 9619 | ITGA6 | 3655 | DSG3 | 1830 |
| GUCY2C | 2984 | MGC50896 | | RNF11 | 26994 | ZNF497 | 162968 |
| CD24 | 934 | GORASP1 | 64689 | ENTPD6 | 955 | FLJ10803 | 55744 |
| RORC | 6097 | MKRN1 | 23608 | DGCR8 | 54487 | FLJ16030 | |
| DKFZp451M2119 | 285023 | CSTF2T | 23283 | NGX6 | | ZSWIM6 | 57688 |
| C11orf23 | 55291 | pp9099 | 80301 | FLJ10871 | 55756 | LOC 134218 | 134218 |
| KRT6B | 3854 | TOMM70A | 9868 | MANBA | 4126 | RBL1 | 5933 |
| KIAA0476 | 9909 | GCLM | 2730 | MGC3222 | 79188 | LOC283537 | 283537 |
| CDH5 | 1003 | SEPT1 | 1731 | IDI1 | 3422 | TLR3 | 7098 |
| IER2 | 9592 | SLC22A8 | 9376 | PDLIM3 | 27295 | DKFZp586I1420 | 222161 |
| SGK | 6446 | MAP7 | 9053 | HSF2 | 3298 | SPTLC1 | 10558 |
| COX7A1 | 1346 | ARL2 | 402 | RAP2A | 5911 | C14orf104 | 55172 |
| FZD9 | 8326 | C20orf31 | 55741 | CRIP2 | 1397 | PEA15 | 8682 |
| ADSS | 159 | PTPRZ1 | 5803 | DEDD | 9191 | MARK3 | 4140 |
| C4A | 720 | CD200R1 | 131450 | NFE2L1 | 4779 | MBL2 | 4153 |
| TIMP3 | 7078 | INSR | 3643 | BAPI | 8314 | R3HDM | 23518 |
| CARD4 | 10392 | CBLB | 868 | KIAA0644 | 9865 | TNRC15 | 26058 |
| CCL11 | 6356 | HPX | 3263 | RCN2 | 5955 | EPB41L4B | 54566 |
| MAF | 4094 | SERPIND1 | 3053 | VIP32 | | AIG1 | 51390 |
| PIK3R3 | 8503 | BMPR1A | 657 | STIM2 | 57620 | DO | 420 |
| MMP9 | 4318 | CD2 | 914 | SEC31L1 | 22872 | KIAA0903 | |
| ITGB8 | 3696 | FYB | 2533 | RBM6 | 10180 | GLYAT | 10249 |
| MOAP1 | 64112 | DECR1 | 1666 | RALGPS 1 | 9649 | TDG | 6996 |
| ZAK | 51776 | TRAM1 | 23471 | HIRA | 7290 | RIMS2 | 9699 |
| NRP2 | 8828 | DBI | 1622 | KIAA1712 | 80817 | VAPA | 9218 |
| NUDT8 | 254552 | IL8 | 3576 | RPS20 | 6224 | GSN | 2934 |
| FSHPRH1 | 2491 | PECAM1 | 5175 | SYT7 | 9066 | PGRMC1 | 10857 |
| TTC12 | 54970 | DUSP7 | 1849 | RAB14 | 51552 | KIAA0841 | 23354 |
| PRICKLE2 | 16633 | ZNF541 | 84215 | CCRL1 | 51554 | SYT1 | 6857 |
| LOC57228 | 57228 | C17 | 54360 | PDCD7 | 10081 | NEU 1 | 4758 |

| Gene Symbol | Entrez GeneID | Gene Symbol | Entrez GeneID | Gene Symbol | Entrez GeneID | Gene Symbol | Entrez GeneID |
|---|---|---|---|---|---|---|---|
| SSB | 6741 | ZDHHC16 | 84287 | PKHD1 | 5314 | HLA-DRA | 3122 |
| RBBP8 | 5932 | CUL4A | 8451 | C9orf10 | 23196 | ANKRD11 | 29123 |
| CDH13 | 1012 | GAGED3 | 9502 | FLJ20147 | | TYRO3 | 7301 |
| SP1 | 6667 | BRD1 | 23774 | LOC317671 | 317671 | KIAA0527 | 26032 |
| C9orf58 | 83543 | MGC17301 | 196410 | NDFIP1 | 80762 | PHKB | 5257 |
| CHD7 | 55636 | PDE4DIP | 9659 | RAB5B | 5869 | MGC12458 | 84288 |
| RABL4 | 11020 | RCL1 | 10171 | ETV5 | 2119 | SEC15L2 | 23233 |
| PLK2 | 10769 | SAMHD1 | 25939 | SULT4A1 | 25830 | KIAA1196 | 57473 |
| ARID1B | 57492 | DKFZP547N043 | 83932 | PSMD5 | 5711 | ELP4 | 26610 |
| NUDT15 | 55270 | TRIP10 | 9322 | LAD1 | 3898 | DAF | 1604 |
| UGCGL1 | 56886 | AKR1B1 | 231 | HLA-A | 3105 | SCD4 | 79966 |
| H1F0 | 3005 | FLJ22002 | | IRF3 | 3661 | PORIMIN | 114908 |
| HSF2 | 3298 | GRAF | | AASDHPPT | 60496 | FLJ13576 | 64418 |
| F5 | 2153 | EHD3 | 30845 | COMMD5 | 28991 | PROS1 | 5627 |
| C17orf25 | 51031 | KIAA0100 | 9703 | FLJ14503 | 256714 | NEDD9 | 4739 |
| PCAF | 8850 | SMARCAD 1 | 56916 | RAB37 | 326624 | FAT2 | 2196 |
| IGSF1 | 3547 | ARF4L | 379 | FSTL1 | 11167 | PIM2 | 11040 |
| CCNI | 10983 | CBWD1 | 55871 | SCG3 | 29106 | NS3TP1 | 54529 |
| GSTA4 | 2941 | OBSCN | 84033 | MYT1L | 23040 | GRINL1A | 81488 |
| UROS | 7390 | GLRX | 2745 | MASK | | TEF | 7008 |
| GJA5 | 2702 | GL13 | 2737 | ATP10D | 57205 | MAP3K13 | |
| PIK3C2G | 5288 | CIRL | 51279 | FRZB | 2487 | ZNF278 | 23598 |
| CCT8 | 10694 | MS4A6A | 64231 | PERP | 64065 | BTRC | 8945 |
| PTPRJ | 5795 | ARHE | 390 | KCNH2 | 3757 | BCL6B | 255877 |
| IL12A | 3592 | SLCO4A1 | 28231 | ITGB2 | 3689 | AGPS | 8540 |
| IL16 | 3603 | C1orf48 | 25936 | MAPRE2 | 10982 | CHL1 | 10752 |
| DUSP9 | 1852 | KRT17 | 3872 | FCMD | 2218 | KIAA0551 | |
| CLIC1 | 1192 | CDC37 | 11140 | GALNT9 | 50614 | DUSP6 | 1848 |
| PDCD8 | 9131 | COL6A1 | 1291 | SEC6L1 | 11336 | ALG1 | 56052 |
| NEDD8 | 4738 | PLAUR | 5329 | PEN2 | 55851 | C16orf34 | 90861 |
| PRKAG1 | 5571 | MYF6 | 4618 | FLJ10378 | 55132 | MRPS11 | 64963 |
| BOMB | 80014 | PPM1D | 8493 | ITGA2B | 3674 | WASPIP | 7456 |
| FLJ10737 | | PBX3 | 5090 | EEF1A1 | 1915 | C6orf61 | 54844 |

| Gene Symbol | Entrez GeneID | Gene Symbol | Entrez GeneID | Gene Symbol | Entrez GeneID | Gene Symbol | Entrez GeneID |
|---|---|---|---|---|---|---|---|
| SPATA13 | 221178 | RGS4 | 5999 | KIAA0922 | 23240 | CDK2 | 1017 |
| UBN1 | 29855 | THPO | 7066 | SERPINF2 | 5345 | BOLL | 66037 |
| GOLPH3 | 64083 | CD5 | 921 | ACAD8 | 27034 | SHMT2 | 6472 |
| SLC26A9 | 115019 | PDGFB | 5155 | TFAM | 7019 | PIN1 | 5300 |
| ZNF323 | 64288 | RHOC | 389 | FLJ10980 | 56204 | RPS6KC1 | 26750 |
| FLJ12178 | | PDE9A | 5152 | DLG3 | 1741 | SERPING1 | 710 |
| Sep 10 | | MSH5 | 4439 | FEN1 | 2237 | C16orf5 | 29965 |
| KLRD1 | 3824 | SBNO1 | 55206 | RET | 5979 | DDN | 23109 |
| SEC24A | 10802 | KRT5 | 3852 | TWIST 1 | 7291 | NKX6-2 | 84504 |
| UBE2D2 | 7322 | PGF | 5228 | INPPL1 | 3636 | ARHGEF5 | 7984 |
| BIRC1 | 4671 | SRRM2 | 23524 | NFE2 | 4778 | LOC151963 | 151963 |
| PNN | 5411 | IRX4 | 50805 | GTF2H3 | 2967 | CD53 | 963 |
| GART | 2618 | SLC2A4RG | 56731 | ANPEP | 290 | CTBP2 | 1488 |
| SFRS7 | 6432 | BCAT1 | 586 | BNIP3 | 664 | TOP2B | 7155 |
| IQGAP1 | 8826 | HOXA3 | 3200 | DUSP6 | 1848 | C22orf13 | 83606 |
| OSBPL3 | 26031 | CIAPIN1 | 57019 | GAP43 | 2596 | C10orf75 | 90271 |
| POLR2G | 5436 | KPNA4 | 3840 | SON | 6651 | ETV3 | 2117 |
| PDCD6IP | 10015 | CHD5 | 26038 | XRCC5 | 7520 | USP28 | 57646 |
| LAMC1 | 3915 | CPNE4 | 131034 | BAT2 | 7916 | ZFP64 | 55734 |
| PPID | 5481 | C16orf40 | 113000 | XTP2 | 23215 | FKBP7 | 51661 |
| RRAGB | 10325 | PTTG11P | 754 | C14orf120 | 25983 | BSPRY | 54836 |
| MITF | 4286 | PINX1 | 54984 | CDK6 | 1021 | ESRRG | 2104 |
| GFAP | 2670 | PLD1 | 5337 | GALNT14 | 79623 | SNAPC3 | 6619 |
| PDGFB | 5155 | RIPX | 22902 | DBC1 | 1620 | TRIP15 | |
| CUL2 | 8453 | MARK1 | 4139 | UBE2R2 | 54926 | DSG3 | 1830 |
| SRRM2 | 23524 | NAT1 | 9 | KIAA0931 | 23035 | PARD6G | 84552 |
| MYBL2 | 4605 | APBA2 | 321 | C20orf100 | 84969 | DOCK3 | 1795 |
| PVR | 5817 | RBBP9 | 10741 | SCAMP5 | 192683 | C10orf42 | 90550 |
| JUN | 3725 | Pfs2 | 51659 | ANKRD6 | 22881 | FLJ25070 | |
| TGFB1 | 7040 | ACSL4 | 2182 | OSBPL11 | 114885 | RER1 | 11079 |
| CIDEA | 1149 | HLA-DQA1 | 3117 | ARL6IP6 | 151188 | SRGAP1 | 57522 |
| EP300 | 2033 | DACH1 | 1602 | CAPN6 | 827 | C1orf37 | 92703 |
| IGFBP4 | 3487 | PRKAR2B | 5577 | RNP24 | 10959 | SCG2 | 7857 |

EP 1 869 976 A1

| Gene Symbol | Entrez GeneID | Gene Symbol | Entrez GeneID | Gene Symbol | Entrez GeneID | Gene Symbol | Entrez GeneID |
|---|---|---|---|---|---|---|---|
| BMP7 | 655 | PON2 | 5445 | RFX4 | 5992 | HBLD2 | 81689 |
| KIAA0998 | 23093 | PRCC | 5546 | SEMA6A | 57556 | FLJ10904 | |
| GALNTL1 | 57452 | MSN | 4478 | NME4 | 4833 | N4BP2 | 55728 |
| K1AA1441 | 57592 | RAF1 | 5894 | C6orf119 | 83640 | KIAA1026 | 23254 |
| C6orf118 | 168090 | GABBR1 | 2550 | PPFIA4 | 8497 | FLJ10895 | |
| COQ6 | 51004 | EPHB6 | 2051 | DBI | 1622 | HRMT1L1 | 3275 |
| SLC7A8 | 23428 | CYFIP2 | 26999 | EEA1 | 8411 | PTPRK | 5796 |
| FLJ10378 | 55132 | NDP52 | 10241 | FLJ44796 | 401209 | SYNCRIP | 10492 |
| GALNAC4S-6ST | 51363 | OSTF1 | 26578 | BACH2 | 60468 | LOC63929 | 63929 |
| C19orf13 | 26065 | RXRA | 6256 | POLD1 | 5424 | PKIB | 5570 |
| KIAA1618 | 57714 | IL2RG | 3561 | HBP1 | 26959 | SLC13A3 | 64849 |
| MLL3 | 58508 | STAT5B | 6777 | MARVELD1 | 83742 | MGST2 | 4258 |
| NR3C2 | 4306 | TCF3 | 6929 | SERPINB2 | 5055 | KCNS1 | 3787 |
| BMPR2 | 659 | IL8RB | 3579 | CAV 1 | 857 | HEPH | 9843 |
| C6orf78 | 221301 | HSPA1A | 3303 | CDC 16 | 8881 | TBCD | 6904 |
| RPL4 | 6124 | PTMA | 5757 | ECM2 | 1842 | GNGT2 | 2793 |
| EPO | 2056 | EPHB2 | 2048 | TCF20 | 6942 | DLK1 | 8788 |
| SRPK2 | 6733 | FLJ32642 | 137492 | MAP2K5 | 5607 | ALDHIBI | 219 |
| FLJ10094 | 55068 | C20orf70 | 140683 | SREBF2 | 6721 | GJA4 | 2701 |
| C14orf114 | 55218 | FLJ11155 | 55314 | NP | 4860 | LOC200205 | 200205 |
| ANGPTL2 | 23452 | FLJ90586 | 135932 | MRE11A | 4361 | CD164 | 8763 |
| FLJ43842 | | FZD3 | 7976 | CCL13 | 6357 | C9orf76 | 80010 |
| PLXND1 | 23129 | FLJ36874 | 219988 | ELF2 | 1998 | EPHA1 | 2041 |
| HSRTSBETA | 55556 | FAIM2 | 23017 | STAT5B | 6777 | MFNG | 4242 |
| HM74 | | CABLES2 | 81928 | ICAM3 | 3385 | LAMA3 | 3909 |
| ZW10 | 9183 | LOC253017 | 253017 | CCR6 | 1235 | STAM | 8027 |
| PACE4 | | BZW1 | 9689 | PTPRK | 5796 | CALD1 | 800 |
| CTBP2 | 1488 | MGC 12458 | 84288 | GPX2 | 2877 | TUBB4, TUBB3 | 10382, 10381 |
| GPR17 | 2840 | DAPK1 | 1612 | ARSB | 411 | HPR | 3250 |
| AKAP10 | 11216 | DNAJB9 | 4189 | C20orf65 | 149699 | HLA-DMA | 3108 |
| IFNGR1 | 3459 | TNFRSF5 | | C2orf6 | | ELN | 2006 |

| Gene Symbol | Entrez GeneID | Gene Symbol | Entrez GeneID | Gene Symbol | Entrez GeneID | Gene Symbol | Entrez GeneID |
|---|---|---|---|---|---|---|---|
| C6 | 729 | DNCL1 | 8655 | ZNF540 | 163255 | MGC71805 | |
| SERPINB9 | 5272 | PFN2 | 5217 | SP3 | 6670 | CASP6 | 839 |
| RARA | 5914 | GSTM2 | 2946 | TMP21 | 10972 | TCP1 | 6950 |
| FOS | 2353 | RGL2 | 5863 | FSCN1 | 6624 | NQO2 | 4835 |
| RAPGEF1 | 2889 | YWHAB | 7529 | TTN | 7273 | ANXA4 | 307 |
| PBX2 | 5089 | SF1 | 7536 | EPHB4 | 2050 | COASY | 80347 |
| TIF1 | 8805 | SQLE | 6713 | E2F4 | 1874 | GATA1 | 2623 |
| CYorf15B | 84663 | THY1 | 7070 | MXD4 | 10608 | XRCC3 | 7517 |
| CLCN5 | 1184 | CASP10 | 843 | MAD | 4084 | IRF5 | 3663 |
| SULT2B1 | 6820 | MAP3K11 | 4296 | VEGF | 7422 | TPBG | 7162 |
| MLL5 | 55904 | ITPR3 | 3710 | KIAA0355 | 9710 | LAMP1 | 3916 |
| ANKRD29 | 147463 | IL3RA | 3563 | GATA2 | 2624 | FCGR2A | 2212 |
| SLC30A8 | 169026 | TRAF5 | 7188 | ITPR1 | 3708 | CHUK | 1147 |
| MDS028 | 55846 | OSGEPL1 | 64172 | IRF4 | 3662 | DOCK2 | 1794 |
| FBL | 2091 | TDRD6 | 221400 | USP4 | 7375 | DOM3Z | 1797 |
| LOC57117 | 57117 | PARD3 | 56288 | AMOTL2 | 51421 | ABCFI | 23 |
| SYPL | 6856 | FNBP4 | 23360 | C6orf167 | 253714 | E2F3 | 1871 |
| FLJ22662 | 79887 | C21orf107 | | XTP2 | 23215 | PTCH | 5727 |
| MEF2D | 4209 | CDCP1 | 64866 | NUP50 | 10762 | CEGF3 | |
| LAPTM5 | 7805 | N4BP1 | 9683 | NYD-SP21 | 84689 | NPHS2 | 7827 |
| LRPPRC | 10128 | FLJ10404 | 54540 | HSPA5 | 3309 | PCTK3 | 5129 |
| SNX19 | 399979 | SSPN | 8082 | TRIM33 | 51592 | FLJ10159 | 55084 |
| MOBKL2B | 79817 | TH1L | 51497 | CTNNAL1 | 8727 | KIAA2018 | 205717 |
| PPP2R3A | 5523 | NRD1 | 4898 | KRT4 | 3851 | CNOT4 | 4850 |
| SPATA2 | 9825 | SE57-1 | 80323 | H2AFY | 9555 | RNF8 | 9025 |
| DKFZP434H132 | 56905 | NCOA6 | 23054 | KIAA0146 | 23514 | TRAM1 | 23471 |
| ACYP1 | 97 | COL14A1 | 7373 | TERF1 | 7013 | KLF4 | 9314 |
| HSPC121 | 51495 | APC | 324 | FLJ10460 | | INA | 9118 |
| FLJ23322 | 80020 | N4BP1 | 9683 | DOCK2 | 1794 | PLXNA3 | 55558 |
| ARL2BP | 23568 | DERP6 | 23587 | FLJ12892 | 64770 | BLMH | 642 |
| SLC13A3 | 64849 | CDC6 | 990 | FLJ22609 | | Spir-2 | |
| FLJ20232 | 54471 | ECM1 | 1893 | FLJ90798 | | KIAA0368 | 23392 |
| TARS | 6897 | C14orf93 | 60686 | MGC42530 | | KIAA1524 | 57650 |

| Gene Symbol | Entrez GeneID | Gene Symbol | Entrez GeneID | Gene Symbol | Entrez GeneID | Gene Symbol | Entrez GeneID |
|---|---|---|---|---|---|---|---|
| FLJ36766 | 348487 | PDK2 | 5164 | TIP120A | 55832 | ZFP95 | 23660 |
| BAALC | 79870 | DKFZp547J036 | | LRRN1 | 57633 | NPM1 | 4869 |
| SNX3 | 8724 | EFG2 | | COROI C | 23603 | PHCA | 55331 |
| ZNF131 | 7690 | C17orf35 | 8834 | PDCD8 | 9131 | GBE1 | 2632 |
| PCCB | 5096 | FLJ38991 | 285521 | CGI-141 | 51026 | ALDH6A1 | 4329 |
| POT1 | 25913 | C8FW | | GOLPH2 | 51280 | ABHD5 | 51099 |
| LOC339344 | 339344 | STX3A | 6809 | C6orf55 | 51534 | DNAJB6 | 10049 |
| EDN3 | 1908 | RRM2B | 50484 | CHRM3 | 1131 | FAM11A | 84548 |
| HLA-DMA | 3108 | SYNGR3 | 9143 | CAPNS1 | 826 | FLJ13855 | 65264 |
| ACHE | 43 | THBS3 | 7059 | S100A4 | 6275 | FLJ39485 | |
| GCC2 | 9648 | PCP4 | 5121 | IMPA3 | 54928 | BPAG1 | |
| ARG1 | 383 | ITGAV | 3685 | RPP30 | 10556 | SLC25A5 | 292 |
| SUMO1 | 7341 | DARS | 1615 | DKFZP434C212 | 26130 | OPCML | 4978 |
| FLRT3 | 23767 | DEGS1 | 8560 | WHSC1 | 7468 | MGC2705 | |
| POLR2K | 5440 | PAX5 | 5079 | PCDH20 | 64881 | RAB2 | 5862 |
| ANGPT1 | 284 | FLJ14054 | 79614 | FLJ35775 | 138009 | TLL1 | 7092 |
| GADD45A | 1647 | LOC253012 | 253012 | HSPD1 | 3329 | MPP5 | 64398 |
| CA2 | 760 | FLJ14297 | 79963 | RAP1GDS1 | 5910 | PRKD1 | 5587 |
| SALL3 | 27164 | ZNF-kaiso | | HSPB2 | 3316 | SELE | 6401 |
| ARHGAP23 | 57636 | TIMM23 | 10431 | OACT2 | 129642 | MICB | 4277 |
| A2BP1 | 54715 | KCTD3 | 51133 | JMJD1C | 221037 | ZNF239 | 8187 |
| CREM | 1390 | FLOT2 | 2319 | DDEF2 | 8853 | XPA | 7507 |
| SLC7A7 | 9056 | FLJ12895 | 65982 | PHC2 | 1912 | LRP8 | 7804 |
| TM4SF1 | 4071 | TBC1D19 | 55296 | SMOC1 | 64093 | CRK | 1398 |
| ZAK | 51776 | PC4 | 10923 | RANBP17 | 64901 | MGC5356 | 79025 |
| ARMET | 7873 | TSPYL1 | 7259 | ZNF135 | 7694 | BCAN | 63827 |
| KIF3A | 11127 | GSTK1 | 373156 | ZNF264 | 9422 | MOBP | 4336 |
| HNRPR | 10236 | DUSP22 | 56940 | XTP2 | 23215 | MYO5C | 55930 |
| NUMB | 8650 | KLRB1 | 3820 | AGTR1 | 185 | RODH-4 | 8608 |
| CCNA2 | 890 | PDZK11 | 51248 | PRKCSH | 5589 | LEREPO4 | 55854 |
| DNCH1 | 1778 | VAMP3 | 9341 | SIN3B | 23309 | DKFZp313G1735 | 153642 |
| ZBTB9 | 221504 | DNPEP | 23549 | GPC1 | 2817 | SEL1L | 6400 |
| LAMB2 | 3913 | HSPC117 | 51493 | PICALM | 8301 | VPS13A | 23230 |

EP 1 869 976 A1

| Gene Symbol | Entrez GeneID | Gene Symbol | Entrez GeneID | Gene Symbol | Entrez GeneID | Gene Symbol | Entrez GeneID |
|---|---|---|---|---|---|---|---|
| FOXE1 | 2304 | WNT5A | 7474 | STTM1 | 6786 | ACCN1 | 40 |
| ZNF161 | 7716 | C18orf10 | 25941 | KCTD1 | 284252 | NT5E | 4907 |
| HRH1 | 3269 | CRADD | 8738 | ZNF263 | 10127 | KIAA1279 | 26128 |
| HLF | 3131 | FRZB | 2487 | FLJ10511 | | DNAJB5 | 25822 |
| MAPK13 | 5603 | GPC3 | 2719 | KIAA0960 | 23249 | PABPC4 | 8761 |
| TOB1 | 10140 | SEC10L1 | 10640 | EPHA4 | 2043 | DPYSL5 | 56896 |
| FYB | 2533 | PER3 | 8863 | HIVEP2 | 3097 | DONSON | 29980 |
| SCAP1 | 8631 | SNRK | 54861 | LEMD3 | 23592 | DIO3OS | 64150 |
| DUSP4 | 1846 | DARS | 1615 | UAP1 | 6675 | ABCA1 | 19 |
| BIK | 638 | ACTN3 | 89 | NPTX1 | 4884 | ASB9 | 140462 |
| KLRC1 | 3821 | CCT5 | 22948 | DCTN1 | 1639 | SCOC | 60592 |
| TIMP4 | 7079 | COPS5 | 10987 | PLEKHB1 | 58473 | LOC150946 | 150946 |
| PCNP | 57092 | MME | 4311 | YES1 | 7525 | GBA | 2629 |
| C20orf177 | 63939 | IF | 3426 | DONSON | 29980 | LOC93622 | 93622 |
| GPR48 | | SLC25A3 | 5250 | SDHD | 6392 | PAFAH1B1 | 5048 |
| IMPG1 | 3617 | C6orf10 | 10665 | UNR | 7812 | HIRA | 7290 |
| GNPNAT1 | 64841 | DDAH1 | 23576 | SEPX1 | 51734 | FLJ35036 | 253461 |
| GTF2E2 | 2961 | CD37 | 951 | UBE1 | 7317 | NACA | 4666 |
| LY6G6C | 80740 | RAD54L | 8438 | POP7 | 10248 | RASL12 | 51285 |
| JARID1A | 5927 | KIAA1796 | | PRKCZ | 5590 | RCOR3 | 55758 |
| PRKRA | 8575 | SLC4A7 | 9497 | ABHD6 | 57406 | FLJ10420 | 55707 |
| RORC | 6097 | NAALADL2 | 254827 | APOBEC3B | 9582 | ARFRP1 | 10139 |
| FLJ21963 | 79611 | RNF14 | 9604 | ITGB2 | 3689 | KRT15 | 3866 |
| KIAA0935 | | C20orf17 | 128553 | NFKBIA | 4792 | TAP2 | 6891 |
| GALNT2 | 2590 | TDRD5 | 163589 | CXCL9 | 4283 | BTBD1 | 53339 |
| HFL1 | | PAD12 | 11240 | RAB33A | 9363 | CCL8 | 6355 |
| FLRT1 | 23769 | IVL | 3713 | IER3 | 8870 | EPOR | 2057 |
| SNCAIP | 9627 | MGC13040 | 85016 | PML | 5371 | FBXW2 | 26190 |
| HSPA1L | 3305 | SLC26A8 | 116369 | TM7SF2 | 7108 | ARID2 | 196528 |
| NR2C2 | 7182 | FLJ25477 | 219287 | SEMA3C | 10512 | PRKAB2 | 5565 |
| TU3A | 11170 | LOC375748 | 375748 | SMAD1 | 4086 | TPMT | 7172 |
| NCOA4 | 8031 | TRGV9 | 6983 | NT5E | 4907 | UBE2A | 7319 |
| ZRANB1 | 54764 | AXOT | 64844 | PPP3CB | 5532 | MX2 | 4600 |

(fortgesetzt)

| Gene Symbol | Entrez GeneID | Gene Symbol | Entrez GeneID | Gene Symbol | Entrez GeneID | Gene Symbol | Entrez GeneID |
|---|---|---|---|---|---|---|---|
| LOC152217 | 152217 | FLJ31657 | | CD28 | 940 | OCLN | 4950 |
| ALKBH | 8846 | RAB6A | 5870 | TRIM41 | 90933 | LUM | 4060 |
| CDH19 | 28513 | RBPSUH | 3516 | MECP2 | 4204 | ZNF30 | 90075 |
| FGF11 | 2256 | ABI2 | 10152 | ENTPD7 | 57089 | LIPT1 | 51601 |
| LY64 | 4064 | FBXO33 | 254170 | LOC151963 | 151963 | BLZF1 | 8548 |
| COX6B1 | 1340 | SMOC2 | 64094 | ANKRD6 | 22881 | C6orf65 | 221336 |
| CCL13 | 6357 | SMAP1 | 60682 | ANKFY1 | 51479 | UBE2L6 | 9246 |
| FOXO1A | 2308 | CDH18 | 1016 | TNKS2 | 80351 | LSR7 | |
| FOSB | 2354 | SS18 | 6760 | ALPP | 250 | RAB34 | 83871 |
| PIP5K2B | 8396 | PLEKHG1 | 57480 | C14orf43 | 91748 | FLJ11151 | 55313 |
| IL18 | 3606 | COL4A4 | 1286 | ITGA3 | 3675 | CACNG3 | 10368 |
| TRA@ | 6955 | C4BPB | 725 | KIAA1045 | 23349 | POP5 | 51367 |
| CCNG1 | 900 | PLAU | 5328 | WEE1 | 7465 | CTSL | 1514 |
| PSMB8 | 5696 | VIL2 | 7430 | BRCA2 | 675 | B4GALT6 | 9331 |
| BRCA2 | 675 | VASP | 7408 | ZNF37A | 7587 | PTPRN | 5798. |
| FLJ20047 | | NQO1 | 1728 | C1orf22 | 80267 | EIF3S6IP | 51386 |
| ASMTL | 8623 | BYSL | 705 | CDC23 | 8697 | KIAA0542 | |
| AR | 367 | RAD51L3 | 5892 | LOC51234 | 51234 | OSBPL9 | 114883 |
| SEC61A2 | 55176 | DCT | 1638 | ADCY1 | 107 | GFPT1 | 2673 |
| PDCD1 | 5133 | NR0B2 | 8431 | VEGFB | 7423 | IL13RA2 | 3598 |
| POU2F2 | 5452 | HRMT1L1 | 3275 | GRB2 | 2885 | KIAA0319 | 9856 |
| KIAA1972 | 89970 | ETF1 | 2107 | KPNA5 | 3841 | ECHDC1 | 55862 |
| FAM8A1 | 51439 | LAMP2 | 3920 | STK17B | 9262 | STS | 412 |
| PEX11G | 92960 | MAPK1 | 5594 | NAT2 | 10 | FLJ20364 | 54908 |
| C14orf131 | 55778 | PIK4CA | 5297 | DUSP8 | 1850 | SMARCA3 | 6596 |
| | | HLA-DQB 1 | 3119 | | | | |
| IL1R1 | 3554 | | | GRSF1 | 2926 | FADS2 | 9415 |
| SGPP1 | 81537 | IL10RB | 3588 | RPL32 | 6161 | GRIN2A | 2903 |
| SIAH2 | 6478 | GNL1 | 2794 | EBI3 | 10148 | TMSB4X | 7114 |
| PER2 | 8864 | SHC1 | 6464 | STAT4 | 6775 | T1560 | 387335 |
| HMGN1 | 3150 | HMMR | 3161 | ENPP1 | 5167 | LPIN3 | 64900 |
| PSMD12 | 5718 | PSME4 | 23198 | SH2D1A | 4068 | CCBP2 | 1238 |
| SCAP | 22937 | P2RX1 | 5023 | IL1RL1 | 9173 | FLJ20758 | 55037 |

| Gene Symbol | Entrez GeneID | Gene Symbol | Entrez GeneID | Gene Symbol | Entrez GeneID | Gene Symbol | Entrez GeneID |
|---|---|---|---|---|---|---|---|
| CDK4 | 1019 | ZNF302 | 55900 | PPP1R1A | 5502 | MTMR3 | 8897 |
| KIAA0895 | 23366 | BDNF | 627 | EPHB3 | 2049 | CLEC1 | 51267 |
| MGC48332 | | C20orf35 | 55861 | LEPR | 3953 | CPN1 | 1369 |
| MS4A7 | 58475 | MGC35043 | 255119 | HRK | 8739 | SLC29A1 | 2030 |
| INSIG2 | 51141 | CDCA7 | 83879 | MGC10744 | 84314 | ODAG | 57798 |
| BECN1 | 8678 | PLGL | 5342 | IXL | 55588 | PLXNA2 | 5362 |
| CDH5 | 1003 | CGN | 57530 | PEPP2 | | MGC45871 | 359845 |
| CLMN | 79789 | HRB | 3267 | LIN7C | 55327 | TMEM2 | 23670 |
| PFKFB4 | 5210 | GRB7 | 2886 | LOC283439 | 283439 | NME2 | 4831 |
| SEN54L | 283989 | POLG2 | 11232 | KLHL4 | 56062 | CRYM | 1428 |
| MYT1L | 23040 | PKP1 | 5317 | RW1 | 23505 | TMSB10 | 9168 |
| OXCT | | PRKCD | 5580 | LRP2 | 4036 | BIRC2 | 329 |
| LOC90668 | 90668 | TMLHE | 55217 | TMSB4Y | 9087 | UBE1L | 7318 |
| DYRK1A | 1859 | FLJ14566 | 84892 | NCOA6IP | 96764 | SCMH1 | 22955 |
| C4orf8 | 8603 | CD74 | 972 | SEC5L1 | 55770 | ZNF22 | 7570 |
| ZNF354A | 6940 | DLD | 1738 | RAB21 | 23011 | FUT4 | 2526 |
| TXNDC | 81542 | ING5 | 84289 | C19orf2 | 8725 | MDM4 | 4194 |
| TATDN2 | 9797 | SPRR1A | 6698 | PPA2 | 27068 | MXI1 | 4601 |
| USP21 | 27005 | FLJ20203 | 54856 | GNAI3 | 2773 | DUSP5 | 1847 |
| CAV1 | 857 | METTL4 | 64863 | CYLD | 1540 | IGF1 | 3479 |
| PMP22 | 5376 | C8A | 731 | SH2BP1 | 9646 | EFO1 | |
| EPHA2 | 1969 | ARGBP2 | 8470 | SLC35C1 | 55343 | RAP2C | 57826 |
| ZNF550 | 162972 | THBD | 7056 | DNCH1 | 1778 | TRIM16 | 10626 |
| MRTF-B | | CSNK2A2 | 1459 | KIAA0652 | 9776 | BNC1 | 646 |
| ODAG | 57798 | EVL | 51466 | NAGPA | 51172 | FLJ33008 | 145748 |
| BIRC4 | 331 | FLJ10546 | 55167 | BMSC-UbP | 84993 | DSIPI | 1831 |
| DPF2 | 5977 | RFC3 | 5983 | PIGC | 5279 | RAB40B | 10966 |
| C6orf155 | 79940 | RAB6A | 5870 | GPR125 | 166647 | RANBP10 | 57610 |
| BCMO1 | 53630 | MFAP3 | 4238 | SLA | 6503 | ERP70 | 9601 |
| RRN3 | 54700 | KIF2 | 3796 | CDK2 | 1017 | FAM3A | 60343 |
| SLC25A27 | 9481 | PNPLA4 | 8228 | MYD88 | 4615 | PCNA | 5111 |
| CTSO | 1519 | PSME1 | 5720 | ANGPTL3 | 27329 | LL5beta | |
| AP1G1 | 164 | CHI3L2 | 1117 | ERCC1 | 2067 | HNMT | 3176 |

| Gene Symbol | Entrez GeneID | Gene Symbol | Entrez GeneID | Gene Symbol | Entrez GeneID | Gene Symbol | Entrez GeneID |
|---|---|---|---|---|---|---|---|
| SCAMP1 | 9522 | KRTCAP2 | 200185 | ARV1 | 64801 | FLJ90586 | 135932 |
| FLJ10769 | 55739 | TNF | 7124 | CCL15 | | FLJ30213 | |
| ATP10D | 57205 | CRKL | 1399 | GJC1 | 125111 | MGC12904 | |
| KLAA1715 | 80856 | TNFSF10 | 8743 | WDR9 | 54014 | MGC45386 | 374659 |
| AP3S1 | 1176 | CD74 | 972 | ARR3 | 407 | ACTG1 | 71 |
| FUSIP1 | 10772 | NRG1 | 3084 | ZNF75 | 7626 | NAV3 | 89795 |
| MGC24180 | | TRD@ | 6964 | SPP1 | 6696 | DP1 | |
| ACINUS | | VARS2 | 7407 | BMP6 | 654 | GAPD | 2597 |
| WARS | 7453 | ACVRL1 | 94 | KIF11 | 3832 | LOC115294 | 115294 |
| SCARB2 | 950 | APC | 324 | LCK | 3932 | L3MBTL2 | 83746 |
| SPP2 | 6694 | ZNF451 | 26036 | VBP1 | 7411 | MYOM1 | 8736 |
| SFXN1 | 94081 | CBLL1 | 79872 | MXII | 4601 | HSPA9B | 3313 |
| CSMD1 | 64478 | CISH | 1154 | HMGN2 | 3151 | PPP2R2C | 5522 |
| RHEB | 6009 | ZNF198 | 7750 | CHD1 | 1105 | GIMAP4 | 55303 |
| CNIH | 10175 | FLJ14050 | 79927 | GSTM1 | 2944 | MPZ | 4359 |
| DDB2 | 1643 | SPHAR | 10638 | TOSO | 9214 | CCBE1 | 147372 |
| TRIM66 | 9866 | CA8 | 767 | TDG | 6996 | GPC5 | 2262 |
| XPOT | 11260 | KIAA0962 | 23341 | IER3 | 8870 | ITGB3 | 3690 |
| ACTB | 60 | MYCT1 | 80177 | THY1 | 7070 | RALB | 5899 |
| CCNG1 | 900 | MATR3 | 9782 | PTPN3 | 5774 | PKMYT1 | 9088 |
| BIG1 | | RNF135 | 84282 | LTB | 4050 | COPS5 | 10987 |
| RPL15 | 6138 | KIAA0515 | 84726 | TANK | 10010 | BRCA1 | 672 |
| HPCA | 3208 | NDUFB6 | 4712 | GZMB | 3002 | PIK3CG | 5294 |
| EIF2S2 | 8894 | TPST1 | 8460 | IL11RA | 3590 | FY | 2532 |
| GDA | 9615 | SCARB2 | 950 | TRADD | 8717 | PSAP | 5660 |
| FLJ11036 | | AKAP12 | 9590 | SC4MOL | 6307 | MAP3K3 | 4215 |
| HTR7 | 3363 | STAR | 6770 | LOC220929 | 220929 | ITK | 3702 |
| DDEF1 | 50807 | KIAA1952 | | MGC41945 | 138724 | MUC1 | 4582 |
| RUNX1T1 | 862 | TM4SF6 | 7105 | LOC90799 | 90799 | RIPK2 | 8767 |
| USP22 | 23326 | EXT1 | 2131 | C10orf48 | 283078 | RNASE4 | 6038 |
| MYL9 | 10398 | SENP8 | 123228 | MAN1C1 | 57134 | CCL17 | 6361 |
| WASF3 | 10810 | TNFAIP1 | 7126 | SH3MD2 | 57630 | BIRC3 | 330 |
| C20orf59 | 63910 | KIAA0195 | 9772 | SLC6A11 | 6538 | AMMECR1 | 9949 |

| Gene Symbol | Entrez GeneID | Gene Symbol | Entrez GeneID | Gene Symbol | Entrez GeneID | Gene Symbol | Entrez GeneID |
|---|---|---|---|---|---|---|---|
| WDR8 | 49856 | MYNN | 55892 | MUC13 | 56667 | FLJ90579 | 283310 |
| STK4 | 6789 | KLF12 | 11278 | COP1 | | FLJ14721 | 84915 |
| FOXA1 | 3169 | YARS | 8565 | MGC39350 | | MIB | |
| C19orf21 | 126353 | P53AIP1 | 63970 | MAPK3 | 5595 | RGNEF | 64283 |
| DJ971N18.2 | 56255 | PRDM2 | 7799 | MYCN | 4613 | RAB27A | 5873 |
| RAD21 | 5885 | H63 | 113201 | SMAD4 | 4089 | ARHGAP25 | 9938 |
| CLN2 | | RAPH1 | 65059 | PIP5K1B | 8395 | IMP-3 | 10643 |
| RAD51L3 | 5892 | CCL20 | 6364 | PPP1R11 | 6992 | AZGP1 | 563 |
| psiTPTE22 | 387590 | KIAA1061 | | IFNG | 3458 | SODI | 6647 |
| DKFZp761C169 | 65056 | SNX1 | 6642 | TNFSF7 | 970 | TTID | 9499 |
| REST | 5978 | SPCX, CXorf52 | | MAPK9 | 5601 | ANAPC1 | 64682 |
| FBS1 | 64319 | DKFZp761D221 | 84251 | PLA2G5 | 5322 | NR1D1 | 9572 |
| GC20 | 10289 | SCN4B | 6330 | CYP7B1 | 9420 | TJP1 | 7082 |
| SSTR1 | 6751 | CRSP3 | 9439 | EFHA2 | 286097 | SPR | 6697 |
| ZBTB5 | 9925 | VILL | 50853 | PTHR2 | 5746 | SRD5A1 | 6715 |
| C2orf10 | 91752 | CDYL2 | 124359 | NEDD9 | 4739 | CXCL11 | 6373 |
| EMP2 | 2013 | LMNA | 4000 | VIPR2 | 7434 | HDGF | 3068 |
| GPRASP2 | 114928 | PFAAP5 | 10443 | RNF138 | 51444 | RHOD | 29984 |
| | | | | | | IGHG3, | 3502, |
| B4GALT5 | 9334 | GOLGA1 | 2800 | BPNTI | 10380 | IGHD | 3495 |
| SMC1L1 | 8243 | SSBP1 | 6742 | FLJ13611 | 80006 | IRF1 | 3659 |
| LAMC3 | 10319 | TNFRSF10D | 8793 | FLJ21657 | 64417 | GNB1 | 2782 |
| DJ1042K10.2 | | HNRPU | 3192 | MNDA | 4332 | MST1R | 4486 |
| PEX12 | 5193 | CGI-127 | | SOM | | INPP1 | 3628 |
| ATIC | 471 | CD3G | 917 | FLJ10902 | | TCRIM | 50852 |
| KCNK3 | 3777 | CANX | 821 | LIP8 | 116840 | HLA-DMB | 3109 |
| FLJ20489 | 55652 | SYNPO | 11346 | ELF4 | 2000 | CDKN2A | 1029 |
| C9orf61 | 9413 | ATPAF2 | 91647 | FLJ12700 | 79970 | HLA-F | 3134 |
| ARHGAP20 | 57569 | CGI-72 | | SLC12A5 | 57468 | XCL1 | 6375 |
| MRPL38 | 64978 | TAF6 | 6878 | PITRM1 | 10531 | HOXB7 | 3217 |
| CP110 | 9738 | NFE2L2 | 4780 | EIF2B3 | 8891 | ASPSCR1 | 79058 |
| HLA-DRB1 | 3123 | USP7 | 7874 | ASTN | 460 | SLC16A8 | 23539 |
| SUCLG1 | 8802 | CSTF1 | 1477 | LOC169611 | | PH-4 | 54681 |

(fortgesetzt)

| Gene Symbol | Entrez GeneID | Gene Symbol | Entrez GeneID | Gene Symbol | Entrez GeneID | Gene Symbol | Entrez GeneID |
|---|---|---|---|---|---|---|---|
| ZNF313 | 55905 | HPCAL1 | 3241 | DEFA1 | 1667 | PRLR | 5618 |
| TCF2 | 6928 | MARK3 | 4140 | EPHX2 | 2053 | KIRREL2 | 84063 |
| LGALS8 | 3964 | KIAA1018 | 22909 | MGC2452 | | MSP | 84000 |
| KIAA0478 | 9923 | ZFR | 51663 | PRKWNK4 | | HAO1 | 54363 |
| FKBP5 | 2289 | SRRM1 | 10250 | GLE1L | 2733 | SFXN5 | 94097 |
| EFNB1 | 1947 | GABARAPL1 | 23710 | FLJ20507 | 55654 | RSN | 6249 |
| HIPK1 | 204851 | DGKZ | 8525 | DKFZP434P211 | 29774 | ZNFN1A4 | 64375 |
| MTRF1L | 54516 | EPHA3 | 2042 | PANK1 | 53354 | TCF21 | 6943 |
| CSDA | 8531 | C3AR1 | 719 | ARG2 | 384 | RAP1A | 5906 |
| CYP2D6 | 1565 | AFG3L1 | 172 | ADCK4 | 79934 | FOSL1 | 8061 |
| KIF5B | 3799 | ZCCHC8 | 55596 | EFCBP2 | 54550 | FDFT1 | 2222 |
| LAMB1 | 3912 | DGAT2 | 84649 | GOT1 | 2805 | KIAA0089 | |
| CDX2 | 1045 | ACVR1 | 90 | SPATA7 | 55812 | CECR6 | 27439 |
| DCLRE1A | 9937 | PCNA | 5111 | NAPA | 8775 | ARHGAP21 | 57584 |
| CHGB | 1114 | IL1R2 | 7850 | SFRS5 | 6430 | LANCL2 | 55915 |
| ENO1 | 2023 | TXNRD1 | 7296 | OR4C6 | 219432 | FLJ21128 | 80153 |
| KIT | 3815 | CETN3 | 1070 | DIXDC1 | 85458 | PTK2 | 5747 |
| CD34 | 947 | PRKD3 | 23683 | ZNF532 | 55205 | FAM53C | 51307 |
| AXL | 558 | RAB7 | 7879 | LRFN5 | 145581 | SRF | 6722 |
| EPB41 | 2035 | AIM2 | 9447 | RAB31 | 11031 | FNDC5 | 252995 |
| STAT5A | 6776 | YWHAZ | 7534 | KCNJ4 | 3761 | MAEA | 10296 |
| GABRE | 2564 | PLK4 | 10733 | FLJ12287 | | MSI2 | 124540 |
| UBE2D2 | 7322 | FBN1 | 2200 | CRG-L2 | | FLJ33069 | 137835 |
| SRCAP | 10847 | CTDSPL | 10217 | BACH1 | 571 | MGC33867 | 90231 |
| PPEF1 | 5475 | TXNL | | FLJ20272 | 55622 | C9orf39 | 54875 |
| SR-A1 | 58506 | ZNF200 | 7752 | SOX9 | 6662 | C14orf138 | 79609 |
| ARF4L | 379 | CDC42BPA | 8476 | GPD2 | 2820 | FLJ20054 | 54530 |
| SLC35F1 | 222553 | STARD7 | 56910 | KIAA1724 | | RARRES1 | 5918 |
| EGR1 | 1958 | KIAA2018 | 205717 | LOC254531 | 254531 | PCDHB13 | 56123 |
| KCTD10 | 83892 | SDBCAG84 | 51614 | CCNT1 | 904 | RSU1 | 6251 |
| GC | 2638 | DKFZP566G1424 | | MLLT10 | 8028 | CDC40 | 51362 |
| CDH1 | 999 | GPR158 | 57512 | SUCLG2 | 8801 | HRPT2 | 79577 |
| SIAT10 | 10402 | NLN | 57486 | NPHP4 | 261734 | SEMA7A | 8482 |

EP 1 869 976 A1

(fortgesetzt)

| Gene Symbol | Entrez GeneID | Gene Symbol | Entrez GeneID | Gene Symbol | Entrez GeneID | Gene Symbol | Entrez GeneID |
|---|---|---|---|---|---|---|---|
| FLJ20758 | 55037 | RGN | 9104 | SOX11 | 6664 | MARCKS | 4082 |
| PEX11A | 8800 | FLJ35630 | 166379 | PNOC | 5368 | SLC35C2 | 51006 |
| UBP1 | 7342 | JMJD2C | 23081 | SYT4 | 6860 | ISL1 | 3670 |
| GLE1L | 2733 | FLJ10521 | 55160 | UBE3A | 7337 | PCDH11X | 27328 |
| C7 | 730 | ABCB8 | 11194 | DKFZp761B107 | 91050 | ENPP2 | 5168 |
| C10orf11 | 83938 | DKFZP564D166 | 26115 | SYK | 6850 | PKP2 | 5318 |
| KAB | 9859 | NRXN1 | 9378 | CRHR1 | 1394 | SV2A | 9900 |
| KIAA1644 | 85352 | LMO2 | 4005 | SPP1 | 6696 | NFASC | 23114 |
| GTF2H1 | 2965 | DKFZp564J157 | 54458 | RPS7 | 6201 | MT1F | 4494 |
| TBP | 6908 | MYOD 1 | 4654 | HRMT1L6 | 55170 | NDUFB5 | 4711 |
| KIF17 | 57576 | FLJ32731 | 138050 | COQ7 | 10229 | MGC19595 | |
| CXCR6 | 10663 | PSMC2 | 5701 | NFATC1 | 4772 | KIAA0494 | 9813 |
| ZFP161 | 7541 | F2R | 2149 | NCALD | 83988 | BCL2L13 | 23786 |
| KIFC1 | 3833 | LOC55831 | 55831 | SLC7A2 | 6542 | EIF2C1 | 26523 |
| GSTM4 | 2948 | GABPB2 | 2553 | KIAA1363 | 57552 | KCNV1 | 27012 |
| LYN | 4067 | DNAJB1 | 3337 | KIAA0543 | 23145 | KIAA0266 | |
| RXRB | 6257 | ITGA8 | 8516 | ZNF20 | 7568 | TBC1D5 | 9779 |
| YES1 | 7525 | ZNF146 | 7705 | GDF10 | 2662 | C3 | 718 |
| EPB41L2 | 2037 | HMGA1 | 3159 | HSD17B8 | 7923 | ADNP | 23394 |
| DNMT1 | 1786 | HLX1 | 3142 | FLJ11021 | 65117 | CLDN5 | 7122 |
| PTPNH11 | 5781 | P2RY5 | 10161 | EDNRB | 1910 | RFFL | 117584 |
| BBC3 | 27113 | TCF4 | 6925 | SERPINH1 | 871 | IRS1 | 3667 |
| EVPL | 2125 | K-ALPHA-1 | 10376 | ARPC5 | 10092 | CLDN11 | 5010 |
| ANXA11 | 311 | PASK | 23178 | CD86 | 942 | PKD2 | 5311 |
| DOCK8 | 81704 | PCTK3 | 5129 | GNB5 | 10681 | TDRD7 | 23424 |
| AFM | 173 | CD69 | 969 | SILV | 6490 | COL9A2 | 1298 |
| GCA | 25801 | TRPC6 | 7225 | PGF | 5228 | FAM32A | 26017 |
| PKD1L2 | 114780 | HSD17B8 | 7923 | PDCD10 | 11235 | LOC284701 | 284701 |
| EPHA5 | 2044 | MRPS18B | 28973 | PDE2A | 5138 | P0U4F1 | 5457 |
| C20orf174 | 128611 | IFNW1 | 3467 | CXCR3 | 2833 | PLEK2 | 26499 |
| SOX30 | 11063 | TP73L | 8626 | ARHGAP1 | 392 | ATF4 | 468 |
| SH3YL1 | 26751 | DSC1 | 1823 | FURIN | 5045 | TAL1 | 6886 |
| FLJ34922 | 91607 | KCNMB2 | 10242 | CDKN1A | 1026 | GABPB2 | 2553 |

| Gene Symbol | Entrez GeneID | Gene Symbol | Entrez GeneID | Gene Symbol | Entrez GeneID | Gene Symbol | Entrez GeneID |
|---|---|---|---|---|---|---|---|
| ARS2 | 51593 | TMEM7 | 83597 | EBI2 | 1880 | C2orf3 | 6936 |
| HLA-DOB | 3112 | CDC26 | 246184 | ADORA3 | 140 | MMP10 | 4319 |
| FLJ14871 | | EIF2C3 | 192669 | TFCP2L2 | 29841 | DDX11 | 1663 |
| ARID3B | 10620 | CAPNS2 | 84290 | KIAA1039 | | KLF10 | 7071 |
| RAP2A | 5911 | RAB39B | 116442 | SOX2 | 6657 | TFAP2A | 7020 |
| RUNX3 | 864 | CAMSAP1 | 157922 | FLJ32670 | | DNASE2 | 1777 |
| GPR17 | 2840 | CDC25A | 993 | DKFZp547I048 | 127254 | BAZ1B | 9031 |
| PDIR | 10954 | CAPZA2 | 830 | SCRN3 | 79634 | CAP2 | 10486 |
| CD68 | 968 | EN2 | 2020 | MAN1A2 | 10905 | PLS1 | 5357 |
| PLCG1 | 5335 | SHMT1 | 6470 | HPS4 | 89781 | CSNK1D | 1453 |
| CD1C | 911 | ATP5J | 522 | MEGF10 | 84466 | TCF12 | 6938 |
| UBD | 10537 | CNN2 | 1265 | XK | 7504 | COPS8 | 10920 |
| TAP2 | 6891 | PIK3R1 | 5295 | FLJ42986 | 389012 | APG7L | 10533 |
| AGCI | 176 | FBLN2 | 2199 | FLJ20160 | 54842 | FLJ10276 | 55108 |
| FLJ30707 | 220108 | BRAF | 673 | C10orf38 | 221061 | BBS4 | 585 |
| FLJ33215 | | RBL2 | 5934 | IMPDH1 | 3614 | HSPC196 | 51524 |
| ZNF473 | 25888 | LMNB1 | 4001 | PCF11 | 51585 | THOP1 | 7064 |
| KIAA1212 | 55704 | IL6ST | 3572 | MYEF2 | 50804 | SCARB1 | 949 |
| NPL | 80896 | SMAD6 | 4091 | TUSC5 | 286753 | KIAA1052 | |
| EEF1B2. | 1933 | CXCL6 | 6372 | DKFZp434C184 | 399474 | LTA4H | 4048 |
| ENTPD1 | 953 | CCRL2 | 9034 | AOC2 | 314 | LPAL2 | 80350 |
| FAM13A1 | 10144 | HLA-DPA1 | 3113 | MAPK14 | 1432 | PCDH21 | 92211 |
| DNCI2 | 1781 | CSNK1D | 1453 | SLC14A1 | 6563 | PPFIA3 | 8541 |
| LMCD1 | 29995 | KIAA0592 | 253725 | UBAP2L | 9898 | SNAP91 | 9892 |
| RHOBTB2 | 23221 | ZNF289 | 84364 | MRPL36 | 64979 | GABRA5 | 2558 |
| LAMA2 | 3908 | NEIL1 | 79661 | SULT1A1 | 6817 | KIAA0553 | 23131 |
| STXBP1 | 6812 | SMG1 | 23049 | SPARC | 6678 | SBP2 | |
| MYO5B | 4645 | Rab11-FIP2 | | TGFBR3 | 7049 | OCIA | |
| CS | 1431 | C9orf97 | 158427 | E2F6 | 1876 | HTGN29 | |
| POLG | 5428 | SETMAR | 6419 | CCNK | 8812 | LAMC3 | 10319 |
| CYP3A7 | 1551 | OR52K3P | 390035 | GNA14 | 9630 | SLC1A3 | 6507 |
| IFRD1 | 3475 | CRNKL 1 | 51340 | ATF3 | 467 | FLJ23834 | 222256 |

| Gene Symbol | Entrez GeneID | Gene Symbol | Entrez GeneID | Gene Symbol | Entrez GeneID | Gene Symbol | Entrez GeneID |
|---|---|---|---|---|---|---|---|
| CCL3 | 6348 | C9orf5 | 23731 | ACOX1 | 51 | AF1Q | 10962 |
| DLG3 | 1741 | FLJ20014 | 54785 | KHSRP | 8570 | MTMR6 | 9107 |
| LMANIL | 79748 | NCB5OR | 51167 | TGFBR2 | 7048 | ATP4A | 495 |
| CHD4 | 1108 | ZAK | 51776 | DADI | 1603 | JUP | 3728 |
| SLC9A8 | 23315 | SELL | 6402 | DGKA | 1606 | STX1B2 | 112755 |
| KPNA1 | 3836 | BCLAF1 | 9774 | IFNAR1 | 3454 | TNKS1BP1 | 85456 |
| SORCS1 | 114815 | ARCN1 | 372 | ATM | 472 | M-RIP | 23164 |
| LOC83690 | 83690 | TGFBR3 | 7049 | TP53 | 7157 | NARG1 | 80155 |
| TCBA1 | 154215 | TFF3 | 7033 | NOL3 | 8996 | SOX5 | 6660 |
| FNTA | 2339 | EGFL6 | 25975 | PRKAB1 | 5564 | DDX58 | 23586 |
| IRA1 | | WAC | 51322 | NYD-SP21 | 84689 | CNTN1 | 1272 |
| DHX36 | 170506 | MGC33302 | 256471 | AGPAT3 | 56894 | BBS1 | 582 |
| RNF111 | 54778 | ZNF513 | 130557 | FLJ36980 | 286032 | TCP10L | 140290 |
| N4BP3 | 23138 | MCM6 | 4175 | C14orf172 | 115708 | VAMP1 | 6843 |
| SCG3 | 29106 | TTLL3 | 26140 | | | FGF7 | 2252 |
| PSMD2 | 5708 | SPTLC2 | 9517 | DKFZp434E1822, | FLJ20574 | TP53BP2 | 7159 |
| KPNB1 | 3837 | MTVR1 | 23625 | SIL1 | 64374 | TPST2 | 8459 |
| PLDN | 26258 | PPEF1 | 5475 | DERP6 | 23587 | PDGFA | 5154 |
| CERK | 64781 | KIAA1102 | 22998 | SRPUL | | PRIM1 | 5557 |
| NFIA | 4774 | PCCB | 5096 | TCF3 | 6929 | GBP2 | 2634 |
| TOPBP1 | 11073 | PFDN1 | 5201 | VRK1 | 7443 | CCL14 | 6358 |
| TF | 7018 | PTD004 | 29789 | SLC26A2 | 1836 | LAMA4 | 3910 |
| FLJ20719 | 55672 | MN1 | 4330 | POSTN | 10631 | RARB | 5915 |
| HEL308 | 113510 | TK2 | 7084 | GIT2 | 9815 | CD1A | 909 |
| CAPN2 | 824 | IGFBP6 | 3489 | TULP4 | 56995 | PBXIP1 | 57326 |
| CXCL1 | 2919 | NEDD4 | 4734 | CDC42BPB | 9578 | DFFA | 1676 |
| NRP1 | 8829 | APEX1 | 328 | NAG | 51594 | KIAA1747 | 57795 |
| DFFB | 1677 | SIAH1 | 6477 | EIF2S2 | 8894 | C6orf205 | 394263 |
| MICA | 4276 | PLEK | 5341 | FLJ12700 | 79970 | RAP2A | 5911 |
| TRIB2 | 28951 | SITPEC | 51295 | BMP2 | 650 | KIAA 1171 | 57465 |
| ZBTB10 | 65986 | RBBP5 | 5929 | NRL | 4901 | ERCC5 | 2073 |
| JMJD2B | 23030 | ZBTB17 | 7709 | ACCN1 | 40 | PTPRF | 5792 |
| UBE2A | 7319 | ITGB5 | 3693 | IL16 | 3603 | COL2A1 | 1280 |

| Gene Symbol | Entrez GeneID | Gene Symbol | Entrez GeneID | Gene Symbol | Entrez GeneID | Gene Symbol | Entrez GeneID |
|---|---|---|---|---|---|---|---|
| BAIAP1 | 9223 | TNFSF4 | 7292 | SPTAN1 | 6709 | EPAS1 | 2034 |
| RPL34 | 6164 | BAT1 | 7919 | RAB27B | 5874 | SNAPC1 | 6617 |
| GPR24 | 2847 | ACVR2B UMP- | 93 | CYR61 | 3491 | BMX | 660 |
| ANKRD11 | 29123 | CMPK | 51727 | DNAJC10 | 54431 | PPP2R5A | 5525 |
| L3MBTL | 26013 | KIAA1069 | | KLHL9 | 55958 | IL13 | 3596 |
| IBTK | 25998 | FLJ20522 | | CABIN1 | 23523 | TLR5 | 7100 |
| CRK7 | 51755 | GIF | 2694 | MAPKAPK5 | 8550 | PMS1 | 5378 |
| RAB21 | 23011 | TRIM33 | 51592 | PIP5K1C | 23396 | GNB2L1 | 10399 |
| TWSG1 | 57045 | FLJ20445 | | PAEP | 5047 | CAPN5 | 726 |
| IDE | 3416 | LOC 133957 | 133957 | NFKBIE | 4794 | HSPA1L | 3305 |
| ACVR1B | 91 | CARD10 | 29775 | HLA-DOB | 3112 | C3AR1 | 719 |
| FBXL2 | 25827 | PEG10 | 23089 | MAP2K2 | 5605 | IL5RA | 3568 |
| TTC17 | 55761 | RRAGA | 10670 | STK17A | 9263 | GSTO1 | 9446 |
| VIPR1 | 7433 | CDKN1B | 1027 | ADAT1 | 23536 | AGER | 177 |
| FUK | 197258 | ASNS | 440 | EIF2S3 | 1968 | MKNK1 | 8569 |
| AHSG | 197 | ANAPC5 | 51433 | FLJ20097 | 55610 | DKFZP434K0427 | |
| ZNF297B | 23099 | RNF3 | | CIR | 9541 | HYPM | |
| C2orf22 | 130814 | COL12A1 | 1303 | HSXIAPAF1 | 54739 | RNF14 | 9604 |
| SST | 6750 | FLJ38991 | 285521 | NDFIP2 | 54602 | ITCH | 83737 |
| CYB5-M | 80777 | TRAP240 | | DNASE1L1 | 1774 | MBNL1 | 4154 |
| RWDD2 | 112611 | RAB11-FIP4 | | FLJ14281 | 79982 | GRWD1 | 83743 |
| VSNL1 | 7447 | ARFRP1 | 10139 | TBX3 | 6926 | MGC16202 | |
| NOS3 | 4846 | TMP21 | 10972 | ARPC2 | 10109 | STARD9 | 57519 |
| MFNG | 4242 | BAIAP3 | 8938 | RNF139 | 11236 | C1orf25 | 81627 |
| COL5A2 | 1290 | SMYD2 | 56950 | NEK2 | 4751 | PEPP2 | |
| MT1J | 4498 | FEN1 | 2237 | FLJ32549 | 144577 | LOC90410 | 90410 |
| NIN | 51199 | CIT | 11113 | PDZK3 | 23037 | FBXO22 | 26263 |
| HOXC6 | 3223 | FLJ11323 | | TRIM11 | 81559 | PDIR | 1 10954 |
| LECT2 | 3950 | FLJ12517 | 65094 | C9orf81 | 84131 | C1D | 1 10438 |
| C9orf123 | 90871 | EIF3S6 | 3646 | ZNF336 | 64412 | MGC13186 | 8 84284 |
| ALS2CR12 | 130540 | SLC19A2 | 10560 | SART3 | 9733 | FLJ23221 | 7 79630 |
| DAXX | 1616 | FACL6 | | PLEKHA1 | 59338 | TFDP2 | 7 7029 |
| GRWD1 | 83743 | ADCY7 | 113 | PCDHA5 | | SEPP1 | 6 5414 |

(fortgesetzt)

| Gene Symbol | Entrez GeneID | Gene Symbol | Entrez GeneID | Gene Symbol | Entrez GeneID | Gene Symbol | Entrez GeneID |
|---|---|---|---|---|---|---|---|
| ORC3L | 23595 | GPR23 | 2846 | CCNK | 8812 | CENTD1 | 1 116984 |
| SLAMF7 | 57823 | CCND2 | 894 | GAF1 | | SFMBT1 | 5 51460 |
| TIMP2 | 7077 | PPP1R16B | 26051 | ARL10C | 55207 | FBXW11 | 23291 |
| CXCL12 | 6387 | TAL1 | 6886 | GRIP2 | 80852 | C20orf104 | |
| HRAS | 3265 | EHHADH | 1962 | GSTM5 | 2949 | KIAA1354 | |
| MT3 | 4504 | HMGA2 | 8091 | MGC11061 | 84272 | FLJ14146 | 7 79762 |
| FCER2 | 2208 | COL15A1 | 1306 | CA10 | 56934 | GLO1 | 2 2739 |
| BHMT | 635 | SLC22A3 | 6581 | FBXO21 | 23014 | FACL4 | |
| SLC30A9 | 10463 | NETO2 | 81831 | GRAP2 | 9402 | USP33 | 23032 |
| VAMP4 | 8674 | VMP | 140767 | PLK2 | 10769 | PPM1H | 57460 |
| PLXNA1 | 5361 | C6orf33 | 85315 | MASA | 58478 | TFDP1 | 7027 |
| UBE2G2 | 7327 | LOC152185 | 152185 | MOBKL1A | 92597 | TAGLN | 6876 |
| COL4A6 | 1288 | C9orf10 | 23196 | ATP11C | 286410 | RAD51L1 | 5890 |
| MR-1 | 25953 | FLJ20637 | | FLJ32731 | 138050 | F2 | 2147 |
| PP35 | 11062 | ERAL1 | 26284 | ZNF10 | 7556 | TA-LRRP | 23507 |
| LOC90113 | 90113 | GSDML | 55876 | CLCNKA | 1187 | ACTA1 | 58 |
| CYP2C9 | 1559 | FLJ10349 | 54707 | FLJ21865 | 64772 | AOAH | 313 |
| TLK2 | 11011 | RAD18 | 56852 | C21orf107 | | STAT4 | 6775 |
| E2F1 | 1869 | YWHAQ | 10971 | SLIC1 | 124460 | CEACAM1 | 634 |
| HIST2H2BE | 8349 | NAP1L1 | 4673 | KLF12 | 11278 | NINJ1 | 4814 |
| PPP2R1B | 5519 | MLLT2 | 4299 | PITX2 | 5308 | CASP1 | 834 |
| BHMT2 | 23743 | FEZ1 | 9638 | IL28RA | 163702 | PIK4CB | 5298 |
| PNRC1 | 10957 | CPE | 1363 | PLEC 1 | 5339 | PAX9 | 5083 |
| RRAD | 6236 | SREBF2 | 6721 | EVA1 | 10205 | BMP4 | 652 |
| ECE1 | 1889 | NDUFB10 | 4716 | CCL18 | 6362 | TRAF3 | 7187 |
| LAIR1 | 3903 | OCA2 | 4948 | KIAA1853 | 84530 | NUDT6 | 11162 |
| SEPT6 | 23157 | ADCY8 | 114 | FTO | 79068 | VRK2 | 7444 |
| RAG1 | 5896 | SNAPC3 | 6619 | C14orf100 | 51528 | DIRC1 | 116093 |
| AK3 | 205 | CLIPR-59 | 25999 | SURF4 | 6836 | GBP5 | 115362 |
| CCT7 | 10574 | C14orf125 | 25938 | LSM3 | 27258 | PRKAA1 | 5562 |
| IL2RB | 3560 | PAM | 5066 | HSPC111 | 51491 | LOC115749 | 115749 |
| PIP5K1A | 8394 | SF3B2 | 10992 | GPATC4 | 54865 | BOMB | 80014 |
| ARID4A | 5926 | FLJ21439 | 80208 | MRPS26 | 64949 | FLJ20626 | 55663 |

| Gene Symbol | Entrez GeneID | Gene Symbol | Entrez GeneID | Gene Symbol | Entrez GeneID | Gene Symbol | Entrez GeneID |
|---|---|---|---|---|---|---|---|
| SAFB | 6294 | SCG3 | 29106 | C21orf106 | 23181 | MUC15 | 143662 |
| ACVR1B | 91 | PHLDA2 | 7262 | OSTMI | 28962 | BACH1 | 571 |
| LSAMP | 4045 | NEFH | 4744 | C1orf8 | 9528 | SUPT5H | 6829 |
| HOXC8 | 3224 | FLJ14154 | 79903 | RAP1B | 5908 | C21orf107 | |
| CCRK | 23552 | ATBF1 | 463 | FBXL6 | 26233 | SVIL | 6840 |
| GPR105 | | PCNT2 | 5116 | GABRB3 | 2562 | PPP3CB | 5532 |
| HLXB9 | 3110 | PKNOX1 | 5316 | WASF1 | 8936 | C13orf1 | 57213 |
| METTL4 | 64863 | GTF2B | 2959 | DKFZP547E1010 | 26097 | OAT | 4942 |
| ANUBL1 | 93550 | PTGS1 | 5742 | YWHAE | 7531 | FLJ21977 | |
| STAU | 6780 | UGT2B7 | 7364 | SOAT1 | 6646 | PRKWNK1 | |
| FLJ23514 | 60494 | NEFL | 4747 | MAGEA10 | 4109 | ZNF297 | 9278 |
| ZFX | 7543 | ZNF174 | 7727 | SEC24D | 9871 | ADHFE1 | 137872 |
| FXYD5 | 53827 | ZNF200 | 7752 | FLJ20152 | 54463 | RPC62 | |
| FLJ20203 | 54856 | KAI1 | 3732 | EFNB3 | 1949 | SCARF1 | 8578 |
| PLAC2 | 257000 | KIAA0033 | 440026 | HEY1 | 23462 | SC4MOL | 6307 |
| FLJ14166 | 79616 | SP140 | 11262 | MOCS2 | 4338 | KATNB1 | 10300 |
| TRIM10 | 10107 | LTBP1 | 4052 | TIMM22 | 29928 | AQP4 | 361 |
| CSL4 | | XRCC5 | 7520 | SOD3 | 6649 | NEFL | 4747 |
| LOC153222 | 153222 | AKT1 | 207 | TRPV1 | 7442 | FLJ21195 | |
| LOC137392 | 137392 | DUSP3 | 1845 | RPL7 | 6129 | MGC23937 | 139596 |
| HRB2 | 11103 | PPP3R1 | 5534 | PIPOX | 51268 | FLJ31978 | 144423 |
| KPNA3 | 3839 | BAKI | 578 | GDPD2 | 54857 | MFTC | 81034 |
| CAPG | 822 | RAVER1 | 125950 | RBBP6 | 5930 | DJ473B4 | |
| MSRA | 4482 | IL9R | 3581 | SOX6 | 55553 | PPFIA1 | 8500 |
| GSTT2 | 2953 | SP100 | 6672 | GTF3C3 | 9330 | ARVCF | 421 |
| ICA1 | 3382 | RNPC4 | | PGM2L1 | 283209 | DGCR8 | 54487 |
| PTPRZ1 | 5803 | PPP2R2B | 5521 | DNM1L | 10059 | GATA2 | 2624 |
| BRRN1 | 23397 | TOMIL2 | 146691 | C11orf1 | 64776 | MUC15 | 143662 |
| WNT7A | 7476 | KIF21A | 55605 | GCN5L2 | 2648 | LOC168850 | 168850 |
| SHMT1 | 6470 | DDR2 | 4921 | SPTAN1 | 6709 | LNPEP | 4012 |
| TERF2 | 7014 | PPP1R13B | 23368 | BTG2 | 7832 | BPHL | 670 |
| TGFB3 | 7043 | GGPS 1 | 9453 | KIAA1337 | 57540 | GNG10 | 2790 |
| TP53BP2 | 7159 | SYNGR2 | 9144 | ARMC7 | 79637 | LOC133619 | 133619 |

EP 1 869 976 A1

| Gene Symbol | Entrez GeneID | Gene Symbol | Entrez GeneID | Gene Symbol | Entrez GeneID | Gene Symbol | Entrez GeneID |
|---|---|---|---|---|---|---|---|
| RHO | 6010 | TBC1D1 | 23216 | RTN4 | 57142 | KCNK1 | 3775 |
| RAB2 | 5862 | UPP1 | 7378 | TFB2M | 64216 | NUP214 | 8021 |
| QSCN6 | 5768 | PQBP1 | 10084 | RASGEF1A | 221002 | GNG2 | 54331 |
| KAL1 | 3730 | CT120 | 79850 | FGD3 | 89846 | C10orf26 | 54838 |
| BMPR2 | 659 | DHRS4 | 10901 | HP1-BP74 | 50809 | SIAT9 | 8869 |
| IRF3 | 3661 | SENP6 | 26054 | ADORA3 | 140 | WINS1 | 55180 |
| CTPS | 1503 | JMJD2A | 9682 | MEN1 | 4221 | DDX18 | 8886 |
| RPS16 | 6217 | CASC2 | 255082 | RPS11 | 6205 | PP | 5464 |
| BSG | 682 | KLRA1 | 10748 | UGT2B4 | 7363 | F8 | 2157 |
| AGTR1 | 185 | IGSF1 | 3547 | AP2B1 | 163 | UGCGL2 | 55757 |
| IL1RAP | 3556 | COX7A2 | 1347 | MGC71993 | 440400 | TNFRSF7 | 939 |
| DUSP1 | 1843 | CECR1 | 51816 | POLR3F | 10621 | CGI-01 | |
| NOS2A | 4843 | C5orf13 | 9315 | MuLK | 55750 | PXR1 | |
| GADD45B | 4616 | CDK2AP1 | 8099 | SLC13A5 | 284111 | FLJ37953 | 129450 |
| BLM | 641 | DDX11 | 1663 | HOXA9 | 3205 | ACP1 | 52 |
| PKN2 | 5586 | UNG | 7374 | EGFR | 1956 | HT021 | |
| PHKB | 5257 | ODC1 | 4953 | HPRT1 | 3251 | EDG2 | 1902 |
| MI-ER1 | 57708 | RAD21 | 5885 | PSG4 | 5672 | SLC7A1 | 6541 |
| FLJ25770 | 339965 | KIAA0265 | 23008 | SAS | 6302 | BAZ1B | 9031 |
| FLJ11752 | 92344 | LILRA3 | 11026 | MYOM1 | 8736 | BHLHB3 | 79365 |
| HARC | | SFRP1 | 6422 | KTN1 | 3895 | FBXO7 | 25793 |
| FAM11B | 79134 | IL18R1 | 8809 | EIF2B1 | 1967 | LCP2 | 3937 |
| LIG4 | 3981 | INPP5D | 3635 | SH3BP2 | 6452 | EFCBP1 | 64168 |
| SUHW2 | 140883 | DOCK1 | 1793 | MGLL | 11343 | NLGN2 | 57555 |
| KIF21A | 55605 | PRF1 | 5551 | STK4 | 6789 | CCL20 | 6364 |
| HCAP-G | 64151 | HLA-DPB1 | 3115 | TTTF1 | 7080 | WSB1 | 26118 |
| CGI-141 | 51026 | INHBA | 3624 | MGC3040 | 66000 | UBE2V1 | 7335 |
| DNCI1 | 1780 | HLA-DQA1 | 3117 | MGST1 | 4257 | SLC4A4 | 8671 |
| STC1 | 6781 | PIK3R2 | 5296 | E2F5 | 1875 | LOC257106 | 257106 |
| COX7A2L | 9167 | HSMPP8 | 54737 | CFHL1 | 3078 | TBC1D15 | 64786 |
| ANXA7 | 310 | LIFR | 3977 | CAPN1 | 823 | LMO4 | 8543 |

| Gene Symbol | Entrez GeneID | Gene Symbol | Entrez GeneID | Gene Symbol | Entrez GeneID | Gene Symbol | Entrez GeneID |
|---|---|---|---|---|---|---|---|
| MTIF2 | 4528 | PASD1 | 139135 | PPP1R10 | 5514 | BLMH | 642 |
| BACE | | FLJ10408 | 55138 | TIMP1 | 7076 | C3F | 10162 |
| C6orf72 | 116254 | SPOCK | 6695 | FLOT1 | 10211 | RUNX1 | 861 |
| PSARL | 55486 | ROBO1 | 6091 | STK39 | 27347 | NR2C1 | 7181 |
| LEAP-2 | 116842 | MGC4701 | | KIAA1648 | 284900 | PRPF4B | 8899 |
| SEC13L | | BRDG1 | 26228 | GGCX | 2677 | LAMB3 | 3914 |
| PPM1E | 22843 | ATP8B4 | 79895 | NR3C1 | 2908 | ATIC | 471 |
| RWDD1 | 51389 | KIAA1336 | | FLJ20331 | 55631 | CD79A | 973 |
| SEC61A1 | 29927 | MAP3K1 | 4214 | ATF7 | 11016 | CYP1A1 | 1543 |
| TIMM50 | 92609 | SPOCK | 6695 | EVA1 | 10205 | SLAMF1 | 6504 |
| KIAA0720 | 57449 | MAPK10 | 5602 | KIAA0962 | 23341 | CD1D | 912 |
| SMAD7 | 4092 | ORMDL2 | 29095 | NBS1 | 4683 | SOX11 | 6664 |
| CCL16 | 6360 | CTNNA2 | 1496 | RGS4 | 5999 | HINT2 | 84681 |
| HSPB1 | 3315 | SPFH1 | 10613 | KIAA0523 | 23302 | TBK1 | 29110 |
| ACE | 1636 | PTDSR | 23210 | STK16 | 8576 | KCNC1 | 3746 |
| C8G | 733 | COL11A2 | 1302 | AKIP | 54998 | KIAA1737 | 85457 |
| MAP4K3 | 8491 | PFDN5 | 5204 | COPG | 22820 | TBL1X | 6907 |
| SE57-1 | 80323 | BTF3 | 689 | THAP10 | 56906 | HXMA | 348158 |
| TAS2R14 | 50840 | AHR | 196 | SRD5A2 | 6716 | CDH16 | 1014 |
| FLJ21369 | 79860 | RECQL | 5965 | NT5C2 | 22978 | BIRC3 | 330 |
| MCM10 | 55388 | AKR1B10 | 57016 | PLG | 5340 | C20orf77 | 58490 |
| DKFZp547E052 | 84236 | SKIIP | 22938 | CP | 1356 | COPS6 | 10980 |
| GDEP | 118425 | CCL22 | 6367 | GAP43 | 2596 | GRIK1 | 2897 |
| SASH1 | 23328 | THBD | 7056 | BARD1 | 580 | HCNGP | 29115 |
| DACH2 | 117154 | SHB | 6461 | RAB8A | 4218 | GCLM | 2730 |
| ABCD3 | 5825 | LY64 | 4064 | ZNFN1A1 | 10320 | FUBP1 | 8880 |
| TIAM2 | 26230 | NTRK2 | 4915 | SELP | 6403 | TSN | 7247 |
| TM6SF1 | 53346 | PTPN1 | 5770 | TFAP2C | 7022 | RAD51C | 5889 |
| AHI1 | 54806 | CD6 | 923 | FRS3 | 10817 | BENE | 7851 |
| HOXC6 | 3223 | CASP8 | 841 | ITGAL | 3683 | RPL5 | 6125 |
| ZNF 10 | 7556 | ZNF148 | 7707 | TNFSF11 | 8600 | CD24 | 934 |
| PRO0149 | 29035 | SNX10 | 29887 | PAK2 | 5062 | NRAS | 4893 |
| VCL | 7414 | FLJ33860 | 284756 | CNOT8 | 9337 | PIP | 5304 |

(fortgesetzt)

| Gene Symbol | Entrez GeneID | Gene Symbol | Entrez GeneID | Gene Symbol | Entrez GeneID | Gene Symbol | Entrez GeneID |
|---|---|---|---|---|---|---|---|
| LOC112476 | 112476 | TIPARP | 25976 | CD96 . | 10225 | PTPRM | 5797 |
| LOC90806 | 90806 | PHF20L1 | 51105 | BAT2 | 7916 | CD40 | 958 |
| B3GALT3 | 8706 | BCKDHA | 593 | BAI1 | 575 | RBBP7 | 5931 |
| DKFZp761B1514 | 84248 | RDH-E2 | | CTSD | 1509 | CTGF | 1490 |
| CGI-41 | 51093 | ATP50 | 539 | FLJ36878 | 284114 | CEACAM8 | 1088 |
| THRAP2 | 23389 | PPFIBP1 | 8496 | MI-ER1 | 57708 | ITGA7 | 3679 |
| PPP2CA | 5515 | OSBPL3 | 26031 | DKFZP547N043 | 83932 | PFTK1 | 5218 |
| DLG2 | 1740 | FLJ22494 | 79873 | PTRF | 284119 | EIF4G1 | 1981 |
| CPLX2 | 10814 | MAP3K10 | 4294 | LRIG1 | 26018 | LOC153222 | 153222 |
| RBM4 | 5936 | CYP2J2 | 1573 | MGC24039 | 160518 | KCNA4 | 3739 |
| KCNF1 | 3754 | LOC 128344 | 128344 | FLJ21820 | 60526 | SLCO5A1 | 81796 |
| C22orf4 | | ATPAF1 | 64756 | HIBADH | 11112 | FLJ39821 | |
| PTN | 5764 | G2 | 25758 | XIP1 | | SLC35F1 | 222553 |
| ZNF140 | 7699 | HAT1 | 8520 | AP3B2 | 8120 | FLJ13057 | |
| LOC202451 | | FBLN5 | 10516 | GEM | 2669 | GLCE | 26035 |
| PTPRO | 5800 | QKI | 9444 | RPS6KA5 | 9252 | LOC51066 | 51066 |
| LOC162427 | 162427 | MGC21416 | 286451 | SUPT6H | 6830 | KIAA0460 | 23248 |
| ZNF216 | | SASH1 | 23328 | RAI16 | 64760 | KIFAP3 | 22920 |
| PCGF3 | 10336 | HERPUD1 | 9709 | RARS | 5917 | BCLP | 113452 |
| WBSCR17 | 64409 | NFE2L3 | 9603 | ARK5 | 9891 | ZNF117 | 7670 |
| C10orf84 | 63877 | SNTAI | 6640 | NOPE | 57722 | CD58 | 965 |
| FN3KRP | 79672 | SIAHBPI | 22827 | DKFZp434L142 | 51313 | ZNF180 | 7733 |
| BSCL2 | 26580 | DKFZp761G01122 | | PTPRE | 5791 | NDUFC1 | 4717 |
| INSL3 | 3640 | SH3MD3 | | SNX1 | 6642 | ARL3 | 403 |
| PPP1R3F | 89801 | FLJ20071 | | CROT | 54677 | KIAA0052 | 23517 |
| LONP | 83752 | HSU79275 | 27105 | NR4A2 | 4929 | PTPRE | 5791 |
| PDLIM5 | 10611 | GATA3 | 2625 | CXorf50 | 203429 | M6PR | 4074 |
| FABP1 | 2168 | GULP1 | 51454 | CORO1C | 23603 | SLCIA2 | 6506 |
| TRB2 | | KIAA1324 | 57535 | GSTA3 | 2940 | ETV5 | 2119 |
| LIG1 | 3978 | GPR34 | 2857 | COL4A4 | 1286 | CYP26A1 | 1592 |
| HSPC155 | | LOC284462 | | ACY1 | 95 | SLC9A6 | 10479 |
| SYNGR1 | 9145 | TULP4 | 56995 | SPAM1 | 6677 | ARPC4 | 10093 |
| APG7L | 10533 | NARG1 | 80155 | EDG1 | 1901 | DKFZP566A11524 | |

31

| Gene Symbol | Entrez GeneID | Gene Symbol | Entrez GeneID | Gene Symbol | Entrez GeneID | Gene Symbol | Entrez GeneID |
|---|---|---|---|---|---|---|---|
| DC12 | 56941 | PPM1A | 5494 | TEC | 7006 | ATP6V1A | 523 |
| NAPB | 63908 | FLJ31614 | | GPIBA | 2811 | COIL | 8161 |
| EP400 | 57634 | GLCCI1 | 113263 | TFRC | 7037 | FLJ31438 | 130162 |
| BRPF1 | 7862 | SBLF | | IL12RB2 | 3595 | STIM2 | 57620 |
| PEX3 | 8504 | PITPN | | SF3B1 | 23451 | VPS37C | 55048 |
| SLITRK3 | 22865 | DKFZP434H132 | 56905 | CSNK1G3 | 1456 | SLC12A5 | 57468 |
| ERG | 2078 | FCGR3A | 2214 | GALNAC4S-6ST | 51363 | KDR | 3791 |
| HSPB2 | 3316 | HSPA9B | 3313 | HLA-E | 3133 | DIRAS2 | 54769 |
| GDI1 | 2664 | LBR | 3930 | TNFRSF9 | 3604 | C6orf134 | 79969 |
| CNDP1 | 84735 | KIAA0650 | 23347 | BAT3 | 7917 | BUB3 | 9184 |
| CPVL | 54504 | PLAUR | 5329 | GRB10 | 2887 | RIN2 | 54453 |
| DAO | 1610 | HTGN29 | | DAB2 | 1601 | IGFBP3 | 3486 |
| DBT | 1629 | CDC25A | 993 | DFFA | 1676 | HAX1 | 10456 |
| HADH2 | 3028 | ILF3 | 3609 | FLJ12681 | 64788 | 2'-PDE | |
| HSPCB | 3326 | KIAA1991 | 254225 | CPT1A | 1374 | MGC39827 | 160777 |
| FLJ20758 | 55037 | CAMK2B | 816 | VGLL1 | 51442 | TRPS1 | 7227 |
| GTPBP4 | 23560 | ARHB | | FLJ14009 | | ESRRBL1 | 55081 |
| DCN | 1634 | ANKRD17 | 26057 | C12orf2 | 11228 | KLAA1727 | 85462 |
| MAP4K5 | 11183 | JMJD2B | 23030 | LOC284058 | 284058 | NYREN18 | 51667 |
| EFNA4 | 1945 | GCC1 | 79571 | CD86 | 942 | SMARCA3 | 6596 |
| RALA | 5898 | RAB28 | 9364 | DBC-1 | | FJX1 | 24147 |
| GPR4 | 2828 | B3GALT3 | 8706 | TA-LRRP | 23507 | MI-ER1 | 57708 |
| PSTPIP1 | 9051 | TPST1 | 8460 | UBXD4 | 165324 | MBIP | 51562 |
| SOCS2 | 8835 | PSMA1 | 5682 | C21orf91 | 54149 | LOC92912 | 92912 |
| CP | 1356 | ANK3 | 288 | TRIM23 | 373 | SEMA6A | 57556 |
| SELPLG | 6404 | SMYD4 | 114826 | SCAMP1 | 9522 | SERPINF1 | 5176 |
| CAV2 | 858 | RAD23B | 5887 | DKFZP434L0117 | 64793 | PLK4 | 10733 |
| SYNCOILIN | 81493 | L3MBTL3 | 84456 | DEF6 | 50619 | IFIT5 | 24138 |
| ATP9A | 10079 | ALOX5 | 240 | UBA2 | 10054 | CYP2C9 | 1559 |
| NOS3 | 4846 | AFAP | 60312 | ARHGAP10 | 79658 | CD48 | 962 |
| SLPI | 6590 | SULT1E1 | 6783 | SMARCE1 | 6605 | YWHAH | 7533 |
| BAT8 | 10919 | PLA2G1B | 5319 | LOC114659 | 114659 | C9 | 735 |
| GFRA3 | 2676 | RPS15A | 6210 | DOCK10 | 55619 | CSF2RA | 1438 |

| Gene Symbol | Entrez GeneID | Gene Symbol | Entrez GeneID | Gene Symbol | Entrez GeneID | Gene Symbol | Entrez GeneID |
|---|---|---|---|---|---|---|---|
| GTSE1 | 51512 | POLB | 5423 | PPARBP | 5469 | T1AM1 | 7074 |
| CASK | 8573 | MRPL9 | 65005 | CGI-07 | 51068 | TRAP1 | 10131 |
| PLAC2 | 257000 | SHCBP1 | 79801 | ZNF16 | 7564 | ICAM1 | 3383 |
| FLJ12735 | 79915 | FGF2 | 2247 | SLIT1 | 6585 | PTN | 5764 |
| MAP4K4 | 9448 | DKFZp761P1010 | | MGC45491 | 221416 | ZAP70 | 7535 |
| P2RY2 | 5029 | FPRL1 | 358 | ZNF473 | 25888 | AREG | 374 |
| NR1D2 | 9975 | PTPN21 | 11099 | PLUNC | 51297 | BF | 629 |
| TNFSF4 | 7292 | C14orf11 | 55837 | FLJ10252 | | BRD2 | 6046 |
| ZNF398 | 57541 | SALL2 | 6297 | ANKRD12 | 23253 | EPHA3 | 2042 |
| DHX29 | 54505 | NCOR2 | 9612 | RAB22A | 57403 | DYRK3 | 8444 |
| FLJ39441 | 144108 | TTC3 | 7267 | CD2AP | 23607 | C18B11 | |
| DKFZp586G0123 | | CD8B1 | 926 | ALOX5AP | 241 | SLC30A5 | 64924 |
| MGC33214 | 153396 | CR1L | 1379 | COX4I1 | 1327 | SEC5L1 | 55770 |
| MGC39518 | 285172 | HECA | 51696 | ZNF482 | 10773 | KIAA1233 | |
| ZNF148 | 7707 | FGL1 | 2267 | M96 | 22823 | KCNK2 | 3776 |
| SAMD6 | 203286 | TBP | 6908 | DNCI2 | 1781 | KLHL3 | 26249 |
| ANK3 | 288 | SUPT16H | 11198 | KIAA0830 | 23052 | MAOA | 4128 |
| BCL3 | 602 | VDRIP | | NELL2 | 4753 | GNG12 | 55970 |
| KIAA0582 | 23177 | FLJ13110 | | ECE2 | 9718 | TTC7L1 | |
| ATP6V1C1 | 528 | PPP1CA | 5499 | SET | 6418 | CPLX1 | 10815 |
| C21orf25 | 25966 | GDAP1L1 | 78997 | ZNF406 | 57623 | KRT23 | 25984 |
| PDXK | 8566 | SYT1 | 6857 | EIF2B3 | 8891 | TPM1 | 7168 |
| C20orf177 | 63939 | DICER1 | 23405 | KEAP1 | 9817 | TTC7 | |
| ZNF511 | 118472 | SCN2B | 6327 | OAZIN | 51582 | KCTD14 | 65987 |
| COMMD10 | 51397 | PGM2L1 | 283209 | SEC31L2 | 25956 | FLJ36748 | 134265 |
| RFX5 | 5993 | PITRM1 | 10531 | SP2 | 6668 | FAM16AX | |
| NAP1L3 | 4675 | FBLN1 | 2192 | GTF3C4 | 9329 | ETEA | 23197 |
| STK38 | 11329 | CKAP2 | 26586 | AIP1 | 9863 | FURIN | 5045 |
| RAB5A | 5868 | SLC35A2 | 7355 | C16orf34 | 90861 | COX6C | 1345 |
| FLJ21908 | 79657 | NFE2L1 | 4779 | PTPRT | 11122 | FLJ10006 | 55677 |
| CNAP1 | 9918 | HLA-DPA1 | 3113 | COMMD7 | 149951 | IFNAR2 | 3455 |
| UBCE71P5 | | NUP37 | 79023 | KIAA1582 | | SPRED2 | 200734 |
| ZNF174 | 7727 | PPARA | 5465 | NY-REN-41 | 91057 | MGC26885 | 124044 |

| Gene Symbol | Entrez GeneID | Gene Symbol | Entrez GeneID | Gene Symbol | Entrez GeneID | Gene Symbol | Entrez GeneID |
|---|---|---|---|---|---|---|---|
| FLJ34588 | | EGR2 | 1959 | NCKAP1 | 10787 | GPM6A | 2823 |
| MST4 | 51765 | LOC474170 | 474170 | LMO3 | 55885 | C9orf45 | 81571 |
| LOC134147 | 134147 | C9orf80 | 58493 | CRI1 | 23741 | PM5 | |
| USP15 | 9958 | ADAMTS6 | 11174 | MAP3K6 | 9064 | C20orf3 | 57136 |
| L0C403313 | 403313 | GNRH1 | 2796 | PPP3CA | 5530 | SCG3 | 29106 |
| HRB | 3267 | ROM1 | 6094 | NSEP1 | 4904 | LOC55971 | 55971 |
| CHST3 | 9469 | MMP3 | 4314 | GGTL3 | 2686 | RAB40C | 57799 |
| IL1B | 3553 | DLL1 | 28514 | HECW1 | 23072 | RDH14 | 57665 |
| CDC20 | 991 | PKP2 | : 5318 | CYP2B6 | 1555 | PCDHA6 | 56142 |
| SCD | 6319 | TXNL1 | 9352 | ATM | 472 | BID | 637 |
| ARL3 | 403 | CCL11 | 6356 | ARID4B | 51742 | TEBP | 10728 |
| HRMT1L2 | 3276 | GTF3C2 | 2976 | GTF2B | 2959 | RAPGEF2 | 9693 |
| RBM5 | 10181 | PRPS1 | 5631 | NIT1 | 4817 | PCOLN3 | 5119 |
| AKAP1 | 8165 | POU3F1 | 5453 | VTN | 7448 | GFAP | 2670 |
| HUS1 | 3364 | UCK2 | 7371 | SRPK1 | 6732 | ZNF207 | 7756 |
| HLA-C | 3107 | CD44 | 960 | C6orf136 | 221545 | FLJ13614 | 84142 |
| IGFBP1 | 3484 | WT1 | 7490 | CACYBP | 27101 | ADAM9 | 8754 |
| CSNK2A1 | 1457 | C7 | 730 | KCNB1 | 3745 | AICDA | 57379 |
| STAT2 | 6773 | CXCR4 | 7852 | ARHGDIB | 397 | SLC31A2 | 1318 |
| DKFZp451J0118 | 200081 | PTPN2 | 5771 | FSTL1 | 11167 | HDCMA18P | 51574 |
| CALM1 | 801 | RAB1A | 5861 | ATP1B3 | 483 | LPPR4 | 9890 |
| CTNNB1 | 1499 | CDA | 978 | SYNPO | 11346 | AARS | 16 |
| BTK | 695 | GPR39 | 2863 | MAST3 | 23031 | LOC 130074 | 130074 |
| IKBKE | 9641 | WNT2B | 7482 | FLN29 | 10906 | PAPPA | 5069 |
| DRB1 | 129831 | IRF3 | 3661 | SLC 12A5 | 57468 | KLF13 | 51621 |
| TBX18 | 9096 | RALGDS | 5900 | CLSTN3 | 9746 | DLGAP2 | 9228 |
| BRP44L | 51660 | IL6 | 3569 | PODXL | 5420 | ZNF37A | 7587 |
| RPL18A | 6142 | TNFRSF1B | 7133 | THOC2 | 57187 | TRIP13 | 9319 |
| RASGEF2 | | PIK3C3 | 5289 | RBP3 | 5949 | CD22 | 933 |
| KIFC1 | 3833 | B3GALT4 | 8705 | KRT10 | 3858 | RPS6KA6 | 27330 |
| YBX2 | 51087 | HCG9 | 10255 | ST13 | 6767 | WFDC1 | 58189 |
| DKFZP586A0522 | 25840 | CCL5 | 6352 | CLGN | 1047 | GNB2 | 2783 |
| KIAA0970 | | C6orf67 | | EGF | 1950 | LPIN2 | 9663 |

EP 1 869 976 A1

| Gene Symbol | Entrez GeneID | Gene Symbol | Entrez GeneID | Gene Symbol | Entrez GeneID | Gene Symbol | Entrez GeneID |
|---|---|---|---|---|---|---|---|
| TUBB6 | 84617 | LOC146206 | | ZIC3 | 7547 | PREX1 | 57580 |
| ADAM2 | 2515 | TNKS2 | 80351 | DDR2 | 4921 | MBL2 | 4153 |
| ZNF193 | 7746 | LOC200008 | | PIK3C2B | 5287 | FLT1 | 2321 |
| CNK2 | | ITM1 | 3703 | PPP3CB | 5532 | HSPB3 | 8988 |
| CD59 | 966 | NAP1L2 | 4674 | MAP3K14 | 9020 | COL4A5 | 1287 |
| CCNA1 | 8900 | FLJ37306 | | TCF19 | 6941 | ERCC2 | 2068 |
| AIP | 9049 | NR2E1 | 7101 | GNPDA2 | 132789 | NFKBIL1 | 4795 |
| NPL | 80896 | PDPR | 55066 | MANEA | 79694 | DYRKIA | 1859 |
| FLJ22679 | 84187 | PRKCG | 5582 | FLJ31166 | 120939 | REA | 11331 |
| ABCF1 | 23 | HSMPP8 | 54737 | CRTAM | 56253 | CALM2 | 805 |
| HDAC4 | 9759 | DKFZP434G1415 | 83448 | SGPP2 | 130367 | FGFR3 | 2261 |
| KIAA1128 | 54462 | CLDN2 | 9075 | KPNA3 | 3839 | CCL3 | 6348 |
| ITM2B | 9445 | HIP-55 | | C10orf24 | 219736 | IL7 | 3574 |
| FLJ13263 | | PLEKHF2 | 79666 | WDFY1 | 57590 | REN | 5972 |
| SRGAP2 | 23380 | SELL | 6402 | KIAA1363 | 57552 | MAPKAPK3 | 7867 |
| DKFZP434K046 | 57017 | PRL | 5617 | PROCR | 10544 | HSPA2 | 3306 |
| C18orf11 | 64762 | CAMTA1 | 23261 | CTCF | 10664 | ERBB3 | 2065 |
| BMP2K | 55589 | RAN | 5901 | DNMT1 | 1786 | SERPINE1 | 5054 |
| SFRS4 | 6429 | PIASY | | GNG4 | 2786 | MAP3K4 | 4216 |
| FLJ10094 | 55068 | HGF | 3082 | OLFM1 | 10439 | TCL6 | 27004 |
| APC2 | 10297 | SPTA1 | 6708 | CAMK2G | 818 | SYT7 | 9066 |
| ARNT2 | 9915 | ARRB2 | 409 | FLJ20551 | 54977 | CACNG2 | 10369 |
| VAMP2 | 6844 | USP8 | 9101 | CSTB | 1476 | HSFY | |
| PDE1B | 5153 | CHCHD3 | 54927 | SGPL1 | 8879 | FLJ32830 | 256957 |
| ABCA7 | 10347 | LRRN3 | 54674 | ELF4 | 2000 | LOC90806 | 90806 |
| C14orf133 | 63894 | UCHL1 | 7345 | CGI-111 | 51015 | RANBP6 | 26953 |
| PLD2 | 5338 | EI24 | 9538 | FLJ14154 | 79903 | PLCD3 | 113026 |
| COL9A1 | 1297 | RNPS1 | 10921 | CTSH | 1512 | P5 | |
| POLR3B | 55703 | DNALI1 | 7802 | FANCG | 2189 | FLJ14431 | |
| VAV3 | 10451 | PRDM10 | 56980 | MYH9 | 4627 | BCL2 | 596 |
| CSK | 1445 | LOC338797 | 338797 | PPM1G | 5496 | FXYD3 | 5349 |
| LOC221711 | 221711 | RNF8 | 9025 | CRKL | 1399 | MMP19 | 4327 |
| MMP12 | 4321 | ATRX | 546 | TCEA2 | 6919 | FLJ23323 | 79707 |

(fortgesetzt)

| Gene Symbol | Entrez GeneID | Gene Symbol | Entrez GeneID | Gene Symbol | Entrez GeneID | Gene Symbol | Entrez GeneID |
|---|---|---|---|---|---|---|---|
| ADH1B | 125 | UBXD2 | 23190 | PI4K2B | 55300 | DKFZP564O243 | 25864 |
| TTC11 | 51024 | RRM1 | 6240 | TIM14 | 131118 | MGC4172 | 79154 |
| TNXB | 7148 | LOC51123 | 51123 | PGM2L1 | 283209 | CACNA1I | 8911 |
| MST1 | 4485 | OSBPL10 | 114884 | HS6ST3 | 266722 | CSRP2BP | 57325 |
| KIAA1889 | 114786 | MGC33382 | | PTPN22 | 26191 | XPO1 | 7514 |
| DDIT4L | 115265 | EPAC | | BCL2 | 596 | PLOD2 | 5352 |
| UNQ8193 | | UBE2V1 | 7335 | ATF2 | 1386 | DHODH | 1723 |
| ZNF252 | | CYP19A1 | 1588 | RPRM | 56475 | FCGR1A | 2209 |
| HTR3A | 3359 | VEGFC | 7424 | DOCK3 | 1795 | ITGB1 | 3688 |
| RAB 10 | 10890 | STAR | 6770 | PARVG | 64098 | ETV4 | 2118 |
| PAG | 55824 | INSL4 | 3641 | MERTK | 10461 | PFDN4 | 5203 |
| TNKS2 | 80351 | MYH10 | 4628 | UGDH | 7358 | DAF | 1604 |
| NLN | 57486 | MASK | | NANOS1 | 340719 | CDC 14A | 8556 |
| PFKL | 5211 | NINJ1 | 4814 | FLJ45645 | 375287 | MAP3K2 | 10746 |
| LARS2 | 23395 | NUP133 | 55746 | DustyPK | | CIZ1 | 25792 |
| LOC223082 | | GFRA2 | 2675 | GRINLIA | 81488 | PCDH1 | 5097 |
| HIST1H2BK | 85236 | ZNF462 | 58499 | FALZ | 2186 | MCM5 | 4174 |
| IGBPI | 3476 | RAB1A | 5861 | ChGn | 55790 | PTK2B | 2185 |
| C20orf23 | 55614 | RGS5 | 8490 | SLAMF9 | 89886 | SHOC2 | 8036 |
| NUP88 | 4927 | POLDIP3 | 84271 | MGC10854 | 84260 | 13CDNA73 | 10129 |
| FXYD6 | 53826 | GART | 2618 | C21orf63 | 59271 | ALAD | 210 |
| FLJ41603 | 389337 | C19orf13 | 26065 | LIPC | 3990 | TIF1 | 8805 |
| NEK4 | 6787 | DCTN2 | 10540 | DNTTIP1 | 116092 | LOC167127 | 167127 |
| TNFRSF25 | 8718 | KIAA0763 | | COX8A | 1351 | CLPX | 10845 |
| ADAM17 | 6868 | ECEL1 | 9427 | CTBP2 | 1488 | FLJ20967 | |
| HDGF | 3068 | PECAM1 | 5175 | LOC57168 | 57168 | CNOT8 | 9337 |
| p49/STRAP | 153443 | FACL4 | | HMGCS1 | 3157 | LOC255743 | 255743 |
| ZNF545 | 284406 | SCOTIN | 51246 | C6orf56 | | C21orf55 | 54943 |
| HBG2 | 3048 | BCL9L | 283149 | MGC12760 | 84809 | Rab11-FIP2 | |
| LOC146443 | 146443 | BLCAP | 10904 | AGA | 175 | FLJ25778 | 254048 |
| CDKN1A | 1026 | MGC70863 | 284942 | ACP5 | 54 | LOC137886 | 137886 |
| KIAA0329 | 9895 | PPIA | 5478 | G2AN | | FLJ11175 | |
| PRKCB1 | 5579 | SCARB1 | 949 | ARHGEF11 | 9826 | KIAA0352 | 9880 |

| Gene Symbol | Entrez GeneID | Gene Symbol | Entrez GeneID | Gene Symbol | Entrez GeneID | Gene Symbol | Entrez GeneID |
|---|---|---|---|---|---|---|---|
| ACTG1 | 71 | FLJ21415 | 79794 | LAMC1 | 3915 | | |
| TNFAIP3 | 7128 | GUCA1B | 2979 | SIAT8E | 29906 | DNCI1 | 1780 |
| ELK1 | 2002 | BRCA1 | 672 | FLJ33817 | 124997 | MCAM | 4162 |
| SQLE | 6713 | hSyn | 55188 | KIAA0241 | 23080 | RAB14 | 51552 |
| CCND1 | 595 | FRAP1 | 2475 | CSPG3 | 1463 | GGA2 | 23062 |
| PCDHB10 | 56126 | BMP2K | 55589 | ALG2 | 85365 | Clorf16 | 9887 |
| SMAD2 | 4087 | MUC15 | 143662 | MGC 10067 | 134510 | DJ167A19.1 | 54432 |
| CD59 | 966 | ZCCHC3 | 85364 | HSPC056 | | SLC12A7 | 10723 |
| CDW52 | 1043 | PELO | 53918 | HDHD2 | 84064 | UPA | |
| CORO2B | 10391 | MMP13 | 4322 | GSTA4 | 2941 | NAP1L5 | 266812 |
| RDBP | 7936 | SLC17A5 | 26503 | MAP1B | 4131 | IDI2 | 91734 |
| MDC1 | 9656 | FLJ10287 | 54482 | MTPN | 136319 | LATS2 | 26524 |
| IL8RA | 3577 | TESK1 | 7016 | MAPIA | 4130 | PRTFDCI | 56952 |
| KIAA1163 | | CNN3 | 1266 | NUP205 | 23165 | PRO1914 | |
| ADM2 | 79924 | BGLAP | 632 | DPH2L2 | 1802 | KIAA1737 | 85457 |
| LOC126248 | 126248 | NT5E | 4907 | KIAA0286 | 23306 | PRKAG2 | 51422 |
| NDN | 4692 | PNRC1 | 10957 | RFC5 | 5985 | C12orf8 | 10961 |
| UNQ2430 | 375248 | ZNF46 | 7597 | FBXO8 | 26269 | SLC30A2 | 7780 |
| FLJ90119 | 144110 | IQGAP1 | 8826 | TRIAD3 | 54476 | FLJ11220 | |
| CRB1 | 23418 | LIFR | 3977 | EPHA7 | 2045 | MGC3101 | 79007 |
| CRBN | 51185 | CDK10 | 8558 | SFRP2 | 6423 | LY6E | 4061 |
| STRAP | 11171 | FLJ23441 | 79731 | MLL3 | 58508 | CRK | 1398 |
| ZNF425 | 155054 | SEC24A | 10802 | FLJI4431 | | CD14 | 929 |
| ZNF358 | 140467 | SLC7A6 | | APRT | 353 | IGFBP7 | 3490 |
| DMPK | 1760 | SLC2A14 | 144195 | CPT1A | 1374 | PTGES | 9536 |
| TXNDC10 | 54495 | LOC157567 | 157567 | AP1G1 | 164 | STK19 | 8859 |
| RB1 | 5925 | LGI2 | 55203 | RFX5 | 5993 | GAK | 2580 |
| RAB2B | 84932 | LYK5 | 92335 | MAPILC3B | 81631 | FLJ12650 | 79570 |
| DDC | 1644 | OPTN | 10133 | DKFZp434D1 | 1428 | KIAA1726 | 85463 |
| CPT1B | | FLJ31810 | 158038 | CAPN2 | 824 | VIPR2 | 7434 |
| SP110 | 3431 | REV1L | 51455 | TAF7 | 6879 | DEFB106 | 245909 |
| MDM1 | 56890 | SDKI | 221935 | HCMOGT-1 | 92521 | NNAT | 4826 |

EP 1 869 976 A1

(fortgesetzt)

| Gene Symbol | Entrez GeneID | Gene Symbol | Entrez GeneID | Gene Symbol | Entrez GeneID | Gene Symbol | Entrez GeneID |
|---|---|---|---|---|---|---|---|
| CDKSR1 | 8851 | FLJ30596 | 133686 | NDUFAB1 | 4706 | FLJ40432 | 151195 |
| PHKG2 | 5261 | KIAA0663 | 9877 | CDA08 | 81533 | PLEKHG1 | 57480 |
| SMARCA1 | 6594 | PAK3 | 5063 | RNF4 | 6047 | SAMSN1 | 64092 |
| CBFB | 865 | PPP4R1 | 9989 | ASB1 | 51665 | KIAA2026 | 158358 |
| SDCBP | 6386 | ARPP-19 | 10776 | C18orf1 | 753 | MAF | 4094 |
| P2RY14 | 9934 | TDRD7 | 23424 | KIAAI701 | | ELK4 | 2005 |
| EIF4E | 1977 | KCTD8 | 386617 | FGF13 | 2258 | CGI-51 | 25813 |
| UVRAG | 7405 | TGOLN2 | 10618 | PIGQ | 9091 | MCL1 | 4170 |
| PRDM1 | 639 | TAF1 | 6872 | MORF4L1 | 10933 | CACNA2D2 | 9254 |
| GAPD | 2597 | C20orf35 | 55861 | FLJ20125 | 54826 | RPS8 | 6202 |
| NR4A3 | 8013 | DKFZp686I15217 | 401232 | HRMT1L1 | 3275 | BCAS3 | 54828 |
| PPP1R8 | 5511 | IVNSIABP | 10625 | CNTN4 | 152330 | LOC138046 | 138046 |
| TTGB1 | 3688 | LACTB2 | 51110 | KIAA2022 | 340533 | MTRR | 4552 |
| PTPN7 | 5778 | AKR7A2 | 8574 | C12orf4 | 57102 | MBTPS1 | 8720 |
| TDE2 | 57515 | C8orf13 | 83648 | EIF3S2 | 8668 | CCT4 | 10575 |
| PERP | 64065 | PLK1 | 5347 | FLJ20531 | 55657 | C12orf4 | 57102 |
| TNFRSF11B | 4982 | AGXT | 189 | BM-002 | | DDO | 8528 |
| CASP2 | 835 | ZCSL2 | 285381 | ACY1L2 | 135293 | TM6SF1 | 53346 |
| FLJ12178 | | SEMA3F | 6405 | PGBD1 | 84547 | ZNF239 | 8187 |
| STK38 | 11329 | MSX2 | 4488 | CNTN2 | 6900 | PDYN | 5173 |
| ACADL | 33 | GCM1 | 8521 | MGC4655 | 84752 | MAP2 | 4133 |
| ZNF-U69274 | | ITGB7 | 3695 | TUBG1 | 7283 | DKFZp761N1114 | 148808 |
| D2LIC | 51626 | FUBP3 | 8939 | NRP1 | 8829 | TARDBP | 23435 |
| AHCY | 191 | INS | 3630 | RNF34 | 80196 | LHFP | 10186 |
| FLJ39609 | 284598 | EIF3S9 | 8662 | BGN | 633 | CNOT7 | 29883 |
| TCL6 | 27004 | ATF3 | 467 | TIMM9 | 26520 | SMOC2 | 64094 |
| MPHOSPHI | 9585 | NUCB1 | 4924 | PPEF2 | 5470 | PIWIL2 | 55124 |
| Eu-HMTasel | | TNFRSF21 | 27242 | RPS6KB1 | 6198 | FGB | 2244 |
| FAM3C | 10447 | PRKACG | 5568 | GSK3A | 2931 | USH2A | 7399 |
| KIAA0635 | 9662 | MMP2 | 4313 | ACTG2 | 72 | FGL2 | 10875 |
| KEL | 3792 | CNTFR | 1271 | RHEB | 6009 | NCE2 | 140739 |
| MGC5178 | 79008 | CLECSF2 | 9976 | TAPBP | 6892 | PRPSAP1 | 5635 |
| LMO3 | 55885 | KIAA1946 | 165215 | GNA15 | 2769 | XRCC4 | 7518 |

(fortgesetzt)

| Gene Symbol | Entrez GeneID | Gene Symbol | Entrez GeneID | Gene Symbol | Entrez GeneID | Gene Symbol | Entrez GeneID |
|---|---|---|---|---|---|---|---|
| GDA | 9615 | PLAU | 5328 | LTBR | 4055 | PTGER3 | 5733 |
| C3orf1 | 51300 | PERQI | 64599 | PZP | 5858 | GDF8 | 2660 |
| FLJ33708 | 285780 | AK7 | 122481 | PKD1 | 5310 | TNFRSF10B | 8795 |
| KIAA0779 | | FLJ11082 | | APAFI | 317 | GLGI | 2734 |
| CHURC1 | 91612 | MGC34646 | 157807 | NR2F6 | 2063 | COL5A2 | 1290 |
| LOC92017 | 92017 | OMG | 4974 | DUSP2 | 1844 | DAF | 1604 |
| CKS2 | 1164 | RIP | 84268 | TAF1 | 6872 | FLJ20160 | 54842 |
| CDK3 | 1018 | GARP | 2615 | LCP1 | 3936 | KIAA0971 | 22868 |
| CYP2A7 | 1549 | MLANA | 2315 | ASGR2 | 433 | PRO1905 | |
| SPIB | 6689 | PARG | 8505 | TMED6 | 146456 | STX16 | 8675 |
| CGRRF1 | 10668 | SMARCA4 | 6597 | CLK1 | 1195 | PPGB | 5476 |
| CD81 | 975 | IKBKAP | 8518 | NRL | 4901 | M17S2 | 4077 |
| NFATC4 | 4776 | PTK9 | 5756 | GTF2F1 | 2962 | SIAT10 | 10402 |
| CAST | 831 | CDK2AP1 | 8099 | PSG4 | 5672 | NRIP3 | 56675 |
| IL1R1 | 3554 | P2RX1 | 5023 | MST1R | 4486 | DPF2 | 5977 |
| SERPINB5 | 5268 | PTD008 | 51398 | ABR | 29 | ACYP2 | 98 |
| STK23 | 26576 | SEPT5 | 5413 | EST (20) | | DKFZp43400527 | 255101 |
| HOMER1 | 9456 | ANXA13 | 312 | PTK2 | 5747 | NRXN2 | 9379 |
| KELCHL | 84861 | LEFTY2 | 7044 | COL6A1 | 1291 | MEP1A | 4224 |
| INPP4B | 8821 | LOC200008 | | MYD88 | 4615 | IL16 | 3603 |
| CA13 | 377677. | CASK | 8573 | PTPRC | 5788 | COL6A3 | 1293 |
| RBJ | 51277 | BRS3 | 680 | BCR | 613 | C6orf33 | 85315 |
| S100A2 | 6273 | KIAA0831 | 22863 | IFNAR2 | 3455 | NOC4 | 10328 |
| 13CDNA73 | 10129 | SRD5A2 | 6716 | AIF1 | 199 | POLS | 11044 |
| DKFZP564D172 | 83989 | RBPMS2 | 348093 | SPN | 6693 | FGG | 2266 |
| FLJ14775 | 84923 | RECK | 8434 | DYRK2 | 8445 | PSCD2 | 9266 |
| NOD9 | 79671 | CREBBP | 1387 | TRIP11 | 9321 | ANXA8 | 244 |
| MRPL15 | 29088 | KIAA1530 | 57654 | KIAA1922 | 114819 | CHL1 | 10752 |
| PAIP2 | 51247 | AEBPI | 165 | FLJ12303 | | SPIB | 6689 |
| REPRIMO | | C21orf66 | 94104 | DKFZp7620076 | 55529 | C1R | 715 |
| FLJ20010 | 54494 | ARF4 | 378 | ZNRF4 | 148066 | IGF2R | 3482 |
| FLJ20097 | 55610 | CXCL2 | 2920 | PIGR | 5284 | POU2F1 | 5451 |
| NLGN4 | | UBE1C | 9039 | CKLFSF4 | 146223 | C5 | 727 |

(fortgesetzt)

| Gene Symbol | Entrez GeneID | Gene Symbol | Entrez GeneID | Gene Symbol | Entrez GeneID | Gene Symbol | Entrez GeneID |
|---|---|---|---|---|---|---|---|
| PCDHA5 | | TM4SF4 | 7104 | AF3P21 | | DDIT3 | 1649 |
| MGC2803 | 79002 | METAP2 | 10988 | FLJ35107 | 348825 | MDM2 | 4193 |
| PRSS15 | 9361 | SATB2 | 23314 | ING3 | 54556 | CASP5 | 838 |
| CHDC1 | | GNAS | 2778 | GTF2A2 | 2958 | TRAF2 | 7186 |
| DPP4 | 1803 | IPO11 | 51194 | SLC27A4 | 10999 | STK3 | 6788 |
| DDHD1 | 80821 | C5orf3 | 10827 | KBTBD7 | 84078 | SLC1A3 | 6507 |
| CCNJ | 54619 | FLJ10415 | 55139 | C10orf118 | 55088 | LUM | 4060 |
| ZNF507 | 22847 | GPR17 | 2840 | TAF12 | 6883 | EPLIN | 51474 |
| FALZ | 2186 | FLOT2 | 2319 | ANXA5 | 308 | OGT | 8473 |
| WDR22 | 8816 | PFN2 | 5217 | AGPAT1 | 10554 | RIC3 | 79608 |
| LILRB2 | 10288 | DHX9 | 1660 | SSB1 | 80176 | GAGEC1 | 9506 |
| SIAT7F | 30815 | ENC1 | 8507 | KIAA2018 | 205717 | NCOA7 | 135112 |
| MGC8407 | 79012 | LOC134145 | 134145 | PAPOLA | 10914 | SDC1 | 6382 |
| CDK10 | 8558 | LRP4 | 4038 | RAB24 | 53917 | TRIM2 | 23321 |
| NUP214 | 8021 | B3GAT3 | 26229 | QKI | 9444 | AP4M1 | 9179 |
| ITSN1 | 6453 | NRXN1 | 9378 | DKFZp586C1924 | 84233 | JM5 | |
| FLI1 | 2313 | FLJ13855 | 65264 | RBJ | 51277 | PSMC6 | 5706 |
| LARGE | 9215 | SPON1 | 10418 | CARD4 | 10392 | EML1 | 2009 |
| ACTN4 | 81 | KIAA1333 | 55632 | MGC29463 | 202052 | FLJ14001 | 79730 |
| ADH6 | 130 | KLF8 | 11279 | LOC51161 | | H2AV | |
| ZCCHC3 | 85364 | RGS19IP1 | 10755 | NDUFS1 | 4719 | RNF38 | 152006 |
| K1AA0174 | 9798 | TPPP | 11076 | PTD004 | 29789 | WNT2 | 7472 |
| T1560 | 387335 | CENPF | 1063 | PELI1 | 57162 | HCMOGT-1 | 92521 |
| SLC1A1 | 6505 | PTK2B | 2185 | SLC12A2 | 6558 | SLAC2-B | 23086 |
| RNF144 | 9781 | RGS4 | 5999 | MGC2827 | | FLJ39237 | 375607 |
| SIN3A | 25942 | DMD | 1756 | PTGS2 | 5743 | IL18RAP | 8807 |
| HERC3 | 8916 | CALM2 | 805 | SDC2 | 6383 | PVRL3 | 25945 |
| 4DCY2 | 108 | TOCA1 | | FLJ14803 | 84928 | NUDT11 | 55190 |
| ROB02 | 6092 | CREM | 1390 | CORO2A | 7464 | NAKAP95 | |
| MGC15730 | 84966 | ARL6IP6 | 151188 | C20orf39 | 79953 | RBBP6 | 5930 |
| PORIMIN | 114908 | DPM3 | 54344 | LOC54499 | 54499 | SLA2 | 84174 |
| NEDD4L | 23327 | RNF 110 | | SYT9 | 143425 | ACP33 | |
| KLF7 | 8609 | RAC1 | 5879 | C6orf55 | 51534 | MTM1 | 4534 |

(fortgesetzt)

| Gene Symbol | Entrez GeneID | Gene Symbol | Entrez GeneID | Gene Symbol | Entrez GeneID | Gene Symbol | Entrez GeneID |
|---|---|---|---|---|---|---|---|
| COX6B1 | 1340 | FLJ12688 | 79613 | SUPT4H1 | 6827 | MYST2 | 11143 |
| HYOU1 | 10525 | GPM6A | 2823 | SNCA | 6622 | DEC1 | 50514 |
| FLJ20244 | 55621 | ECHS1 | 1892 | ITSN2 | 50618 | DNCLI2 | 1783 |
| MYCBP2 | 23077 | SNN | 8303 | YTHDC2 | 64848 | MGC13096 | 84306 |
| SOCS7 | 30837 | PTPN13 | 5783 | ZCCHC9 | 84240 | BRD9 | 65980 |
| ATP1B2 | 482 | ATRN | 8455 | CCNL2 | 81669 | B4GALT4 | 8702 |
| GLTP | 51228 | APLP1 | 333 | SERPINA1 | 5265 | RGS6 | 9628 |
| NEK3 | 4752 | NALP2 | 55655 | ABCE1 | 6059 | FLJ23018 | |
| KIN | 22944 | APOD | 347 | EPM2A | 7957 | KIAA0376 | 23384 |
| TCF7L2 | 6934 | XTP2 | 23215 | PUM2 | 23369 | ADRBK2 | 157 |
| GTF2H2 | 2966 | FLJ20580 | 54987 | KIAA1229 | 57489 | FLJ21174 | |
| TXN | 7295 | SEMA5A | 9037 | RBM5 | 10181 | PIP5K1B | 8395 |
| ERCC1 | 2067 | LOC283755 | 283755 | RNF157 | 114804 | NS3TP2 | 65983 |
| PROM1 | 8842 | GJB1 | 2705 | PDE4D | 5144 | MRPS35 | 60488 |
| PPP6C | 5537 | RNASE1 | 6035 | FLJ10241 | 55101 | PCNT1 | 79902 |
| TERT | 7015 | C13orf10 | 64062 | GRCA | 27239 | PRDM4 | 11108 |
| CCL25 | 6370 | ANXA3 | 306 | FLJ23790 | 157769 | CREB3 | 10488 |
| TXNDC7 | 10130 | ELOVL2 | 54898 | PSG9 | 5678 | C6orf69 | 222658 |
| E2F4 | 1874 | LNK | 10019 | HOXB5 | 3215 | AKAP6 | 9472 |
| DAPK1 | 1612 | ATRX | 546 | EGLN2 | 112398 | RB1CC1 | 9821 |
| PDE4D | 5144 | ELF1 | 1997 | PTPRR | 5801 | COCH | 1690 |
| RGS2 | 5997 | CYP11B1 | 1584 | POU6F1 | 5463 | JPHL1 | |
| THBD | 7056 | SMN2 | 6607 | RBP1 | 5947 | SURF6 | 6838 |
| LIAS | 11019 | PPP2R5B | 5526 | NCOA3 | 8202 | HT014 | 57095 |
| BID | 637 | ADRBK2 | 157 | LOC151194 | 151194 | ELAVL2 | 1993 |
| KIAA0669 | 9819 | IMPACT | 55364 | SND1 | 27044 | LOC401152 | 401152 |
| ORC5L | 5001 | HGF | 3082 | AADAT | 51166 | ZNF187 | 7741 |
| RRAS2 | 22800 | CCL14 | 6358 | C6orf33 | 85315 | MCM2 | 4171 |
| FLJ38736 | 256764 | CASP4 | 837 | SERPINA4 | 5267 | GPR146 | 115330 |
| KCNK13 | 56659 | GFRA2 | 2675 | RAD1 | 5810 | AFM | 173 |
| LOC113444 | 113444 | CD151 | 977 | MAN2A1 | 4124 | MRPL3 | 11222 |
| F2RL1 | 2150 | GRK6 | 2870 | RANBP2 | 5903 | USP16 | 10600 |
| BCAR3 | 8412 | ATP5H | 10476 | DTYMK | 1841 | DMXL1 | 1657 |

(fortgesetzt)

| Gene Symbol | Entrez GeneID | Gene Symbol | Entrez GeneID | Gene Symbol | Entrez GeneID | Gene Symbol | Entrez GeneID |
|---|---|---|---|---|---|---|---|
| C40 | | CPM | 1368 | TLX1 | 3195 | PLCL1 | 5334 |
| MAPKAPK5 | 8550 | FRBZ1 | 360023 | C8A | 731 | RAD9A | 5883 |
| YAF2 | 10138 | LYSAL1 | | ENG | 2022 | HOXA10 | 3206 |
| KAI1 | 3732 | WDFY3 | 23001 | NOTCH4 | 4855 | PPAT | 5471 |
| PDCD6IP | 10015 | IL20RA | 53832 | TTK | 7272 | GJB5 | 2709 |
| ITGA3 | 3675 | MGC47869 | 144608 | CD2AP | 23607 | MRPL28 | 10573 |
| SATB1 | 6304 | FDX1 | 2230 | PRKCH | 5583 | TAF5 | 6877 |
| EGFR | 1956 | PTPRG | 5793 | ERCC3 | 2071 | USP47 | 55031 |
| DNAJB4 | 11080 | MME | 4311 | CCPG1 | 9236 | TRIM56 | 81844 |
| PLCG2 | 5336 | CYP2B6 | 1555 | MCM2 | 4171 | CSE1L | 1434 |
| ITGA2 | 3673 | CCNB2 | 9133 | RIMS3 | 9783 | DUSP5 | 1847 |
| SRP72 | 6731 | BAD | 572 | CES1 | 1066 | ABCC1 | 4363 |
| TLR1 | 7096 | MAPK6 | 5597 | JAM3 | 83700 | MAGEF1 | 64110 |
| CXCL13 | 10563 | GDF15 | 9518 | ARHGAP17 | 55114 | GDF10 | 2662 |
| ACVR1 | 90 | ITGA6 | 3655 | SENP7 | 57337 | PRPSAP2 | 5636 |
| ZNF22 | 7570 | MAP2K3 | 5606 | XPC | 7508 | PTMA | 5757 |
| GRIA3 | 2892 | C8B | 732 | TGOLN2 | 10618 | KIAA1102 | 22998 |
| FLJ13710 | 79875 | IL6R | 3570 | AKR1C4 | 1109 | PPP1R15B | 84919 |
| CLCA1 | 1179 | TP53I11 | 9537 | RS1 | 6247 | HPGD | 3248 |
| ZNF318 | 24149 | IL2RA | 3559 | STK35 | 140901 | MAP3K7IP1 | 10454 |
| COLEC12 | 81035 | FGFR2 | 2263 | F13A1 | 2162 | ACTL6B | 51412 |
| HAMP | 57817 | RC3 | | SKP1A | 6500 | MAT2B | 27430 |
| DKFZP586J0619 | 26173 | LIMK2 | 3985 | NFKB1 | 4790 | COX8A | 1351 |
| FLJ13397 | | YT521 | 91746 | CYC1 | 1537 | CDC42BPA | 8476 |
| SECP43 | 54952 | ANKRD5 | 63926 | HNRPU | 3192 | ASXL1 | 171023 |
| MRE11A | 4361 | CBLB | 868 | ID3 | 3399 | GPT2 | 84706 |
| MGC39820 | | PCDH10 | 57575 | IRF5 | 3663 | ASB3 | 51130 |
| CHD1L | 9557 | LACE1 | 246269 | IL17R | 23765 | NALP1 | 22861 |
| TTLL3 | 26140 | CA12 | 771 | EEF1A1 | 1915 | SLC25A15 | 10166 |
| CHUK | 1147 | ATP6V1G1 | 9550 | STIP1 | 10963 | SLC35E3 | 55508 |
| ALEX1 | | KIAA1219 | 57148 | PFC | 5199 | CLDN10 | 9071 |
| RAB32 | 10981 | RIT1 | 6016 | PRKCD | 5580 | PDCL | 5082 |
| KIAA1344 | 57544 | TMEM16C | 63982 | IRF2 | 3660 | PPP2R5A | 5525 |

| Gene Symbol | Entrez GeneID | Gene Symbol | Entrez GeneID | Gene Symbol | Entrez GeneID | Gene Symbol | Entrez GeneID |
|---|---|---|---|---|---|---|---|
| UBE2I | 7329 | GTF2E1 | 2960 | CD7 | 924 | KLAA1524 | 57650 |
| SHREW 1 | 55966 | KIAA0657 | 23363 | IRAK2 | 3656 | CMRF-35H | 11314 |
| LAP3 | 51056 | FLJ20716 | 55026 | BLZF1 | 8548 | PPP1R1B | 84152 |
| PPP3CC | 5533 | FIGN | 55137 | MAP3K8 | 1326 | KIF1A | 547 |
| EBNA1BP2 | 10969 | COX10 | 1352 | PSG3 | 5671 | TOP2A | 7153 |
| PPT1 | 5538 | F11R | 50848 | SLC16A4 | 9122 | MAD2L1 | 4085 |
| FLJ32942 | 121355 | HSD17B2 | 3294 | NHS | 4810 | MYF5 | 4617 |
| MGC2452 | | PPP2R2A | 5520 | FLJ32731 | 138050 | PTPN6 | 5777 |
| F-LANa | | C14orf94 | 54930 | KIAA1853 | 84530 | WRN | 7486 |
| FLJ21439 | 80208 | WDR22 | 8816 | HIBCH | 26275 | RGS14 | 10636 |
| UBADC1 | 10422 | FLJ10458 | 54475 | AGPAT4 | 56895 | CASP3 | 836 |
| CBR1 | 873 | PAK7 | 57144 | MIZF | 25988 | DAP3 | 7818 |
| SNX27 | 81609 | INSIG2 | 51141 | AQP3 | 360 | BAG4 | 9530 |
| CADPS | 8618 | C1QR1 | 22918 | ARTN | 9048 | CR2 | 1380 |
| C20orf104 | | RICS | 9743 | FCER2 | 2208 | CXCL3 | 2921 |
| RAB11A | 8766 | BCR | 613 | SOX7 | 83595 | PPT2 | 9374 |
| ENTPD8 | | STAF42 | 117143 | FLJ13912 | 64785 | CHEKI | 1111 |
| ANXA4 | 307 | SMARCA2 | 6595 | DNCI2 | 1781 | RBM10 | 8241 |
| KIAA0459 | 23252 | SASH1 | 23328 | SNAPC2 | 6618 | TA-LRRP | 23507 |
| SPTLC1 | 10558 | DDX3X | 1654 | SP192 | 60313 | RICH1 | |
| NPTX2 | 4885 | SSX2IP | 117178 | MEP50 | 79084 | KIFAP3 | 22920 |
| ARF5 | 381 | RTTN | 25914 | EPOR | 2057 | KIAA0173 | |
| LOC90806 | 90806 | OPHN1 | 4983 | USP32 | 84669 | C6orf152 | 167691 |
| SELE | 6401 | WNT4 | 54361 | KIAA1336 | | ZDHHC18 | 84243 |
| MS4A7 | 58475 | APXL2 | 134549 | IFNGR2 | 3460 | HOXA4 | 3201 |
| BAG4 | 9530 | ACVR2 | 92 | CGI-79 | | ELF3 | 1999 |
| SLC26A2 | 1836 | KIAA1946 | 165215 | PHKA1 | 5255 | IFRD1 | 3475 |
| DSCAM | 1826 | C14orf118 | 55668 | DKFZp686A17109 | | HOXB6 | 3216 |
| LOH3CR2A | 29931 | NARG2 | 79664 | LOC130940 | 130940 | NCF1 | 4687 |
| LUC7L2 | 51631 | KIAA1449 | | TAF5 | 6877 | LAF4 | 3899 |
| C2 | 717 | ALOX15B | 247 | HDC | 3067 | ABL1 | 25 |
| BCS1L | 617 | MESP1 | 55897 | TRPC5 | 7224 | CCL3 | 6348 |
| DHX57 | 90957 | KIAA1600 | 57700 | MGC27034 | | IRAK1 | 3654 |

(fortgesetzt)

| Gene Symbol | Entrez GeneID | Gene Symbol | Entrez GeneID | Gene Symbol | Entrez GeneID | Gene Symbol | Entrez GeneID |
|---|---|---|---|---|---|---|---|
| TIEG2 | | TCL6 | 27004 | BAAT | 570 | STAT1 | 6772 |
| TM7SF3 | 51768 | COL21A1 | 81578 | dJ383J4.3 | 91687 | ZNF42 | 7593 |
| LOC284296 | 284296 | UBQLN2 | 29978 | ARID4B | 51742 | FGF9 | 2254 |
| MGC39325 | 90362 | FLJ22002 | | COG6 | 57511 | AQP2 | 359 |
| CML66 | 84955 | TCF7 | 6932 | MGC61571 | 152100 | GRK5 | 2869 |
| ANC_2H01 | | CAPZB | 832 | FLJ25477 | 219287 | FLJ32810 | 143872 |
| NJMLT-R1 | 64149 | RPL23A | 6147 | SYT13 | 57586 | FAD104 | |
| COQ6 | 51004 | ART3 | 419 | ARPC1B | 10095 | CBL | 867 |
| EIF2AK3 | 9451 | ETS1 | 2113 | COG8 | 84342 | IL1F5 | 26525 |
| KIAA2002 | 79834 | ZFYVE26 | 23503 | SLCO3A1 | 28232 | FADS2 | 9415 |
| SEC14L1 | 6397 | APOA1BP | 128240 | NMNAT2 | 23057 | FLJ20573 | |
| CDYL | 9425 | MAC30 | 27346 | SLC7A9 | 11136 | RP42 | 54165 |
| TM4SF2 | 7102 | TRIP12 | 9320 | TBC1D7 | 51256 | CAPNS2 | 84290 |
| MGC3101 | 79007 | RAD23B | 5887 | ZNF490 | 57474 | ITLN1 | 55600 |
| LOC223082 | | SIK2 | | BAG1 | 573 | KIAA1078 | 23271 |
| DOCK11 | 139818 | SPOCK2 | 9806 | ENAH | 55740 | DSTN | 11034 |
| TM9SF2 | 9375 | FHOD3 | 80206 | GFR | | P11 | 8909 |
| RRS1 | 23212 | CDS1 | 1040 | LOC339263 | 339263 | EFHD1 | 80303 |
| C2orf11 | 130132 | FLJ20035 | 55601 | C1orf21 | 81563 | BAALC | 79870 |
| HSPE1 | 3336 | STARD10 | 10809 | KIAA1906 | 114795 | ARAF | 369 |
| CD81 | 975 | KLHL7 | 55975 | WDR10 | 55764 | FLJ12476 | 64799 |
| ARHGEF10 | 9639 | TGFA | 7039 | RFC1 | 5981 | NOPE | 57722 |
| DHRS6 | 56898 | GMFB | 2764 | PIK3R3 | 8503 | FECH | 2235 |
| MYO1B | 4430 | C20orf55 | 83541 | CORO1B | 57175 | HBXIP | 10542 |
| GNB5 | 10681 | PHF14 | 9678 | C7orf28B | 221960 | WDFY2 | 115825 |
| SPCS2 | 9789 | CAPN3 | 825 | ZCCHC14 | 23174 | PPM2C | 54704 |
| KIAA1171 | 57465 | C1QBP | 708 | MYLK | 4638 | YAP | 55249 |
| CAMKK2 | 10645 | USP34 | 9736 | FLJ46230 | 400679 | KIAA1374 | 57560 |
| KIF22 | 3835 | SLC16A2 | 6567 | GNA12 | 2768 | FLJ10826 | 55239 |
| SMAD5 | 4090 | PAX8 | 7849 | COL6A3 | 1293 | CRSP2 | 9282 |
| TOMM34 | 10953 | LTB4R2 | 56413 | TXN | 7295 | KIAA1126 | 57210 |
| MNDA | 4332 | CDC23 | 8697 | K1AA0251 | 23042 | DKFZp761C121 | |
| AP1S2 | 8905 | COL11A1 | 1301 | CTSL | 1514 | CREB5 | 9586 |

| Gene Symbol | Entrez GeneID | Gene Symbol | Entrez GeneID | Gene Symbol | Entrez GeneID | Gene Symbol | Entrez GeneID |
|---|---|---|---|---|---|---|---|
| P11 | 8909 | MAP4 | 4134 | OCRL | 4952 | ADSSL1 | 122622 |
| BTN1A1 | 696 | DAB2 | 1601 | CDCA7 | 83879 | SLC26A2 | 1836 |
| CASP9 | 842 | PDE4B | 5142 | MAP4K4 | 9448 | FLJ12903 | 64766 |
| CCL7 | 6354 | IL24 | 11009 | ZCCHC2 | 54877 | SLC39A14 | 23516 |
| HSD11B1 | 3290 | TYK2 | 7297 | RAC2 | 5880 | FLJ38964 | 161253 |
| TGFBRAP1 | 9392 | FER | 2241 | ZNF43 | 7594 | GPC5 | 2262 |
| BMPR1B | 658 | MAP3K7IP1 | 10454 | GNAI1 | 2770 | STK38 | 11329 |
| TNFSF14 | 8740 | HAT1 | 8520 | ITGAE | 3682 | GPC4 | 2239 |
| EIF5 | 1983 | ETAA16 | 54465 | GYG2 | 8908 | SNX17 | 9784 |
| MGC11242 | 79170 | SYCP2 | 10388 | SEC24C | 9632 | SENP2 | 59343 |
| FGA | 2243 | MACF1 | 23499 | MBD5 | 55777 | PRPF4 | 9128 |
| TYRP 1 | 7306 | KIFC2 | 90990 | NUP155 | 9631 | SEC14L2 | 23541 |
| APCS | 325 | SMARCA4 | 6597 | TA-WDRP | | SF3A1 | 10291 |
| PLAGL2 | 5326 | CD44 | 960 | CD164 | 8763 | IQGAP1 | 8826 |
| PRDX3 | 10935 | ZBTB24 | 9841 | ZNF512 | 84450 | ZNF500 | 26048 |
| BNIP1 | 662 | SNTB1 | 6641 | IFNAR1 | 3454 | LOC114926 | 114926 |
| ATP6V1H | 51606 | SH3BGRL2 | 83699 | PLEKHC1 | 10979 | GNAO1 | 2775 |
| KAL1 | 3730 | PCAF | 8850 | PSD | 5662 | FLJ30834 | 132332 |
| CNTN2 | 6900 | GPR4 | 2828 | MKI67 | 4288 | OLFM1 | 10439 |
| RPA3 | 6119 | MAOA | 4128 | CYP4V2 | 285440 | CALR | 811 |
| HIF1A | 3091 | VAPA | 9218 | RHOA | 387 | NDUFB9 | 4715 |
| TOR1A | 1861 | ACSL4 | 2182 | CD84 | 8832 | RUSC2 | 9853 |
| CSF2 | 1437 | PTPNS1 | 140885 | HMGCR | 3156 | SGK | 6446 |
| GZMA | 3001 | CACNB3 | 784 | SNX24 | 28966 | MGC15937 | 92292 |
| TRIP | 10293 | ATR | 545 | CSE1L | 1434 | SRPRB | 58477 |
| RAD51 | 5888 | ISG20 | 3669 | LOC253012 | 253012 | FMO1 | 2326 |
| IFNGR1 | 3459 | BLVRB | 645 | BRE | 9577 | FLJ31300 | 131669 |
| SIAT 1 | 6480 | TRIM26 | 7726 | TLN1 | 7094 | BTK | 695 |
| DF | 1675 | EDN2 | 1907 | AP3D1 | 8943 | EHMT1 | 79813 |
| TUBB | 203068 | C3 | 718 | TYROBP | 7305 | FGG | 2266 |
| MUSK | 4593 | TGFA | 7039 | FOXG1B | 2290 | PEPD | 5184 |
| CSNK1A1 | 1452 | HCK | 3055 | CD72 | 971 | CCNE1 | 898 |
| PIK3AP1 | 118788 | MMP14 | 4323 | IL7R | 3575 | HOXB2 | 3212 |

| Gene Symbol | Entrez GeneID | Gene Symbol | Entrez GeneID | Gene Symbol | Entrez GeneID | Gene Symbol | Entrez GeneID |
|---|---|---|---|---|---|---|---|
| KCNJ1 | 3758 | PBEF1 | 10135 | ARF6 | 382 | RARA | 5914 |
| WWP2 | 11060 | HIPK2 | 28996 | GFRA1 | 2674 | EGR3 | 1960 |
| PDCD7 | 10081 | PRKACB | 5567 | YY1 | 7528 | TNC | 3371 |
| TARDBP | 23435 | PPP4C | 5531 | SKIV2L | 6499 | SLC3A2 | 6520 |
| ZIC4 | 84107 | FLJ31818 | 154743 | SYK | 6850 | CD226 | 10666 |
| C40 | | GPP34R | | IBRDC2 | 255488 | TCF1 | 6927 |
| ATP6AP2 | 10159 | KIAA0399 | | APPL | 26060 | SPAG4L | 140732 |
| G3BP | 10146 | EDG6 | 8698 | FGIF | 54851 | CDKL5 | 6792 |
| COX7A2 | 1347 | FLJ35728 | 164127 | PLB1 | 151056 | C6orf37 | |
| GPR116 | 221395 | C14orf150 | 112840 | TBXAS1 | 6916 | LOC143458 | 143458 |
| PIP3AP | 54545 | KIAA1764 | 85444 | TED | | AARSL | 57505 |
| CUL1 | 8454 | MYO1F | 4542 | RAB35 | 11021 | NOLA2 | 55651 |
| IARS | 3376 | IL17R | 23765 | SENP7 | 57337 | C6orf75 | 60487 |
| NOTCH2 | 4853 | STCH | 6782 | KIAA1333 | 55632 | PTPRB | 5787 |
| CREBL2 | 1389 | C10orf45 | 83641 | MRS2L | 57380 | KIAA1357 | |
| VRK2 | 7444 | PGAM1 | 5223 | CLIC4 | 25932 | ATP11C | 286410 |
| RAP1GDS1 | 5910 | SAE1 | 10055 | ACY1L2 | 135293 | SUMF2 | 25870 |
| NEIL2 | 252969 | PCLO | 27445 | FGF18 | 8817 | GCM1 | 8521 |
| C15orf15 | 51187 | FLJ10853 | 55246 | PTOV1 | 53635 | RPS6KB1 | 6198 |
| PARG1 | 9411 | BCCIP | 56647 | PDAP1 | 11333 | PTPRN2 | 5799 |
| RABGEF1 | 27342 | COG4 | 25839 | GNB1 | 2782 | SNTB2 | 6645 |
| ANKRD15 | 23189 | MIS12 | 79003 | RPL22 | 6146 | RRM1 | 6240 |
| PCM1 | 5108 | KIAA0974 | 317662 | ZNF148 | 7707 | GPR86 | |
| DNAJC5 | 80331 | IL16 | 3603 | DAZAP2 | 9802 | | |
| SIAT7E | 81849 | SCRG1 | 11341 | AAAS | 8086 | | |
| VPS13A | 23230 | PMAIP1 | 5366 | PPIL6 | 285755 | KIAA0992 | 23022 |
| NHLH1 | 4807 | FGF13 | 2258 | TRIM47 | 91107 | TBC1D13 | 54662 |
| TNFRSF7 | 939 | RPA1 | 6117 | NUDT13 | 25961 | HECA | 51696 |
| DVL3 | 1857 | MAP2K6 | 5608 | DSC2 | 1824 | SKP1A | 6500 |
| FCGRT | 2217 | TNFSF13 | 8741 | FKBP1A | 2280 | FLJ33996 | |
| MX1 | 4599 | CHST10 | 9486 | IL15RA | 3601 | DDOST | 1650 |
| ADD2 | 119 | HCP5 | 10866 | CRABP2 | 1382 | FLJ21657 | 64417 |
| TLR2 | 7097 | KPNA3 | 3839 | ABLIM1 | 3983 | NIP30 | 80011 |

EP 1 869 976 A1

| Gene Symbol | Entrez GeneID | Gene Symbol | Entrez GeneID | Gene Symbol | Entrez GeneID | Gene Symbol | Entrez GeneID |
|---|---|---|---|---|---|---|---|
| EGR1 | 1958 | DCLRE1C | 64421 | MAP1A | 4130 | CX3CL1 | 6376 |
| SLC39A7 | 7922 | KIAA1600 | 57700 | CASP7 | 840 | SLC37A4 | 2542 |
| LOC149603 | 149603 | CGI-141 | 51026 | PRKG2 | 5593 | PSMD9 | 5715 |
| RXRG | 6258 | CPSF5 | 11051 | SDCCAG8 | 10806 | RNF128 | 79589 |
| ITGB4 | 3691 | SLCO4C1 | 353189 | MYD88 | 4615 | FLJ41410 | |
| SPAM1 | 6677 | FOXA1 | 3169 | GTF2A1 | 2957 | ATP.1B3 | 483 |
| ARRDC4 | 91947 | C20orf104 | | RFC4 | 5984 | NNT | 23530 |
| CENTA2 | 55803 | PKIB | 5570 | LITAF | 9516 | CHD5 | 26038 |
| MGAT4A | 11320 | FLJ14564 | | SMAD3 | 4088 | B3GNT6 | 11041 |
| ICAM3 | 3385 | CAMSAP1 | 157922 | CD3G | 917 | MAP2K1 | 5604 |
| SNIP1 | 79753 | FLJ10201 | | CCL4 | 6351 | MAFF | 23764 |
| SLIT2 | 9353 | FLJ13220 | 60558 | PIN1 | 5300 | CENTG1 | 116986 |
| CROT | 54677 | FLJ31818 | 154743 | FIGF | 2277 | MGC3207 | 84245 |
| ARL4A | 10124 | XBP1 | 7494 | SLMAP | 7871 | THBS1 | 7057 |
| TNIP2 | 79155 | DNAJC5 | 80331 | LL5beta | | FETUB | 26998 |
| ANXA11 | 311 | EBF | 1879 | KIF9 | 64147 | C1orf24 | 116496 |
| TREX2 | 11219 | CGI-100 | | LST1 | 7940 | OR2A7 | 401427 |
| SDCBP | 6386 | IFIT5 | 24138 | GABRRI | 2569 | ID1 | 3397 |
| C9orf40 | 55071 | IMPA1 | 3612 | MGC33382 | | GATA5 | 140628 |
| LAPTM4B | 55353 | PTEN | 5728 | GEMIN6 | 79833 | RAP2A | 5911 |
| CNN2 | 1265 | ARS2 | 51593 | Spir-1 | | CSF1R | 1436 |
| CIRHIA | 84916 | SCYE1 | 9255 | KIAA1340 | 57542 | ANXA2 | 302 |
| C10orf7 | 8872 | CLASP1 | 23332 | AKAP11 | 11215 | SMARCA2 | 6595 |
| FLJ20559 | | PDZGEF1 | | LOC115294 | 115294 | TBCC | 6903 |
| ADAMTS1 | 9510 | PIF1 | | FLJ11273 | 54664 | LCN2 | 3934 |
| TIE | | EIF2B1 | 1967 | FLJ22557 | | CHRM4 | 1132 |
| SS18L1 | 26039 | MGC22014 | 200424 | PITPNC1 | 26207 | NMI | 9111 |
| FLJ31340 | 222223 | PSG6 | 5675 | CD47 | 961 | CAT | 847 |
| DDX28 | 55794 | GSPT1 | 2935 | KIAA1706 | 80820 | CALM2 | 805 |
| PRKCH | 5583 | FLJ10826 | 55239 | AP1S2 | 8905 | BATF | 10538 |
| KIAA0513 | 9764 | ZNF291 | 49855 | RAP1B | 5908 | SORBS1 | 10580 |
| ARMCX6 | 54470 | CYCS | 54205 | WDR47 | 22911 | CREBL1 | 1388 |
| SEC22L3 | 9117 | TJP1 | 7082 | ILK | 3611 | LTA | 4049 |

EP 1 869 976 A1

(fortgesetzt)

| Gene Symbol | Entrez GeneID | Gene Symbol | Entrez GeneID | Gene Symbol | Entrez GeneID | Gene Symbol | Entrez GeneID |
|---|---|---|---|---|---|---|---|
| FKBP5 | 2289 | RPL28 | 6158 | KIAA1191 | 57179 | DGKE | 8526 |
| LILRB1 | 10859 | KIAA1949 | 170954 | SKD3 | 81570 | PLAG1 | 5324 |
| AHR | 196 | PRKRIR | 5612 | NTRK2 | 4915 | NIF3L1BP1 | 80145 |
| MRPS5 | 64969 | SLC5A6 | 8884 | KIAA0725 | | DZIP1 | 22873 |
| LOC221810 | | NIPSNAP3A | 25934 | FLNB | 2317 | TBX3 | 6926 |
| MSH3 | 4437 | BIRC1 | 4671 | FAM3C | 10447 | PTCRA | 171558 |
| PLS3 | 5358 | ASF1A | 25842 | STAT6 | 6778 | | |
| IL13RA2 | 3598 | BCAP31 | 10134 | FLJ10081 | 55683 | | |
| C5 | 727 | BCL6 | 604 | ACMSD | 130013 | | |
| DKFZp547B1713 | 128061 | FLJ20156 | 54839 | FLJ33215 | | TCF12 | 6938 |
| SCLY | 51540 | ARRDC3 | 57561 | USP36 | 57602 | BIRC3 | 330 |
| NCOA2 | 10499 | B3GNT5 | 84002 | MGC 13102 | 84283 | BIRC2 | 329 |
| CLTB | 1212 | TAPBP | 6892 | PTPRH | 5794 | ITGAM | 3684 |
| ALS2CR8 | 79800 | P5326 | | TTL | 150465 | REL | 5966 |
| ACTRIB | 10120 | SEMA6A | 57556 | KLAA1582 | | EPHA4 | 2043 |
| NOTCH3 | 4854 | ALCAM | 214 | AGXT2 | 64902 | VCAM1 | 7412 |
| TCERG1 | 10915 | DKFZp547C195 | 257160 | GPR1 | 2825 | MFAP1 | 4236 |
| CHPT1 | 56994 | MLLT3 | 4300 | PROX1 | 5629 | TXNIP | 10628 |
| LOC51057 | 51057 | GABRA2 | 2555 | HBXAP | 51773 | FLJ35954 | 166968 |
| STMN1 | 3925 | NARG1L | 79612 | GUSB | 2990 | ITGB4BP | 3692 |
| KIAA0350 | 23274 | CPNE1 | 8904 | SSA2 | 6738 | SMARCD2 | 6603 |
| STYK1 | 55359 | APTX | 54840 | FLJ21308 | | RSNL2 | 79745 |
| CNTNAP2 | 26047 | UFD1L | 7353 | GFPT1 | 2673 | FLJ20152 | 54463 |
| SOSTDC1 | 25928 | ESRRG | 2104 | LEPRE1 | 64175 | LOC93082 | 93082 |
| FLJ30990 | 150737 | CNP | 1267 | SLC26A11 | 284129 | KIAA0882 | 23158 |
| IFITM2 | 10581 | ACVR2 | 92 | FLJ10876 | | ATP13A | |
| EP300 | 2033 | USP14 | 9097 | UBE2N | 7334 | FOXD1 | 2297 |
| FBXL20 | 84961 | CLIPR-59 | 25999 | TARBP2 | 6895 | PRDX3 | 10935 |
| RNF44 | 22838 | SLC25A6 | 293 | ADD3 | 120 | TERF2IP | 54386 |
| C6orf35 | 55836 | ARFIP1 | 27236 | RRAGC | 64121 | GRHPR | 9380 |
| RAB9P40 | 10244 | C18orf51 | 125704 | ABHD8 | 79575 | SLC4A1 | 6521 |
| CSNK2B | 1460 | YIF1 | 10897 | MGC34646 | 157807 | PLA1A | 51365 |
| DAAM2 | 23500 | TACC1 | 6867 | TOB2 | 10766 | ZSWIM3 | 140831 |

| Gene Symbol | Entrez GeneID | Gene Symbol | Entrez GeneID | Gene Symbol | Entrez GeneID | Gene Symbol | Entrez GeneID |
|---|---|---|---|---|---|---|---|
| FABP4 | 2167 | ZNF3 | 7551 | TIMP1 | 7076 | SUPV3L1 | 6832 |
| CDC14B | 8555 | CLU | 1191 | LZTRI | 8216 | BRUNOL6 | 60677 |
| EFNA1 | 1942 | EMP1 | 2012 | HR | 55806 | STX5A | 6811 |
| DNMT2 | 1787 | TNPO1 | 3842 | C21orf66 | 94104 | MTRF1L | 54516 |
| C20orf108 | 116151 | LMO7 | 4008 | FLJ10849 | | ANXA7 | 310 |
| SMYD4 | 114826 | TLN1 | 7094 | C10orf48 | 283078 | ZNF236 | 7776 . |
| CDC2 | 983 | LDB2 | 9079 | PIP5K2C | 79837 | PER1 | 5187 |
| TAF12 | 6883 | AQP11 | 282679 | RAPGEF4 | 11069 | NR4A3 | 8013 |
| SLC13A3 | 64849 | ZNF347 | 84671 | HIPK3 | 10114 | GL009 | |
| MAP2K4 | 6416 | DHFR | 1719 | PBX1 | 5087 | C21orf59 | 56683 |
| MLLT2 | 4299 | ITGAX | 3687 | SPTA1 | 6708 | CPD | 1362 |
| CBL | 867 | FBLN1 | 2192 | SLC30A7 | 148867 | RFXAP | 5994 |
| TBRG4 | 9238 | MAPK14 | 1432 | CDH6 | 1004 | RPL10A | 4736 |
| DHCR7 | 1717 | CD80 | 941 | LR8 | 28959 | NIFUN | 23479 |
| RB1 | 5925 | CCL19 | 6363 | PRKCQ | 5588 | HCLS1 | 3059 |
| ITGA5 | 3678 | SMAD2 | 4087 | CCNH | 902 | SBF2 | 81846 |
| IGFBP3 | 3486 | IL1RAP | 3556 | FLJ36812 | 255252 | CDO1 | 1036 |
| RELB | 5971 | BCL10 | 8915 | FGB | 2244 | KLAA0157 | 23172 |
| TIA1 | 7072 | NGFB | 4803 | NSMAF | 8439 | NUDT1 | 4521 |
| LOC90167 | 90167 | CXCL10 | 3627 | ALOX5 | 240 | TTR | 7276 |
| DIRAS2 | 54769 | PAX3 | 5077 | HSPA1A | 3303 | TYK2 | 7297 |
| KIAA1076 | 23067 | BCL7B | 9275 | COX15 | 1355 | NEO1 | 4756 |
| PRDM1 | 639 | SLC35B4 | 84912 | PIR | 8544 | ZNF236 | 7776 |
| PVRL3 | 25945 | NEUROD2 | 4761 | ID2 | 3398 | DAB2IP | 153090 |
| PPM1L | 151742 | B7 | 10233 | HOXA1 | 3198 | CYB5 | 1528 |
| ZNF25 | 219749 | CYBA | 1535 | TNFSF13 | 8741 | PPBP | 5473 |
| ARPC3 | 10094 | ZDHHC3 | 51304 | CDC25B | 994 | FLJI0747 | 55219 |
| POU2F1 | 5451 | FGA | 2243 | SEDL | 6399 | MCAM | 4162 |
| GNLY | 10578 | LRP2 | 4036 | SEN54L | 283989 | | |
| EDG4 | 9170 | TLK1 | 9874 | KLF1 | 10661 | | |
| MYOG | 4656 | MEN1 | 4221 | SERPINE1 | 5054 | | |
| IL11 | 3589 | RAB36 | 9609 | PHF8 | 23133 | | |
| CFH | 3075 | TLR3 | 7098 | RPS 10 | 6204 | | |

| Gene Symbol | Entrez GeneID | Gene Symbol | Entrez GeneID | Gene Symbol | Entrez GeneID | Gene Symbol | Entrez GeneID |
|---|---|---|---|---|---|---|---|
| RING1 | 6015 | CD36 | 948 | ITIH2 | 3698 | | |
| P2RXL1 | 9127 | PCSK6 | 5046 | MAP3K5 | 4217 | | |
| PRKCI | 5584 | KITLG | 4254 | FLJ20032 | 54790 | | |
| MYH10 | 4628 | PDZK2 | 79849 | LAMR1 | 3921 | | |
| MTP | 4547 | RAD17 | 5884 | USP47 | 55031 | | |
| B3GNT1 | 10678 | SSA1 | | KIDINS220 | 57498 | | |
| FLJ33215 | | ACPP | 55 | MSR1 | 4481 | | |
| WARS2 | 10352 | EDG3 | | ANP32E | 81611 | | |
| NUP43 | 348995 | TP73L | 8626 | ATP8B3 | 148229 | | |
| GALNT3 | 2591 | SEC10L1 | 10640 | C7orf26 | 79034 | | |
| RAB25 | 57111 | RUNX1 | 861 | IL1RAP | 3556 | | |
| RCP | | GPR123 | 84435 | PLAC3 | | | |
| GZMH | 2999 | ZNF75 | 7626 | IL10RA | 3587 | | |
| PRKAR1A | 5573 | PDE4C | 5143 | AGTR2 | 186 | | |
| SMN2 | 6607 | DBR1 | 51163 | G22P1 | 2547 | | |
| DKFZP564O1664 | 81556 | LOC51244 | | DDR1 | 780 | | |
| KIAA1586 | 57691 | HHL | | MAPKAPK2 | 9261 | | |
| DKFZP434E2135 | | BMX | 660 | GALNT10 | 55568 | | |
| TXNRD1 | 7296 | SLC19A2 | 10560 | MGC3048 | | | |
| TSC | 54997 | AMPH | 273 | TTC9 | 23508 | | |
| SGNE1 | 6447 | NAV1 | 89796 | ANKRD24 | 170961 | | |
| RGS5 | 8490 | NFE2L2 | 4780 | ACE | 1636 | | |
| ARHGEF7 | 8874 | SLC4A3 | 6508 | POLE | 5426 | | |
| PCNP | 57092 | TLP19 | 51060 | RAB40B | 10966 | | |
| CPEB2 | 132864 | HSPC056 | | GMPS | 8833 | | |
| FLJ14525 | 84886 | RUFY2 | 55680 | CUL5 | 8065 | | |
| RAB31 | 11031 | AMSH-LP | 57559 | PPP2R5E | 5529 | | |
| KCNK7 | 10089 | C6orf152 | 167691 | GAB1 | 2549 | | |
| KIAA1221 | | ATP6V1E1 | 529 | NOLC1 | 9221 | | |
| TDE2 | 57515 | PPP2R4 | 5524 | DPP4 | 1803 | | |
| ARIH2 | 10425 | GLS | 2744 | MLH1 | 4292 | | |
| CALB2 | 794 | KIAA1041 | | CR2 | 1380 | | |
| LOC113444 | 113444 | STX12 | 23673 | CD86 | 942 | | |

(fortgesetzt)

| Gene Symbol | Entrez GeneID | Gene Symbol | Entrez GeneID | Gene Symbol | Entrez GeneID | Gene Symbol | Entrez GeneID |
|---|---|---|---|---|---|---|---|
| DSCR1L1 | 10231 | MS4A8B | 83661 | PTPN12 | 5782 | | |
| RPS6KA1 | 6195 | ZBTB1 | 22890 | DSG2 | 1829 | | |
| SLC25A22 | 79751 | FUSIP1 | 10772 | OGG1 | 4968 | | |
| FMNL3 | 91010 | FLJ21924 | 79832 | COX5A | 9377 | | |
| WDR9 | 54014 | CLASP2 | 23122 | NOS1 | 4842 | | |
| C10orf4 | 118924 | SLC39A6 | 25800 | CHAF1A | 10036 | | |
| MCCC2 | 64087 | SMCY | 8284 | ZNF354A | 6940 | | |
| BCL2L2 | 599 | MAP1B | 4131 | SCAP2 | 8935 | | |
| FBLP-1 | 54751 | FLJ12895 | 65982 | SPTAN1 | 6709 | | |
| EP400 | 57634 | CHURC1 | 91612 | NFYA | 4800 | | |

Das erfindungsgemäße Verfahren ist jedoch nicht auf diese Gene beschränkt, sondern kann auf alle Gene humanen und tierischen Ursprungs angewandt werden.

Beispiele für zellbasierte Tests sind Messungen der Vitalität der Zellen, der metabolischen Aktivität von Zellen, der Bindung von Liganden an Rezeptoren, der Aktivität von zellulären Enzymen, der Aktivität von Genen über Reporter-vermittelte Promotorstudien oder der Bildung von reaktiven Sauerstoffradikalen. Dabei können solche zellulären Assays das Ziel verfolgen die Wirksamkeit oder Wirkungsweise Substanzen zu testen. Solche getesteten Substanzen sind bevorzugterweise pharmakologisch aktive Substanzen. Die getesteten Substanzen sind bevorzugterweise Liganden für zelluläre Rezeptoren. In einer besonders bevorzugten Ausführungsform wird eine Vielzahl solcher Substanzen getestet werden. Die zellbasierten Tests können dabei in Form eines Hochdurchsatzscreening (HTS) durchgeführt werden, welches das Screening einer Vielzahl von Substanzen in kurzer Zeit erlaubt.

Bei dem erfindungsgemäßen Verfahren ist in einer Ausführungsform vorgesehen, dass die Zellen vor dem Einfrieren der Zellen behandelt werden, um sie in eine rekombinante Zelle zu überführen. Dabei wird bevorzugterweise die Nukleinsäure und bevorzugtererweise die heterologe Nukleinsäure und noch bevorzugererweise die heterologe Nukleinsäure, die für ein heterologes Molekül kodiert, in die Zelle durch Transfektion, Transduktion, Infektion eingebracht. Derartige Verfahren sind den Fachleuten auf dem Gebiet bekannt und, unter anderem beschrieben in (Graham F.L. and van der Eb A.J., Virology 52(2):456-467, 1973; Pagano J.S. et al., J. Virol. 1(5):891-897, 1967; Felgner P.L. et al. Proc. Natl. Acad. Sci. USA 84(21):7413-7417, 1987; Hamer D.H. and Leder P., Nature 281(5726):35-40, 1979; Neumann E. et al. EMBO J. 1(7):841-845, 1982).

In einer weiterhin bevorzugten Ausführungsform wird das zelluläre Molekül, d. h. das Gen oder die Gene in den Zellen bzw. das/die Transkriptions- oder Translationsprodukt(e) davon, allgemein hierin auch als das Zielmolekül bezeichnet, bevorzugterweise mit Hilfe des heterologen Moleküls in seinem Expressionsverhalten oder seiner Aktivität modifiziert, wobei die Modifikation des Expressionsverhaltens bevorzugterweise die Inhibierung, Knock down oder Knock out der Zelle darstellt. Dies gilt bevorzugterweise dann, wenn es sich bei den Genen um nicht-essentielle Gene handelt, d.h. Gene, die verschieden sind von den essentiellen Genen. Es ist auch im Rahmen der vorliegenden Erfindung, dass die Inhibierung bzw. Knock down oder Knock out der Gene, die bevorzugterweise zelluläre Moleküle im Sinne der vorliegenden Erfindung sind, erst nach dem Auftauen der Zellen erfolgt. Maßnahmen hierzu sind den Fachleuten auf dem Gebiet bekannt und sind im Detail hierin weiter beschrieben.

Maßnahmen, um die entsprechenden Zellen in ein Einfriermedium, Kulturmedium oder Zellkulturgefäß zu überführen, sind den Fachleuten auf dem Gebiet ebenfalls bekannt und umfassen, insbesondere, Aspirieren und Pipetieren.

Gemäß der vorliegenden Erfindung sind die Zellen, die Gegenstand des erfindungsgemäßen Verfahrens zum Einfrieren und Lagern von Zellen sind, rekombinante Zellen. Dabei sind rekombinante Zellen bevorzugterweise solche, bei denen eine Änderung ihrer genetischen Ausstattung gegenüber dem Wildtyp der korrespondierenden, nicht-rekombinanten Zelle vorlieget. Bevorzugterweise liegt eine derartige geänderte genetische Ausstattung dann vor, wenn ein genetisches Element in die Zelle eingeführt ist oder daraus entfernt ist. Es ist auch im Rahmen der vorliegenden Erfindung, dass eine rekombinante Zelle eine solche ist, bei der die Relativposition von einem oder mehreren genetischen Elementen oder Nukleinsäureabschnitten relativ zu anderen genetischen Elementen bzw. Nukleinsäureabschnitten gegenüber der im Wildtyp vorliegenden Anordnung verändert ist. Schließlich ist eine rekombinante Zelle im Rahmen einer Ausführungsform der vorliegenden Erfindung auch eine solche, bei der das zeitliche Expressionsmuster des oder der genetischen Elemente, insbesondere eines oder mehrerer der Gene der Zelle, gegenüber oder verglichen mit der zeitlichen Reihenfolge der genetischen Expression derselben in einer Zelle vom Wildtyp verändert ist.

Eine bevorzugte Zelle, die gemäß dem erfindungsgemäßen Verfahren behandelt wird, ist eine rekombinante Zelle, die eine heterologe Nukleinsäure enthält.

Wie hierin bevorzugterweise verwendet ist eine heterologe Nukleinsäure ein Nukleinsäuremolekül, das in dieser Form in einer korrespondierenden Zelle vom Wildtyp nicht vorkommt. Dabei umfasst der Begriff der heterologen Nukleinsäure auch solche Nukleinsäuren, die zeitlich oder örtlich geändert exprimiert werden, wobei sich die Änderung auf den Wildtyp der in Frage stehenden Zelle bezieht. Bevorzugterweise enthält die heterologe Nukleinsäure weitere Elemente, die insbesondere für die Expression der heterologen Nukleinsäure in der Zelle hilfreich sind. Derartige Elemente sind den Fachleuten bekannt und umfassen, unter anderen, Promotoren, Enhancer und Terminatoren. Die heterologe Nukleinsäure kann darüber hinaus auch Bestandteil eines größeren Nukleinsäuremoleküls sein. Ein derartiges größeres Nukleinsäuremolekül ist bevorzugterweise ein Vektor und bevorzugtererweise ein Expressionsvektor. Das besagte größere Nukleinsäuremolekül kann jedoch auch ein artifizielles humanes oder Säugetier-Chromosom sein, ein Yeast artificail chromosone (YAC), ein bakterielles artifizielles chromoson (BAK) der Zelle sein.

Besonders bevorzugte Vektoren sind dabei Plasmide ebenso wie virale Vektoren. Besonders bevorzugte Vektoren auf der Grundlage von Viren sind rekombinante Replikations-defiziente Adenoviren, Adeno-assoziierte Viren, Bacculoviren, Sendaiviren, Herpes simplex Typ 1 Viren, Lentiviren und Retroviren.

Es ist im Rahmen der vorliegenden Erfindung, dass das von der heterologen Nukleinsäure codierte heterologe Molekül mit einem oder mehreren zellulären Molekülen in Wechselwirkung tritt. Dabei ist es besonders bevorzugt, wenn die Wechselwirkung derart ist, dass das heterologe Molekül die Wirkung oder weitere Wechselwirkungen des zellulären Moleküls inhibiert bzw. einen entsprechenden Knock-Down oder Knock-Out bedingt oder zur Folge hat. Die zellulären Moleküle, mit denen das heterologe Molekül in Wechselwirkung tritt bzw. dessen Funktion oder Wechselwirkungen modifiziert, bevorzugterweise inhibiert werden, sind bevorzugterweise jene, die in Tabelle 1 hierin angegeben sind. Es ist jedoch im Rahmen der vorliegenden Erfindung, dass die zellulären Moleküle nicht auf die in Tabelle 1 angegebenen Moleküle beschränkt ist.

Eine besonders bevorzugte heterologe Nukleinsäure ist eine heterologe Nukleinsäure oder heterologes Molekül, dass aus der Gruppe ausgewählt ist, die Antisense-Moleküle, RNAi-vermittelnde Moleküle, Aptamere, Anticaline, Peptid-Aptamere und Antikörper umfasst.

Antikörper, wie hierin verwendet, sind bevorzugterweise monoklonale Antikörper, die gemäß dem Protokoll von Cäsar und Milstein und Weiterentwicklungen davon hergestellt werden können. Antikörper sind dabei auch Antikörperfragmente oder -derivate, wie bspw. Fab-Fragmente, Fc-Fragmente aber auch einzelsträngige Antikörper, solange diese generell in der Lage sind, an das Zielmolekül und insbesondere das zelluläre Molekül spezifisch zu binden. Neben monoklonalen Antikörpern können auch polyklonale Antikörper verwendet werden.

Peptide oder Polypeptide, die mit einem Zielmolekül, und im Rahmen der vorliegenden Erfindung somit insbesondere mit einem zellulären Molekül in Wechselwirkung treten, können mit im Stand der Technik bekannten Verfahren wie beispielsweise Phage-Display gescreent werden. Diese Techniken sind den Fachleuten auf dem Gebiet bekannt. Dabei wird bei der Erzeugung derartiger Peptide, die auch als Peptid-Aptamere bezeichnet werden, typischerweise so vorgegangen, dass eine Peptid-Bibliothek angelegt wird, bspw. in Form von Phagen, und diese Bibliothek in Kontakt gebracht wird mit einem Zielmolekül. Die bindenden Peptide werden sodann typischerweise als Komplex zusammen mit dem Zielmolekül von den nicht bindenden Mitgliedern der Bibliothek entfernt. Es ist dabei im Rahmen der Kenntnisse der Fachleute auf diesem Gebiet, dass die Bindungseigenschaften zumindest bis zu einem bestimmten Umfang von den jeweils konkret vorliegenden Versuchsbedingungen, wie bspw. Salzgehalt und dergleichen, abhängen. Nach Abtrennen der mit einer höheren oder stärkeren Affinität oder Kraft an das Zielmolekül bindenden Peptide von den nicht-bindenden Mitgliedern der Bibliothek bzw. vom Zielmolekül können diese sodann charakterisiert werden. Gegebenenfalls ist vor der Charakterisierung ein Amplifikationsschritt, bspw. durch Vermehrung der entsprechenden, das Peptid bzw. die Peptide codierende Phagen erforderlich. Die Charakterisierung umfasst bevorzugter Weise die Sequenzierung der an das Zielmolekül bindenden Peptide. Die Peptide sind dabei hinsichtlich Ihrer Länge grundsätzlich nicht beschränkt. Typischerweise werden in derartigen Verfahren jedoch Peptide mit einer Länge von 8 bis 20 Aminosäuren erhalten bzw. verwendet. Die Größe der Bibliotheken beträgt $10^2$ bis $10^{18}$, bevorzugter Weise $10^8$ bis $10^{15}$ verschiedene Peptide.

Eine spezielle Form von an Zielmolekülen bindenden Polypeptiden stellen die Anticaline dar, wie sie beispielsweise in der deutschen Patentanmeldung DE 197 42 706 beschrieben sind.

Weiterhin können auch kleine Moleküle verwendet werden, die die Wirkung der Zielmoleküle antagonisieren. Derartige kleine Moleküle können beispielsweise durch ein Screeningverfahren, insbesondere ein Screening von Bibliotheken kleiner Moleküle identifiziert werden. Dabei wird das Zielmolekül mit einer Bibliothek in Kontakt gebracht und jene Mitglieder der Bibliothek, die daran binden, ermittelt, gegebenenfalls von den anderen Mitgliedern der Bibliothek bzw. vom Target abgetrennt und optional weiter charakterisiert. Auch hier wird die Charakterisierung des kleinen Moleküls nach den Fachleuten auf diesem Gebiet bekannten Verfahrensweisen erfolgen, so z.B. die Verbindung identifiziert und die Molekularstruktur bestimmt werden. Diese Bibliotheken umfassen dabei so wenig wie zwei und soviel wie bis zu mehrere 100 000 Mitglieder. Derartige kleine Moleküle werden auch als small molecules bezeichnet und sind solche, die der "Lepinsky Rule offive" folgen.

Aptamere, wie hierin verwendet, sind D-Nukleinsäuren, entweder einzelsträngig oder doppelsträngig, die spezifisch an ein Zielmolekül binden. Die Herstellung von Aptameren ist bspw. beschrieben im Europäischen Patent EP 0 533 838. Dabei wird wie folgt vorgegangen:

Bei dem Verfahren zur Erzeugung der Aptameren wird eine Mischung aus Nukleinsäuren, d. h. potentiellen Aptameren bereitgestellt, wobei eine jede Nukleinsäure aus einem Segment aus wenigstens acht aufeinanderfolgenden, randomisierten Nukleotiden besteht und diese Mischung mit dem Zielmolekül in Kontakt gebracht wird, wobei Nukleinsäuren, die an das Zielmolekül binden, ggf. auf der Grundlage einer erhöhten Affinität, verglichen mit der Kandidatenmischung, vom Rest der Kandidatenmischung abgetrennt werden und die solchermaßen erhaltenen an das Zielmolekül, ggf. mit einer höheren Affinität oder Kraft, bindenden Nukleinsäuren amplifiziert werden. Diese Schritte werden mehrfach wiederholt, so dass am Ende des Verfahrens spezifisch an das jeweilige Zielmolekül bindende Nukleinsäuren, sogenannte Aptamere, erhalten werden. Es ist im Rahmen der vorliegenden Erfindung, dass diese Aptamere stabilisiert werden können, bspw. durch Einführung bestimmter chemischer Gruppen, wie den Fachleuten auf dem Gebiet der Aptamer-Entwicklung bekannt. Aptamere werden derzeit bereits therapeutisch eingesetzt. Es ist auch im Rahmen der vorliegenden Erfindung, dass die solchermaßen hergestellten Aptamere für die Targetvalidierung und als Leitsubstanzen für die Entwicklung von Medikamenten, insbesondere von kleinen Molekülen, verwendet werden.

Auf einem grundsätzlich ähnlichen Prinzip beruht die Herstellung oder Erzeugung von Spiegelmeren, die im Rahmen der vorliegenden Erfindung auf der Grundlage der Zielmoleküle entwickelt werden können. Die Herstellung von Spiegelmeren ist bspw. beschrieben in der internationalen Patentanmeldung WO 98/08856. Spiegelmere sind L-Nukleinsäure, d.h. bestehen aus L-Nukleotiden, und zeichnen sich im wesentlichen dadurch aus, dass sie in biologischen Systemen eine sehr hohe Stabilität aufweisen und gleichzeitig, vergleichbar den Aptameren, mit einem Zielmolekül spezifisch wechselwirken bzw. an dieses binden können. Dabei wird genauer so vorgegangen, dass eine heterogene Population aus D-Nukleinsäuren erzeugt wird, die Population mit dem optischen Antipoden des Zielmoleküls in Kontakt wird, im vorliegenden Falle somit mit dem D-Enantiomer des natürlicher Weise auftretenden L-Enantiomers, sodann jene D-Nukleinsäuren abgetrennt werden, die nicht mit der optischen Antipode des Zielmoleküls in Wechselwirkung getreten sind, die D-Nukleinsäuren, die mit der optischen Antipode des Zielmoleküls in Wechselwirkung getreten sind, bestimmt, ggf. abgetrennt und sequenziert werden und anschließend L-Nukleinsäuren synthetisiert werden, die in ihrer Sequenz mit derjenigen zuvor für die D-Nukleinsäuren ermittelten Sequenzen identisch sind. Ähnlich dem Verfahren zur Herstellung von Aptameren ist es auch hier möglich, durch mehrfaches Wiederholen der Schritte geeignete Nukleinsäuren, d.h. Spiegelmere anzureichern bzw. zu erzeugen.

Eine weitere Klasse von Verbindungen, die unter Verwendung der Zielmoleküle hergestellt bzw. entwickelt werden können, sind Ribozyme, Antisense-Oligonukleotide und RNAi.

All diesen Klassen ist dabei gemein, dass sie nicht auf der Ebene des Translationsproduktes der Zielmoleküle ihre Wirkung entfalten, sondern auf der Ebene der für das jeweilige Protein codierenden Nukleinsäure. Oder, anders ausgedrückt, diese Klasse ist geeignet für Zielmoleküle, die als codierende oder nicht-codierende Nukleinsäuren vorliegen.

Bei Ribozymen handelt es sich um katalytisch aktive Nukleinsäuren, die bevorzugter Weise aus RNA aufgebaut sind und aus zwei Teilbereichen bestehen. Der erste Teilbereich ist für eine katalytische Aktivität verantwortlich, wohingegen der zweite Teil für eine spezifische Wechselwirkung mit einer Ziel-Nukleinsäure verantwortlich ist. Kommt es zur Ausbildung einer Wechselwirkung zwischen der Ziel-Nukleinsäure und dem zweiten Teil des Ribozyms, typischer Weise durch Hybridisierung von zueinander im wesentlichen komplementären Basenbereichen, kann der katalytische Teil des Ribozyms entweder intramolekular oder intermolekular, wobei letzteres bevorzugt ist, die Ziel-Nukleinsäure hydrolysieren für den Fall, dass die katalytische Wirkung des Ribozyms eine Phosphodiesterase-Aktivität ist. In der Folge kommt es zu einem - ggf. weiteren - Abbau der codierenden Nukleinsäure, wobei der Titer des Zielmoleküls sowohl auf der Nukleinsäure- als auch der Proteinebene sowohl intrazellulär als auch extrazellulär verringert wird. Ribozyme, deren Verwendung sowie Konstruktionsprinzipien sind den Fachleuten auf dem Gebiet bekannt und bspw. beschrieben in Doherty und Doudna (Ribozyme structures and mechanisms. Annu Rev Biophys Biomol Struct 2001; 30:457-75) und Lewin und Hauswirth (Ribozyme gene therapy: applications for molecular medicine. Trends Mol Med 2001, 7:221-8).

Auf einem grundsätzlich ähnlichen Wirkmechanismus beruht die Verwendung von Antisense-Oligonukleotiden. Antisense-Oligonukleotide hybridisieren infolge Basenkomplementarität typischerweise mit einer Ziel-RNA, normalerweise mit mRNA und aktivieren dadurch RNAaseH. RNAaseH wird sowohl durch Phosphodiester als auch Phosphorothioatgekoppelte DNA aktiviert. Phosphodiester-gekoppelte DNA wird jedoch schnell durch zelluläre Nukleasen mit Ausnahme von Phosphorothioat-gekoppelter DNA abgebaut. Diese resistenten, nicht-natürlicher Weise auftretende DNA-Derivate inhibieren RNAaseH nicht, wenn sie mit RNA hybridisiert sind. Mit anderen Worten, Antisense-Polynukleotide sind nur als DNA-RNA-Hybridkomplex wirksam. Beispiele für derartige Antisense-Oligonukleotide finden sich, u.a. in US-Patent US 5,849,902 oder US 5,989,912. Prinzipiell besteht das wesentliche Konzept der Antisense-Oligonukleotide darin, gegen bestimmte RNA eine komplementäre Nukleinsäure bereitzustellen. Mit anderen Worten, ausgehend von der Kenntnis der Nukleinsäuresequenz des Zielmoleküls können durch Basenkomplementarität geeignete Antisense-Oligonukleotide hergestellt werden, die zu einem Abbau der codierenden Nukleinsäure, insbesondere der mRNA des Zielmoleküls, führen.

Eine weitere Klasse von Verbindungen sind RNAi-vermittelnde Moleküle. Derartige Mittel weisen typischerweise eine Länge von etwa 21 bis 23 Nukleotiden auf Dabei entspricht einer der beiden Stränge der RNA einer Sequenz eines abzubauenden Genes. Mit anderen Worten, ausgehend von der Kenntnis der für das Zielmolekül codierenden Nukleinsäure, insbesondere der mRNA, kann eine doppelsträngige RNA hergestellt werden, wobei einer der beiden RNA-Stränge komplementär zu der besagten, für das Zielmolekül codierenden Nukleinsäure ist, bevorzugter Weise zur mRNA, und diese dann zum Abbau der entsprechenden codierenden Nukleinsäure führt und damit einhergehend zu einer Verringerung des Titers des jeweiligen Zielmoleküls. Die Erzeugung und Verwendung von RNAi als Medikament bzw. diagnostisches Mittel ist bspw. beschrieben in den Internationalen Patentanmeldungen WO 00/44895 und WO 01/75164.

In einer besonders bevorzugten Ausführungsform ist die heterologe Nukleinsäure ein RNAi-vermittelndes Molekül. Die folgenden Ausführungen werden beispielhaft unter Bezugnahme auf derartige RNAi-vermittelnde Moleküle offenbart, gelten jedoch in gleicher Weise für eine jegliche andere, durch eine heterologe Nukleinsäure codierte Molekülspezies und insbesondere für Antisens-Moleküle, Aptamere, Anticaline, Peptid-Aptamere und Antikörper.

Für die RNAi-Technologie macht man sich die Eigenschaft von zellulären Enzymen, so genannten DNA-abhängige RNA-Polymerasen, zunutze, die in der Lage sind einen Abschnitt einer DNA in eine RNA zu überschreiben.

Entsprechend können zur Auslösung des RNAi-Prozesses DNA-Abschnitten in Zellen eingebracht werden, die für eine siRNA-Sequenz codieren. Dabei kann ausgehend von den DNA-Abschnitten zunächst die Bildung einer intermediären shRNA erfolgen, oder die doppelsträngige siRNA durch separate Expression der komplementären RNA Einzelstränge entstehen; die shRNA und die doppelsträngige siRNA werden im Anschluss daran, d.h. nach ihrer Expression durch zelluläre Enzyme zu einer aktiven siRNA prozessiert. DNA-basierte Vektoren, welche solche shRNA oder siRNAs exprimieren, werden hierin als siRNA-Vektoren bezeichnet. Diese Technologie wird auch als DNA-directed RNAi (ddRNAi) bezeichnet. Sowohl diese Technologie als auch die entsprechenden Vektoren sind im Stand der Technik als solches bekannt.

Zur Expression der DNA-Abschnitte sind weitere genetische Elemente erforderlich, insbesondere ein Promotor. Ein Promotor gewährleistet, dass die DNA-abhängigen RNA-Polymerasen an die DNA binden und die Transkription der RNA initiiert wird. Der Promoter kann derart gestaltet sein, dass die Bindung der RNA-Polymerase und die einhergehende Transkription der RNA erst bei Anwesenheit eines aktivierenden Moleküls, d.h. eines Induktors erfolgt. Solche Systeme werden als induzierbare Expressionssysteme, bzw. induzierbare Promotoren bezeichnet. Beispiele für solche Systeme sind das Tetrazyklin-induzierbare Expressionssyteme (Gossen M. und Bujard H., Proc Natl Acad Sci U S A 89(12): 5547-51, 1992), das Ekdyson-induzierbare Expressionssystem (No D. et al., Proc. Natl. Acad. Sci. USA 93:3346-3351, 1996), das P1 Cre/lox Rekombinationssystem (Dale E.C. and Ow D.W., Proc. Natl. Acad. Sci. 88:10558-10562, 1991), das Estradiol-induzierbare Expressionssystem (Whelan J. And Miller N., J Steroid Biochem Mol Biol. 58(1):3-12,1996) sowie Ribozym-basierte induzierbare Expressionssyteme (Yen L. et al., Nature 431:471-476, 2004). Die bei der ddRNAi-Technologie verwendeten DNA-Vektoren können somit genauso wie chemisch synthetisierte siRNAs für die gezielte Ausschaltung von Genen in tierischen und menschlichen Zellen verwendet werden.

Zu einer weiteren Klasse an dsRNA Molekülen, die die Funktion von Genen ausschalten oder verändern können, gehören auch endogene mikro-RNAs (miRNAs), wie z. B. in der Veröffentlichung von Lee at al. beschrieben (Lee R.C. et al., Cell 75(5):843-854, 1993 beschrieben sind. miRNAs werden durch Gene kodiert und in mRNA transkribiert. Abschnitte dieser mRNA sind komplementär zueinander, so dass sich das Molekül in eine RNA-Struktur mit partiellem Doppelstrangcharakter faltet. Dieser Bereich besteht aus einem dsRNA-Stamm und einer Schleifen- oder Loopregion, welche die beiden homologen Bereiche verbindet. Endogene Enzyme erkennen diese Struktur und prozessieren daraus kleinere einzelsträngige RNA-Moleküle, welche ihrerseits wieder eine Homologie zu weiteren, endogenen mRNAs besitzen, deren Abbau sie verursachen. Für diesen miRNA-induzierten Abbauprozess sind dieselben Klassen an körpereigenen Enzymen verantwortlich, welche auch die RNAi für shRNA und siRNAs vermitteln.

Eine weitere Klasse von dsRNA Molekülen, die die Funktion von Genen ausschalten oder verändern können, stellen die Endoribonuklease-behandelte siRNAs (esiRNA) dar. Dabei entstehen von einem größerem Abschnitt doppelsträngiger RNA, die zu einem Gen homolog ist, über den Verdau mit einer Endoribunuklease kurze, doppelsträngige RNAs. Diese esiRNAs initiieren analog zu den siRNAs den Abbau der mRNA des Gens zu dem sie homolog sind.

Für RNAi-Versuche bzw. die Auslösung von RNAi werden siRNA oder siRNA-Vektoren in die Zellen eingebracht. Durch das Wachstum der Zellen und der dadurch bedingten Zunahme der Zellmasse in einer Kultur werden solche genetischen Elemente ausgedünnt, so dass auch deren Einfluss auf die Genexpression zeitlich begrenzt ist. Man spricht dann von transienter Transfektion. Für jeden RNAi-Versuch müssen daher erneut siRNA oder siRNA-Vektoren in die Zellen eingebracht werden.

Unter einer RNAi Bibliothek versteht man bevorzugterweise eine Vielzahl gegen unterschiedliche Gene gerichteter siRNAs. Solche siRNA Bibliotheken werden eingesetzt, um (eine) bestimmte Funktion(en) von Gruppen von Genen, oder der Gesamtheit der Gene (Genom) eines Organismus in zellulären Assays zu untersuchen. siRNA Bibliotheken können typischerweise nur in speziell ausgestatteten Versuchseinrichtungen eingesetzt werden, da die Transfektion, Transduktion oder Infektion der Zellen und die Kontrolle der Effizienz des Knock-Down nur unter erheblichem aparativem Aufwand möglich ist. Daher ist die Verwendung von siRNA Bibliotheken für den Wissenschaftler in einem normal ausgestatteten Labor nicht möglich. Das erfindungsgemäße Verfahren löst auch dieses Problem, in dem bereits transfizierte, transduzierte oder infizierte Zellen einer siRNA Bibliothek eingefroren, gelagert und Wissenschaftlern geliefert werden können.

Die Effizienz der Transfektion mit siRNAs oder siRNA-kodierenden Vektoren bestimmt nachhaltig die Menge der in der Zelle wirksamen siRNA Moleküle und damit auch die Effizienz des induzierten RNAi-Effekts. Die Effizienz der Transfektion ist von einer Vielzahl von Faktoren, wie der Zusammensetzung des Mediums, dem physiologischem Zustand oder aber Passagenzahl der Zelle, abhängig. Viele dieser Faktoren sind vom Experimentator nur schwer zu kontrollieren. Daher kommt es oft zu Schwankungen der Effizienz der Transfektion, was zu unterschiedlichen Versuchsergebnissen innerhalb einer Testreihe führt und so die Interpretation von Versuchsergebnissen erschwert, weshalb das erfindungsgemäße Verfahren gerade für diese Art von Anwendungen so vorteilhaft ist.

Um das Problem der transienten Expression zu umgehen, werden DNA-Vektoren verwendet; die zusätzlich zum eingebrachten Gen ein Selektionsgen wie beispielsweise für ein Selektionsantibiotikum, die den Fachleuten auf dem Gebiet bekannt sind, tragen. Durch Behandlung mit einem Selektionsantibiotikum wird sichergestellt, dass nur Zellen überleben, die das Selektionsgen und damit auch das interessierende Gen in ihr Genom eingebaut haben. Als DNA-Vektoren eignen sich besonders Plasmid-basierte DNA-Vektoren, Retroviren, und besonders die Klasse der Lentiviren, welche auch nicht-teilende Zellen erfolgreich transduzieren und das Virusgenom in das Wirtsgenom integrieren können. Die genetische Veränderung wird dadurch bei jeder Zellteilung an die Tochterzellen weitergegeben, wodurch eine stabile Expression des betreffenden Gens erreicht wird. Diese Technologie findet auch für siRNA-Vektoren Anwendung. Der Nachteil stabiler Expression ist, dass die Herstellung einer Zelllinie sehr zeit- und personalintensiv ist.

Zum gezielten transienten Ausschalten von Genen wird eine siRNA in die Zelle gebracht, um die RNAi auszulösen. Dies kann beispielsweise durch Transfektion mit einer synthetischen siRNA oder einem DNA-Vektor, bevorzugt durch die Transduktion oder Infektion mit einem rekombinanten Adenovirus, Adeno-assoziierten Virus, Bacculovirus, Sendaivirus, Herpes simplex Virus, Lentivirus, Retrovirus, oder eines anderen für den Gentransfer geeigneten DNA-Vektors erfolgen. Der Vorteil von siRNA-exprimierenden Adenoviren besteht darin, dass ein, im Vergleich zur Verwendung von synthetischer siRNA, wesentlich breiteres Spektrum an Zelllinien, aber auch primäre Zellen, mit hoher Effizienz transduziert werden kann. Dadurch wird auch eine hohe Effizienz des RNAi-Effektes möglich. Zudem werden Adenoviren aktiv über Rezeptor-vermittelte Mechanismen von der Zelle aufgenommen, wodurch der ausgelöste Effekt unabhängig von veränderlichen Parametern einer Zellkultur ist.

Für die Transfektion, Transduktion oder Infektion können Zellen aus wachsenden oder nichtwachsenden Zellkulturen verwendet werden. Bei wachsenden Zellkulturen werden vorzugsweise Zellen aus Zellkulturen der exponentiellen Wachstumsphase verwendet. Dabei sind bevorzugterweise vor der Transfektion, Transduktion oder Infektion gerade so viele Zellen in dem Gefäß, dass der Boden des Gefäßes gleichmäßig und zu nicht mehr als 90 % mit Zellen bedeckt ist. Die Transfektion, Transduktion oder Infektion der Zellen zum Auslösen der RNAi kann zwischen etwa 30 Minuten und 144 Stunden, bevorzugt zwischen etwa 10 und 24 Sunden, besonders bevorzugt zwischen etwa 16 und 20 Stunden vor dem Einfrieren der Zellen auf die Lagertemperatur erfolgen.

Bei Einbringen einer siRNA oder eines nicht-induzierbaren DNA-Vektors für die Expression von siRNA für einen Knock-Down eines Gens aus der Klasse der essentiellen Gene erfolgt die Transfektion, Transduktion, oder Infektion 30 Minuten bis 12h, besonders bevorzugt zwischen 1h und 6 h vor dem Einfrieren auf die Lagertemperatur. Wird hingegen ein DNA-Vektor verwendet, bei welchem die Bildung von siRNA erst in Gegenwart eines Induktors erfolgt, wird die Transfektion, Transduktion oder Infektion der Zellen zum Auslösen der RNAi zwischen 30 Minuten und 144 Stunden, bevorzugt zwischen 10 und 24 Stunden, besonders bevorzugt zwischen 16 und 20 Stunden vor dem Einfrieren der Zellen auf die Lagertemperatur durchgeführt. Die Ernte der Zellen erfolgt vorzugsweise vor dem Erreichen der vollständigen Bedeckung des Zellkulturgefäßes mit einem lückenlosen Zellrasen, d.h. vor Erreichen einer vollständigen Konfluenz.

Die Erfindung wird nun anhand der folgenden Beispiele und Figuren weiter erläutert, aus denen sich weitere Merkmale, Ausführungsformen und Vorteile der Erfindung ergeben. Dabei zeigt

Fig. 1    das Ergebnis des p53-Knock-Downs in dem Western blot gemäß Beispiel 1;

Fig. 2    das Ergebnis einer mikroskopischen Untersuchung der Zellmorphologie der in Beispiel 1 beschriebenen Zellen, wobei

Fig. 2A HCT 116-Zellen nach normaler Kultivierung,

Fig. 2B HCT116-Zellen nach 24 Stunden nach Auftauen aus einer 96-Well-Multititerplatte; und

Fig. 2C mit Ad.shRNA.p53-infizierte HCT116-Zellen 24 Stunden nach Auftauen aus einer 96-Well-Multititerplatte zeigt;

Fig. 3    die Vitalität der Zellen aus Beispiel 2, wie mit dem WST-8-Reduktionsassay gemessen;

Fig. 4    die Vitalität der Zellen gemäß Beispiel 3, wobei die Zellvitalität gemessen ist mit dem WST-8-Reduktionsassay;

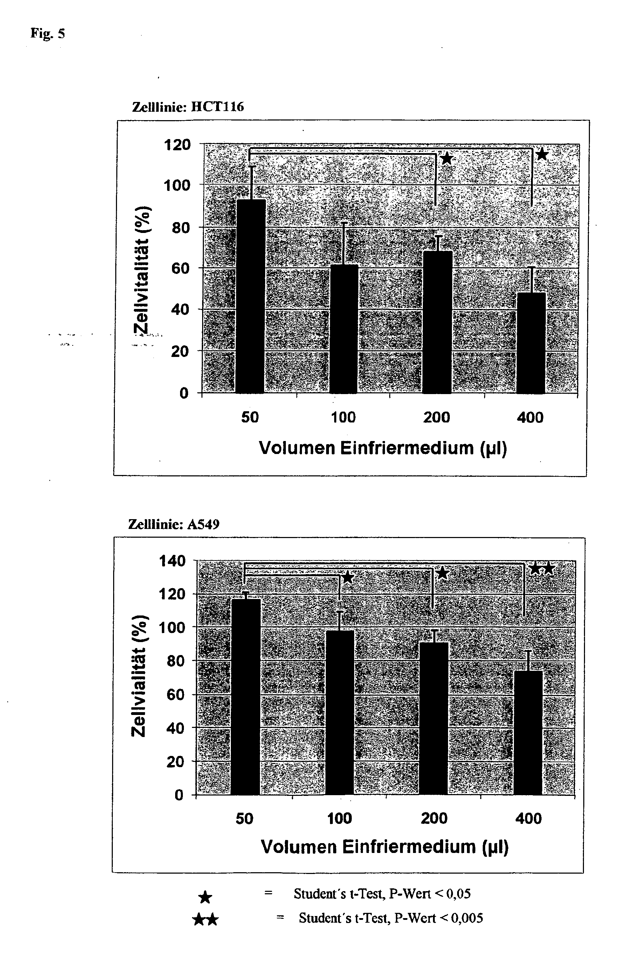

Fig. 5    die Vitalität der Zellen gemäß Beispiel 4, wobei die Zellvitalität gemessen ist mit dem WST-8-Reduktionsassay;

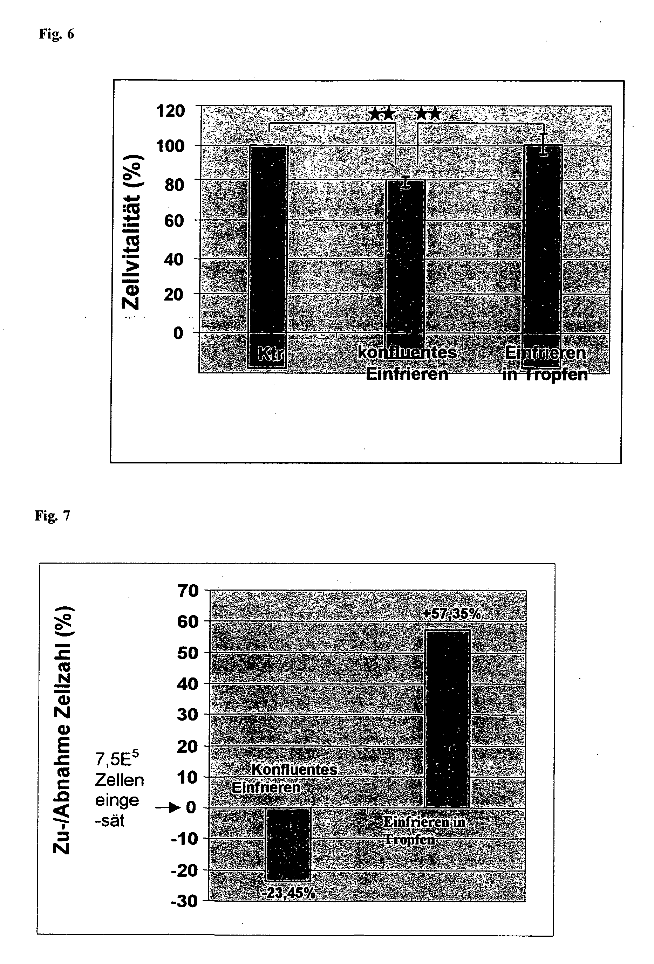

Fig. 6    die Vitalität der Zellen gemäß Beispiel 5, wobei die Zellvitalität gemessen ist mit dem WST-8-Reduktionsassay; und

Fig. 7    die Vitalität der Zellen gemäß Beispiel 5, wobei die Zellvitalität gemessen ist mit dem WST-8-Reduktionsassay;

**Beispiel 1: Einfrieren und Lagern von HCT116 Zellen mit Knock-down gegen p53**

HCT 116 (ATCC: CCL-247) Darmkrebszellen wurden in dem Kulturmedium McCoy's Komplettmedium (McCoy's, 2mM L-Glutamine, 10% FCS) kultiviert, bis eine ausreichende Anzahl von Zellen zum Infizieren mit einem shRNA-Adenovirus zur Hemmung von p53 (Ad.shRNA.p53) zur Verfügung stand.

Ad.shRNA.p53 ist ein E1/E3-deletierter Adenovirus mit der zu p53 homologen sense shRNA-Sequenz gactccagtggtaatctac unter der Kontrolle des RNA Polymerase III Promotors U6. Die Konstruktion des Adenovirus Ad.shRNA.p53 erfolgte durch Klonieren der shRNA-Sequenz (Brummelkamp T.R. et al., Science, 296(5567):550-553, 2002) für den Knock-Down von p53 in den Vektor pENTR™/U6 (Invitrogen, Carlsbad, Califorien, USA) und der anschließenden homologen Rekombination *in vitro* mit dem Vektor pAd/Block-iT™-DEST RNAi Gateway ® vector system gemäß den Angaben des Herstellers (Invitrogen, Carlsbad, Califorien, USA).

Das Kulturmedium wurde abgenommen und für die Transduktion durch ein Kulturmedium mit reduziertem Serumgehalt (2% FCS) ersetzt. Danach würden 2 oder 8 infektiöse Viruspartikel (multiplicity of infection = MOI) des Ad.shRNA.p53 pro Zelle in das Kulturmedium gegeben und für 16h inkubiert Die multiplicity of infection (MOI) wurde durch Ermittlung des zytopathischen Effekts nach Infektion von 293 Zellen mit Verdünnungen, des mittels Ultrazentrifugation mit CsCI-Gradienten gereinigten Virus Ad.shRNA.p53, ermittelt (TCID50).

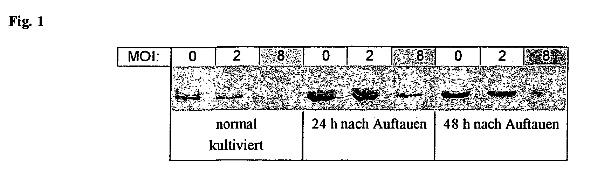

Das Zellkulturmedium wurde entfernt und die Zellen wurden 3-mal mit PBS gewaschen, bevor mit einer Trypsinlösung (2,5g/l) die adhärenten Zellen von der Zellkulturgefäßoberfläche gelöst wurden. Die Zellen wurden in Kulturmedium aufgenommen, die Zellzahl bestimmt, die Zellen bei 100 x g für 5 Minuten bei Raumtemperatur zentrifugiert und das Zellpellet mit Einfriermedium (95% Komplettmedium, 5% DMSO) auf eine Zellzahl von $5 \times 10^5$ Zellen pro Milliliter eingestellt. Nachfolgend wurden je $50\mu l$ dieser Zellsuspension in jede Kavitäten einer 96-well Multititerplatte gegeben. Als Kontrolle (Ktr. in Fig. 1) wurde mit HCT116 Zellen, die nicht mit Adenovirus infiziert waren, in gleicher Weise eine Zellsuspension hergestellt und jeweils $50\mu l$ dieser Zellsuspension in jede Kavität einer 96-well Multititerplatte überführt. Die 96-well Multititerplatten wurden mit einem Vakuumiergerät in einen Plastikbeutel eingeschweißt ($20\mu m$ Polyamid /$70\mu M$ Polyethylen, Alexander Brandau, vakuumtüte.de), wobei die Multititerplatten auf einen Atmosphärendruck von 0,2 bar gebracht wurden. Danach wurden die Multititerplatten in einen Gefrierschrank mit einer Temperatur von -78°C überführt, wobei die Platten mit ihrer Unterseite direkt auf einen Einlegeboden platziert wurden.

Nach 2-wöchiger Lagerung wurden zunächst die Plastikfolie der Plastikbeutel entfernt und die Zellen in einen Zellkulturinkubator (37°C, 5% $CO_2$, 90% Luftfeuchte) überführt. Nach 30 Minuten wurde $150\mu l$ frisches Kulturmedium pro Kavität der Multititerplatten den in $50\mu l$ Einfriermedium suspendierten Zellen zugegeben. Nach 48h wurden Lysate der Zellen mit einem Lysispuffer (50mM Tris-HCl pH 8,0; 150mM NaCl; 1mM EDTA; 0,5 mM Dithiothreitol; 2 $\mu M$ Leupeptin; 1 mM Benzamidine; 2$\mu M$ Aprotinine; 0,5% Nonidet-P40) hergestellt, die Gesamtproteinmenge der Lysate nach der Methode von Bradford (Bradford M.M., Anal. Biochem. 7;72:248-254, 1976) bestimmt und gleiche Mengen Protein pro Probe auf ein 12,5% SDS-Polyacrylamidgel aufgetragen. Nach Auftrennung der Proteine mittels Elektrophorese wurden die Proteine aus dem Gel auf eine Polyvinylidenfluorid (PVDF)-Membran transferiert und mit einem p53-spezifischen monoklonalen Antikörper (Klon DO-1, BD Pharmingen) ein Western blot zum Nachweis des p53 Proteins durchgeführt (Fig. 1).

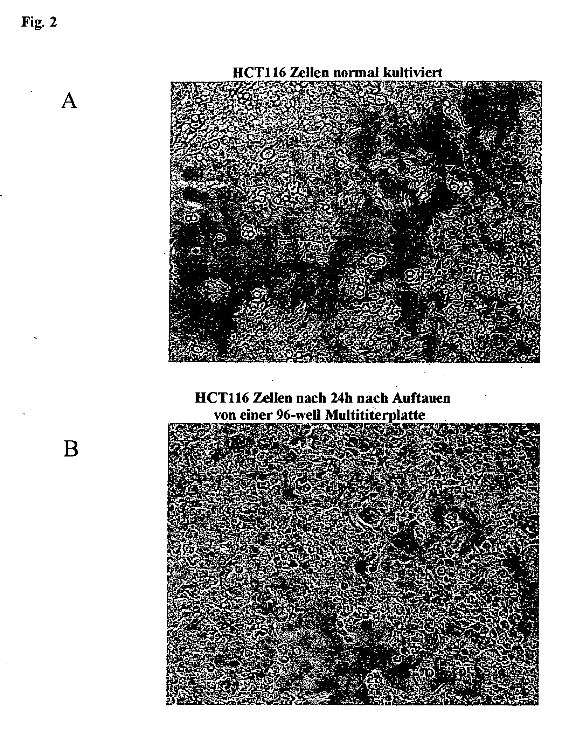

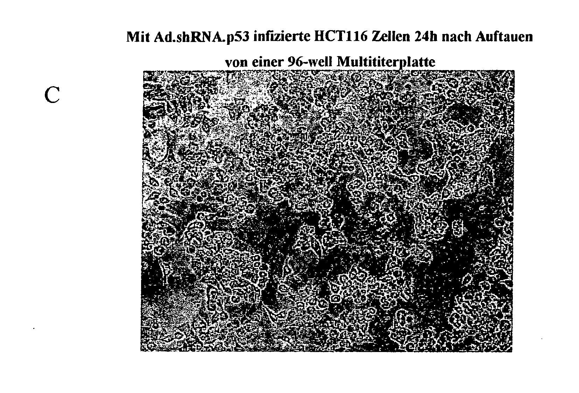

Parallel wurde die Integrität der Zellen nach dem erfindungsgemäßen Einfrierverfahren mit Zellen in nicht eingefrorenen Kontrollgefäßen im Mikroskop verglichen. Dazu wurde das Kulturmedium abgenommen und die Zellen mit PBS überschichtet. Mit dem Mikroskop Zeiss AxioVert 35, ausgestattet mit einer digitalen Kamera (AxioCam MR), und dem Bildverarbeitungssoftware Axio Vision wurden Durchlichtaufnahmen in 400-facher Vergrößerung generiert (Fig. 2). Die Ergebnisse sind in Fig. 2A-C dargestellt.

Fig. 1 zeigt eine vergleichbare Abnahme der Bandenintensität im p53-Western Blot von Ad.shRNA.p53-transduzierten HCT116 Zellen in eingefrorenen (24h nach Auftauen, 48h Stunden nach Auftauen) und nicht eingefrorenen Zellen (normal kultiviert). Dabei blieb der Knock-down bis zu 48h nach Auftauen erhalten.

Das Beispiel 1 zeigt somit, dass HCT116 Zellen, welche gemäß dem in Beispiel 1 beschriebenen Verfahren eingefroren wurden, 48h Stunden nach Auftauen eine intakte Morphologie aufweisen.

Soweit nicht anders angegeben wurden in den folgenden Beispielen die gleichen Verfahren angewendet wie in Beispiel 1.

**Beispiel 2: Zytotoxizität von 5-Fluorouracil in HCT116 mit und ohne p53 Knock-down**

Um die Funktionalität der nach dem in Beispiel 1 beschriebenen erfindungsgemäßen Verfahren eingefrorenen Zellen zu zeigen, wurden die Zellen nach dem Auftauen in ein Zytotoxizitäts-Assay verwendet. HCT116 Zellen wurden nach Infektion mit Ad.shRNA.p53 in 96-well Multiwellplatten wie in Beispiel 1 beschrieben eingefroren. Als Kontrolle wurden unbehandelte HCT116 verwendet. Nach dem Einfrieren wurden die Zellen nach einem Monat wieder aufgetaut und unterschiedliche Konzentrationen des Chemotherapeutikums 5-Fluorouracil in das in Beispiel 1 beschriebene Kulturmedium gegeben. Nach 48h wurde die Zytotoxizität von 5-Fluorouracil bestimmt, indem das Kulturmedium durch ein mit WST-8 versetztes Kulturmedium (CCK8-Assay, Dojindo Molecular Technologies, Inc.) gemäß den Angaben des Herstellers ersetzt wurde. Dazu wurde die metabolische Aktivität anhand des Umsatz des Tetrazoliuumsalzes WST-8 (WST-8 Reduktionsassay) von 5-Fluorouracil behandelter Zellen bestimmt und mit der metabolischen Aktivität unbehandelter Zellen (Zellvitalität 100%) verglichen.

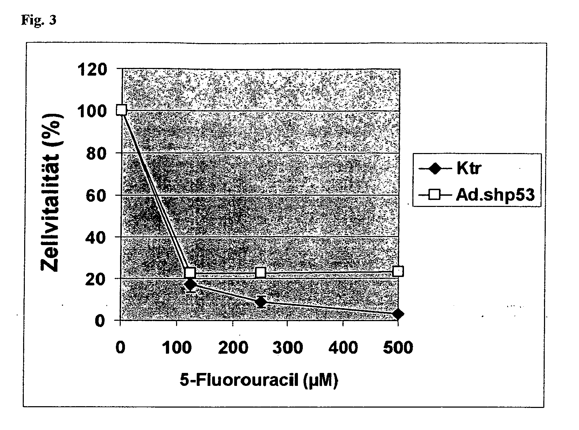

Die aufgetragenen Werte in Fig. 3 sind die Mittelwerte einer Dreifachbestimmung. Es wird deutlich, dass 5-Fluorouracil die Vitalität bei HCT116 Zellen herabsetzt. In Übereinstimmung mit Literaturdaten (Bunz et al., 1999, J. Clin. Investig. 104:263-269; Longley et al., 2002, Cancer Res. 162:2644-2649; Boyer et al. 2004, Clin Cancer Res. 2158-2167), zeigt sich, dass Ad.shRNA.p53 transduzierte HCT116 Zellen ohne p53 (□) eine geringere Empfindlichkeit gegenüber dem Chemotherapeutikum 5-Fluorouracil aufweisen als die unbehandelten HCT116 Zellen mit funktionellem p53 (♦).

Das Beispiel 2 zeigt somit, dass das erfindungsgemäße Verfahren besonders gut geeignet ist, in Multiwellplatten gelagerte Zellen für funktionelle Untersuchungen von Genen in zellulären Assays vorzuhalten.

### Beispiel 3: Vergleich der Lagerung von Zellen im Tiefkühlschrank mit und ohne Vakuum

HCT116 Zellen wurden wie in Beispiel 1 beschrieben kultiviert und 50$\mu$l einer Zellsuspension in Einfriermedium (95% Komplettmedium, 5% DMSO) in jedes Well einer 96-well Multititerplatte pipettiert. Die mit Deckel verschlossenen 96-well Multititerplatten wurden einzeln in einen Folienbeutel vakuumverschweißt. Als Kontrolle wurden 96-well Multiwellplatten ohne Vakuum in Folienbeutel eingefroren. Die eingeschweißten Platten und die Kontrollen wurden unter gleichen Bedingungen in einen -80°C Tiefkühlschrank gestellt und eingefroren gelagert. Dabei wurde darauf geachtet, dass die Multiwellplatten nicht gestapelt wurden, um ein zügiges Einfrieren zu gewährleisten.

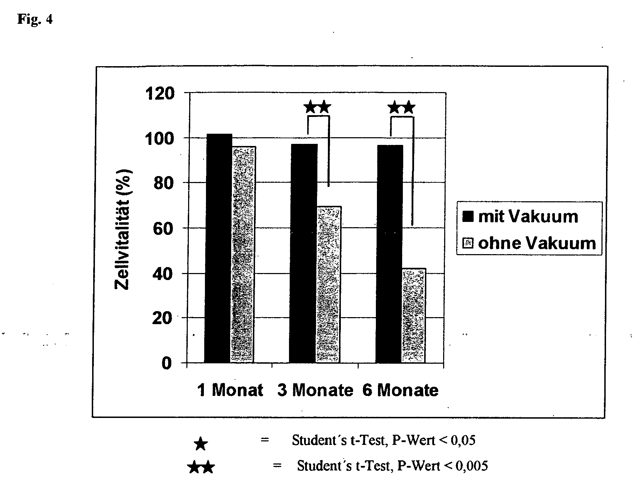

Die Zellen wurden unter diesen Bedingungen in 96-well Multiwellplatten für einen, drei und sechs Monate gelagert und ein WST-8 Reduktionsassay wie hierin beschrieben durchgeführt. Dazu wurde das Kulturmedium gegen ein mit WST-8 Reagenz versetztes Kulturmedium gemäß den Vorgaben des Herstellers ausgetauscht (CCK8-Assay, Dojindo Molecular Technologies, Inc.). Die Zellvitalität wurde nach 1 h durch die Messung der Absorption des mit WST-8 versetzten Kulturmediums bei 450nm bestimmt. In Fig. 4 ist die prozentuale Vitalität der Zellen im Vergleich zu nicht eingefrorenen Kontrollzellen (Vitalität 100%) dargestellt. Im Vakuum gelagerte Zellen konnten auch nach sechs Monaten mit einer Zellvitalität von über 90% wieder aufgetaut werden. Wurden die Zellen hingegen ohne Vakuum gelagert, so verringerte sich ihre Vitalität bereits nach 3 Monate auf 70% und nach 6 Monaten auf 42%.

Das Beispiel 3 zeigt somit, dass durch Lagerung unter Vakuum die Vitalität von rekombinanten Zellen, die bei -80°C gelagert werden, auch nach längeren Zeiträumen erhalten werden kann. Dadurch ist dieses Verfahren besonders gut geeignet, Zellen für zellbasierte Assays langfristig vorzuhalten.

### Beispiel 4: Zellvitalität in Abhängigkeit des Volumens des verwendeten Einfriermediums

HCT116 Zellen wurden wie in Beispiel 1 beschrieben kultiviert. Zusätzlich wurden A549 Zellen (ATCC: CCL-185) mit dem Kulturmedium Dulbecco's Modified Eagles Medium (DMEM) Komplettmedium (DMEM, 2mM L-Glutamin, 2mM Natrumpyruvate, 10% FCS) kultiviert. Nachdem eine ausreichende Menge an Zellen zur Verfügung stand, wurden beide Zelllinien wie im Folgenden beschrieben, eingefroren.

Für HCT116 Zellen wurde das Einfriermedium McCoy's, 10% FCS, 2mM L-Glutamat, 4% DMSO und für A549 Zellen das Einfriermedium DMEM, 2mM L-Glutamin, 2mM Natrumpyruvate, 10% FCS 5% Glyzerin verwendet. Abweichend von dem Vorgehen in Beispiel 1 wurden Zellsuspensionen in Einfriermedium von 50$\mu$l aus $1 \times 10^6$ Zellen pro Milliliter, 100$\mu$l aus $5 \times 10^5$ Zellen pro Milliliter, 200$\mu$l aus $2,5 \times 10^5$ Zellen pro Milliliter und 400$\mu$l aus $1,25 \times 10^5$ Zellen pro Milliliter in einzelne Kavitäten einer 48-Well gegeben, so dass jeweils $5 \times 10^4$ Zellen in jeder Kavität vorhanden war. Danach wurden die Zellen nach dem erfindungsgemäßen Verfahren wie in Beispiel 1 beschrieben eingefroren. Nach einer Woche wurden die Zellen aufgetaut und nach 30 Minuten wurde jeweils das Doppelte des Volumens des Einfriermediums an Kulturmedium zugegeben. Die Zellen wurden für 48h kultiviert und die Vitalität mit einem WST-8 Reduktionsassay wie hierin beschrieben bestimmt. Um die Vitalität der Zellen nach den Einfrierverfahren zu bestimmen, wurden parallel mit einer Verdünnungsreihe von Zellen in nicht eingefrorenen Kontrollgefäßen ein WST-8 Reduktionsassay durchgeführt. Anhand der Zellzahlen in der Verdünnungsreihe wurde eine Korrelationskurve erstellt und daraus die Zellvitalität der dem Einfrierverfahren unterworfenen Zellen bestimmt.

Das Beispiel 4 zeigt, dass die Vitalität von Zellen, die in Volumina des Einfriermediums von mehr als 50$\mu$l Einfriermedium eingefroren gelagert wurden, bis unter 75% (A549) bzw. 50% (HCT116) im Vergleich zu nicht eingefrorenen Kontrollzellen absinkt.- Demnach kann die Zellvitalität in dem Einfrierverfahren besonders gut erhalten werden, wenn die Zellen in einem ausreichend niedrigen Volumen des jeweiligen Einfriermediums eingefroren werden.

**Beispiel 5: Vergleich des Einfrierens in Tropfen mit dem konfluenten Einfrieren aus größeren Zellkulturgefäßen**

Wie in Beispiel 1 beschrieben, wurden HCT116 Zellen kultiviert und eine Zellsuspension mit $5 \times 10^5$ Zellen/ml in Einfriermedium hergestellt. Abweichend von Beispiel 1 wurden 1,5 m1 der Zellsuspension auf 10 cm Zellkulturschalen ausgebracht. Dabei wurde die Zellsuspension zum einen auf der gesamten Zellkuluroberfläche ausgebracht, so dass sich ein konfluenter Flüssigkeitstopfen bildete (konfluentes Einfrieren), zum anderen wurde die Zellsuspension in kleine voneinander getrennte Tropfen mit jeweils 100µl Volumen ausgebracht (Einfrieren in Tropfen). Die Zellen wurden wie für 96-well Multiwellplatten in Beispiel 1 beschrieben eingefroren und nach einer Woche Lagerung bei -80°C in einen Zellkulturinkubator (37°C, 5% $CO_2$, 90% Luftfeuchtigkeit) gestellt. Nach 30 min wurde 10 ml Kulturmedium zu den Zellen gegeben. 48h nach dem Auftauen in einem Zellinkubator wurden die Zellen trypsiniert und mit einer Zählkammer (Fa. Neubauer) im Phasenkontrast bei 100facher Vergrößerung die Gesamtzellzahl pro 10cm Zellkulturschale bestimmt. Zudem wurde die Zellvitalität in einem Farbausschlusstest mit dem Farbstoff Erythrosin B bestimmt. Die Zellen wurden 15 min bei Raumtemperatur in der Färbelösung (25mg Erythrosin B pro 1 ml PBS) inkubiert und die Anteil der gefärbten Zellen an der Gesamtzellzahl unter dem Mikroskop im Durchlicht bestimmt.

Das Beispiel 5 zeigt, dass die Vitalität der Zellen durch das Einfrieren in Tropfen gegenüber nicht eingefrorenen Kontrollzellen unverändert bleibt, wohingegen die Vitalität bei konfluentem Einfrieren auf 80% sinkt. Das Beispiel 5 zeigt weiterhin, dass beim Einfrieren in Tropfen 48h nach dem Auftauen eine Zunahme der Zellzahl um 57,35 % gegenüber der initial eingefrorenen Zellzahl erhalten wurde, wohingegen das konfluente Einfrieren zu einer Abnahme der Zellzahl um 23,45% führte.

Die in der vorangehenden Beschreibung, den Ansprüchen und den Zeichnungen offenbarten Merkmale der Erfindung können sowohl einzeln als auch in beliebiger Kombination zur Verwirklichung der Erfindung in ihren verschiedenen Ausführungsformen wesentlich sein.

**Patentansprüche**

1. Verfahren zum Einfrieren und Lagern von Zellen in einem Gefäß umfassend die Schritte

   a) Einfrieren der Zellen als Zellsuspension auf eine Lagertemperatur und
   b) Lagern bei dieser Temperatur,

   wobei das Lagern der Zellen unter gasdichtem Abschluss oder in einer inerten Atmosphäre erfolgt, **dadurch gekennzeichnet, dass** die Zellen rekombinante Zellen sind.

2. Verfahren nach Anspruch 1, **dadurch gekennzeichnet, dass** die rekombinanten Zellen eine heterologe Nukleinsäure enthalten.

3. Verfahren nach Anspruch 2, **dadurch gekennzeichnet, dass** die heterologe Nukleinsäure für ein heterologes Molekül codiert, wobei das heterologe Molekül ausschließlich ausgewählt ist aus der Gruppe, die Antisense-Moleküle, RNAi-vermittelnde Moleküle, Aptamere, Anticaline, Peptid-Aptamere und Antikörper umfasst.

4. Verfahren nach Anspruch 3, **dadurch gekennzeichnet, dass** das heterologe Molekül mit einem oder mehreren zellulären Molekülen in Wechselwirkung tritt.

5. Verfahren nach einem der Ansprüche 3 bis 4, **dadurch gekennzeichnet, dass** das heterologe Molekül einen Knock-Down eines oder mehrerer zellulärer Moleküle bedingt, bevorzugterweise nach Expression der heterologen Nukleinsäure.

6. Verfahren nach einem der Ansprüche 3 bis 5, **dadurch gekennzeichnet, dass** das heterologe Molekül ein RNAi-vermittelndes Molekül ist, wobei bevorzugterweise das RNAi-vermittelnde Molekül ausgewählt ist aus der Gruppe, die shRNAi, siRNAs, esiRNAs und miRNAs umfasst.

7. Verfahren nach einem der Ansprüche 1 bis 6, **dadurch gekennzeichnet, dass** die inerte Atmosphäre bedingt wird durch Verringerung des Sauerstoffpartialdruckes oder durch Begasung mit einem Schutzgas.

8. Verfahren nach einem der Ansprüche 1 bis 7, **dadurch gekennzeichnet, dass** die Verringerung des Sauerstoffpartialdruckes vor dem Einfrieren der Zellen erfolgt.

9. Verfahren nach einem der Ansprüche 1 bis 8, **dadurch gekennzeichnet, dass** die Zellen in einem oder mehreren Gefäßen enthalten sind.

10. Verfahren nach Anspruch 9, **dadurch gekennzeichnet, dass** das Gefäß ausgewählt ist aus der Gruppe, die Multiwellplatten, Zellkulturschalen und Zellkulturflaschen umfasst.

11. Verfahren nach Anspruch 10, **dadurch gekennzeichnet, dass** die Multiwellplatte ausgewählt ist aus der Gruppe, die 6-Well-Platten, 12-Well-Platten, 24-Well-Platten, 48-Well-Platten, 96-Well-Platten, 384-Well-Platten und 1536-Well-Platten umfasst.

12. Verfahren nach einem der Ansprüche 8 bis 11, **dadurch gekennzeichnet, dass** der Sauerstoffpartialdruck in dem Gefäß auf etwa 52,5 mbar bis 0,21 mbar, bevorzugterweise auf etwa 26 mbar bis 0,21 mbar, bevorzugtererweise auf etwa 13 mbar bis 0,21 mbar vermindert wird.

13. Verfahren nach einem der Ansprüche 1 bis 12, **dadurch gekennzeichnet, dass** der gasdichte Abschluss durch Einschweißen des Gefäßes in einem gasdichten Folienschlauch oder durch Aufbringen einer gasdichten Klebefolie erfolgt.

14. Verfahren nach einem der Ansprüche 1 bis 13, **dadurch gekennzeichnet, dass** nach gasdichtem Abschluss des Gefäßes ein Restvolumen an Luft in dem Gefäß verbleibt,

15. Verfahren nach Anspruch 14, **dadurch gekennzeichnet, dass** das Restvolumen bis zu dem 17,5-fachen, bevorzugterweise bis zu dem 15-fachen, bevorzugtererweise bis zu dem 7-fachen und am bevorzugtesten gleich dem Volumen der Zellsuspension in dem Gefäß beträgt.

16. Verfahren nach einem der Ansprüche 7 bis 15 ist, **dadurch gekennzeichnet, dass** das Schutzgas ausgewählt ist aus der Gruppe bestehend aus Stickstoff, Helium, Neon, Argon, Krypton und Xenon.

17. Verfahren nach einem der Ansprüche 1 bis 16, **dadurch gekennzeichnet, dass** die Zellen eukaryotische Zellen, bevorzugterweise tierische Zellen und bevorzugtererweise humane Zellen, insbesondere isolierte humane Zellen sind.

18. Verfahren nach Anspruch 17, **dadurch gekennzeichnet, dass** die Zellen ausgewählt sind aus der Gruppe umfassend Hela S3 (ATCC-Nr.:CCL-2.2); LoVo (ATCC-Nr.: CCL-229); L929 (ATCC-Nr.:CCL-1), HT-29 (ATCC-Nr.: HTB-38); Caco-2 (ATCC-Nr.: HTB-37); Hep G2 (ATCC-Nr.:HTB-8085); IMR-90 (ATCC-Nr.:CCL-184); PANC-1 (ATCC-Nr.:CRL-1469); DLD-1 (ATCC-Nr.:CCL-221); HCT-15 (ATCC-Nr.:CCL-225); Capan-1 (ATCC-Nr.:HTB-79); BxPC-3 (ATCC-Nr.:CRL-1687); MCF7 (ATCC-Nr.:HTB-22); SW480 (ATCC-Nr.:CCL-228); U-138 MG (ATCC-Nr.:HTB-16); HCT116 (ATCC-Nr.: CCL-247); und A549 (ATCC-Nr.: CCL-185).

19. Verfahren nach einem der Ansprüche 2 bis 18, **dadurch gekennzeichnet, dass** die heterologe Nukleinsäure durch einen oder mehrere Vektoren in die Zellen eingeführt ist, wobei die Vektoren bevorzugt aus der Gruppe ausgewählt sind umfassend DNA-basierte Plasmidvektoren, rekombinante Replikations-defiziente Adenoviren, Adeno-assoziierte Viren, Bacculoviren, Sendaiviren, Herpes simplex Typ 1 Viren, Lentiviren und Retroviren.

20. Verfahren nach einem der Ansprüche 1 bis 19, **dadurch gekennzeichnet, dass** das Lagern bei einer Temperatur zwischen etwa - 105°C und -50 °C erfolgt, bevorzugterweise zwischen -65°C und -95°C und bevorzugtererweise zwischen etwa -75°C und -85°C.

21. Verfahren nach einem der Ansprüche 1 bis 20, **dadurch gekennzeichnet, dass** das Einfrieren durch Kontakt wenigstens einer Fläche des Gefäßes mit einem Material mit geeigneter Wärmeleitfähigkeit erreicht wird, wobei das Material auf eine geeignete Temperatur vorgekühlt ist.

22. Verfahren nach Anspruch 21, **dadurch gekennzeichnet, dass** das Material ein Metall ist.

23. Verfahren nach Anspruch 21 oder 22, **dadurch gekennzeichnet, dass** die Temperatur, auf die das Material vorgekühlt ist, etwa zwischen -90°C und -50 °C und bevorzugtererweise zwischen etwa -85°C und -65 °C beträgt.

24. Verfahren nach einem der Ansprüche 1 bis 23, **dadurch gekennzeichnet, dass** die Zellen ohne Verwendung von flüssigem Stickstoff gelagert werden.

25. Verfahren nach einem der Ansprüche 2 bis 24, **dadurch gekennzeichnet, dass** die rekombinanten Zellen erhältlich sind durch die folgenden Schritte:

i) Einführen der heterologen Nukleinsäure und
ii) Herbeiführen des Knock-Downs.

26. Verfahren nach Anspruch 25, **dadurch gekennzeichnet, dass** das Verfahren weiter den **Schritt umfasst:**

iii) Überführen der Zellen in ein Einfriermedium und optional
iv) Überführen der Zellen in ein Gefäß wie in einem der vorhergehenden Ansprüche definiert

27. Verfahren nach Anspruch 25 **dadurch gekennzeichnet, dass** das Einfrieren der heterologen Nukleinsäure und/ oder das Herbeiführen des Knock-Downs in Kulturmedium erfolgt und die Zellen direkt in Kulturmedium eingefroren werden.

28. Verfahren nach einem der Ansprüche 1 bis 27, **dadurch gekennzeichnet, dass** die Zellen eine Vielzahl von Zellen umfassen und sich die Zellen in der Art der eingeführten heterologen Nukleinsäure unterscheiden.

29. Verfahren nach einem der Ansprüche 1 bis 28, **dadurch gekennzeichnet, dass** die Zellen eine Vielzahl von Zellen umfassen und sich die Zellen in der Art des Knock-Downs unterscheiden.

30. Eingefrorene Zellen, herstellbar nach einem Verfahren nach einem der Ansprüche 1 bis 29, **dadurch gekennzeichnet, dass** durch die heterologe Nukleinsäure eine transiente Veränderung der Zellen erfolgt ist, wobei die transiente Veränderung der Zellen unter Beibehaltung der Zellvitalität stabilisiert ist.

31. Eingefrorene Zellen, herstellbar nach einem Verfahren nach einem der Ansprüche 1 bis 29, **dadurch gekennzeichnet, dass** durch die heterologe Nukleinsäure eine stabile Veränderung der Zellen erfolgt ist, wobei die stabile Veränderung der Zellen unter Beibehaltung der Zellvitalität erfolgt ist.

32. Eingefrorene Zellen nach Anspruch 30 oder 31, **dadurch gekennzeichnet, dass** die Zellvitalität für einen längeren Zeitraum, insbesondere bei Lagerung in einem Tiefkühlschrank, gegeben ist.

33. Zellbibliothek umfassend eingefrorene Zellen nach Anspruch 30 bis 32, **dadurch gekennzeichnet, dass** die Zellbibliothek aus einer Vielzahl von Zellpopulationen besteht, wobei eine jede Zellpopulationen der Zellbibliothek mit einer Art oder Spezies einer heterologen Nukleinsäure transfiziert, oder mit einem DNA-Vektor, der zumindest eine Art oder Spezies einer heterologen Nukleinsäure exprimiert, transduziert oder infiziert ist, wobei die heterologe Nukleinsäure verschieden ist von einer oder mehreren heterologen Nukleinsäuren, mit denen eine, mehrere, oder alle anderen Zellpopulationen der Zellbibliothek transfiziert, transduziert oder infiziert ist.

34. Verwendung von eingefrorenen Zellen nach Anspruch 30 oder 32 oder einer Zellbibliothek nach Anspruch 33 in einem zellbasierten Testsystem, bevorzugterweise in einem Hochdurchsatzscreening (HTS).

35. Verwendung von eingefrorenen Zellen nach Anspruch 30 oder 32 oder einer Zellbibliothek nach Anspruch 33, wobei die Zellen direkt nach dem Auftauen in Einfriermedium in dem Gefäß ohne Passagieren verwendet werden, insbesondere in einem zellbasierten Testsystem verwendet werden.

Fig. 1

| MOI: | 0 | 2 | 8 | 0 | 2 | 8 | 0 | 2 | 8 |
|------|---|---|---|---|---|---|---|---|---|

| normal kultiviert | 24 h nach Auftauen | 48 h nach Auftauen |
|---|---|---|

**Fig. 2**

A

**HCT116 Zellen normal kultiviert**

B

**HCT116 Zellen nach 24h nach Auftauen
von einer 96-well Multititerplatte**

**Mit Ad.shRNA.p53 infizierte HCT116 Zellen 24h nach Auftauen von einer 96-well Multititerplatte**

C

Fig. 3

Fig. 4

★ = Student´s t-Test, P-Wert < 0,05

★★ = Student´s t-Test, P-Wert < 0,005

**Fig. 5**

Zelllinie: HCT116

Zelllinie: A549

★ = Student's t-Test, P-Wert < 0,05
★★ = Student's t-Test, P-Wert < 0,005

Fig. 6

Fig. 7

**Europäisches Patentamt**

# EUROPÄISCHER RECHERCHENBERICHT

Nummer der Anmeldung

EP 06 01 2752

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| D,E | WO 2006/072335 A (CCS CELL CULTURE SERVICE GMBH [DE]; LOA ALEXANDER [DE]) 13. Juli 2006 (2006-07-13) * das ganze Dokument * * insbesondere Seite 8, Zeile 25 - Seite 9, Zeile 8 und Beispiel 2 * ----- | 1-35 | INV. A01N1/02 G01N1/42 |
| Y | KUNAPULI PRIYA ET AL: "APPLICATION OF DIVISION ARREST TECHNOLOGY TO CELL-BASED HTS: COMPARISON WITH FROZEN AND FRESH CELLS" ASSAY AND DRUG DEVELOPMENT TECHNOLOGIES, MARY ANN LIEBERT, NEW YORK, NY, US, Bd. 3, Nr. 1, Februar 2005 (2005-02), Seiten 17-26, XP008069764 ISSN: 1540-658X * Seite 17, die Zusammenfassung * * Seite 17, Absatz 1 - Seite 18, rechte Spalte, Absatz 3 * * Seite 25, linke Spalte, Absatz 3 - Seite 25, rechte Spalte, Absatz 1 * ----- | 1-35 | |
| Y | WO 02/101018 A (HUTCHINSON FRED CANCER RES [US]; ROTH MARK B [US]; PADILLA PAMELA [US]) 19. Dezember 2002 (2002-12-19) * Seite 1, Zeile 10 - Zeile 17 * * Seite 2, Zeile 25 - Seite 5, Zeile 26 * * Seite 10, Zeile 30 - Seite 12, Zeile 30 * * Seite 14, Zeile 23 - Seite 15, Zeile 9 * * Seite 20, Zeile 9 - Zeile 15 * ----- -/-- | 1-35 | RECHERCHIERTE SACHGEBIETE (IPC) A01N |

Der vorliegende Recherchenbericht wurde für alle Patentansprüche erstellt

| Recherchenort | Abschlußdatum der Recherche | Prüfer |
|---|---|---|
| Den Haag | 22. Mai 2007 | Muellners, Wilhelm |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**Europäisches Patentamt**

# EUROPÄISCHER RECHERCHENBERICHT

**Nummer der Anmeldung**

EP 06 01 2752

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | US 2003/054342 A1 (STAR ROBERT A [US] ET AL) 20. März 2003 (2003-03-20) <br> * Absatz [0006] * <br> * Absatz [0130] * <br> * Absatz [0161] - Absatz [0168] * <br> * Absatz [0242] - Absatz [0248] * <br> * Ansprüche 1-6,23 * <br> ----- | 1-35 | |
| A | MAZUR PETER ET AL: "The enhancement of the ability of mouse sperm to survive freezing and thawing by the use of high concentrations of glycerol and the presence of an Escherichia coli membrane preparation (Oxyrase) to lower the oxygen concentration" <br> CRYOBIOLOGY, <br> Bd. 40, Nr. 3, Mai 2000 (2000-05), Seiten 187-209, XP002434012 <br> ISSN: 0011-2240 <br> * Seite 187, die Zusammenfassung * <br> * Seite 189, rechte Spalte, Absatz 2 - Seite 190, rechte Spalte, Absatz 1 * <br> * Seite 205, letzter Absatz - Seite 207 * <br> ----- | 1-35 | **RECHERCHIERTE SACHGEBIETE (IPC)** |
| A | TADA NORIHIRO ET AL: "Vitrification of transgenic mouse embryos: Effects of cryopreservation on the structure and expression of transgene" <br> JOURNAL OF REPRODUCTION AND DEVELOPMENT, <br> Bd. 40, Nr. 2, 1994, Seiten 71-78, XP008078628 <br> ISSN: 0916-8818 <br> * Seite 71, die Zusammenfassung * <br> * Seite 72, Absatz 2 * <br> * Seite 75, Absatz 2 - Seite 76 * <br> ----- <br> -/-- | 1-35 | |

Der vorliegende Recherchenbericht wurde für alle Patentansprüche erstellt

| Recherchenort | Abschlußdatum der Recherche | Prüfer |
|---|---|---|
| Den Haag | 22. Mai 2007 | Muellners, Wilhelm |

EPO FORM 1503 03.82 (P04C03)

**Europäisches Patentamt**

## EUROPÄISCHER RECHERCHENBERICHT

Nummer der Anmeldung

EP 06 01 2752

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| D,A | BRUMMELKAMP THIJN R ET AL: "A system for stable expression of short interfering RNAs in mammalian cells" SCIENCE (WASHINGTON D C), Bd. 296, Nr. 5567, 19. April 2002 (2002-04-19), Seiten 550-553, XP002434013 ISSN: 0036-8075 * Zusammenfassung *  ----- | | |
| | | | **RECHERCHIERTE SACHGEBIETE (IPC)** |

Der vorliegende Recherchenbericht wurde für alle Patentansprüche erstellt

| Recherchenort | Abschlußdatum der Recherche | Prüfer |
|---|---|---|
| Den Haag | 22. Mai 2007 | Muellners, Wilhelm |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

.....................................................................................

& : Mitglied der gleichen Patentfamilie, übereinstimmendes Dokument

**ANHANG ZUM EUROPÄISCHEN RECHERCHENBERICHT
ÜBER DIE EUROPÄISCHE PATENTANMELDUNG NR.**

EP 06 01 2752

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

22-05-2007

| Im Recherchenbericht angeführtes Patentdokument | Datum der Veröffentlichung | Mitglied(er) der Patentfamilie | Datum der Veröffentlichung |
|---|---|---|---|
| WO 2006072335 A | 13-07-2006 | DE 102004061947 A1 | 06-07-2006 |
| WO 02101018 A | 19-12-2002 | AU 2002312458 A1 | 23-12-2002 |
| US 2003054342 A1 | 20-03-2003 | KEINE | |

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2005013170 W
- DE 19742706
- EP 0533838 A
- WO 9808856 A
- US 5849902 A
- US 5989912 A
- WO 0044895 A
- WO 0175164 A

**In der Beschreibung aufgeführte Nicht-Patentliteratur**

- **RUBIN H et al.** *Proc. Natl Acad. Sci. USA,* 1990, vol. 87 (1), 482-486
- **YAO A ; RUBIN H.** *Proc. Natl Acad. Sci. USA,* vol. 89 (16), 7486-7490
- **SAUNDERS et al.** *Proc. Natl Acad. Sci. USA,* 2000, vol. 87 (1), 303-308
- **GRIGORAOVA M et al.** *Cytogenet Genome Res.,* 2004, vol. 104 (1-4), 333-40
- **KRAUSE A.W. et al.** *J. Histochem. Cytochem.,* 1984, vol. 32 (10), 1084-1090
- **MAEKAWA Y et al.** *Thromb. Res.,* 2003, vol. 109 (5-6), 307-314
- **SASAKI M. et al.** *Biotechnol. Appl. Biochem.,* 2005, vol. 42 (Pt 2), 183-188
- **SASNOOR L.M. et al.** *Transfusion,* 2005, vol. 45 (4), 622-633
- **BIRKELAND S.M.** *Cryobiology,* 1976, vol. 13 (4), 442-447
- **LORETZ L.J. et al.** *Xenobiotica,* 1989, vol. 19 (5), 489-498
- **MERTEN O.W. et al.** *Biologicals,* 1995, vol. 23 (2), 185-9
- **STACHECKI J.J. et al.** *Cryobiology,* 1998, vol. 37 (4), 346-54
- **GRAHAM F.L. ; VAN DER EB A.J.** *Virology,* 1973, vol. 52 (2), 456-467
- **PAGANO J.S. et al.** *J. Virol.,* 1967, vol. 1 (5), 891-897
- **FELGNER P.L. et al.** *Proc. Natl. Acad. Sci. USA,* 1987, vol. 84 (21), 7413-7417
- **HAMER D.H. ; LEDER P.** *Nature,* 1979, vol. 281 (5726), 35-40
- **NEUMANN E. et al.** *EMBO J.,* 1982, vol. 1 (7), 841-845
- **DOHERTY ; DOUDNA.** Ribozyme structures and mechanisms. *Annu Rev Biophys Biomol Struct,* 2001, vol. 30, 457-75
- **LEWIN ; HAUSWIRTH.** Ribozyme gene therapy: applications for molecular medicine. *Trends Mol Med,* 2001, vol. 7, 221-8
- **GOSSEN M. ; BUJARD H.** *Proc Natl Acad Sci U S A,* 1992, vol. 89 (12), 5547-51
- **NO D. et al.** *Proc. Natl. Acad. Sci. USA,* 1996, vol. 93, 3346-3351
- **DALE E.C. ; OW D.W.** *Proc. Natl. Acad. Sci.,* 1991, vol. 88, 10558-10562
- **WHELAN J. ; MILLER N.** *J Steroid Biochem Mol Biol.,* 1996, vol. 58 (1), 3-12
- **YEN L. et al.** *Nature,* 2004, vol. 431, 471-476
- **LEE R.C. et al.** *Cell,* 1993, vol. 75 (5), 843-854
- **BRUMMELKAMP T.R. et al.** *Science,* 2002, vol. 296 (5567), 550-553
- **BRADFORD M.M.** *Anal. Biochem.,* 1976, vol. 7 (72), 248-254
- **BUNZ et al.** *J. Clin. Investig.,* 1999, vol. 104, 263-269
- **LONGLEY et al.** *Cancer Res.,* 2002, vol. 162, 2644-2649
- **BOYER et al.** *Clin Cancer Res.,* 2004, 2158-2167